(19) Europäisches Patentamt
European Patent Office
Office européen des brevets

(11) EP 3 458 549 B1

(12) EUROPÄISCHE PATENTSCHRIFT

(45) Veröffentlichungstag und Bekanntmachung des Hinweises auf die Patenterteilung:
**22.07.2020 Patentblatt 2020/30**

(21) Anmeldenummer: **17722826.9**

(22) Anmeldetag: **16.05.2017**

(51) Int Cl.:
***C09K 19/60*** *(2006.01)* ***C09K 19/54*** *(2006.01)*
***C09K 19/34*** *(2006.01)* ***C09K 19/30*** *(2006.01)*

(86) Internationale Anmeldenummer:
**PCT/EP2017/061656**

(87) Internationale Veröffentlichungsnummer:
**WO 2017/198637 (23.11.2017 Gazette 2017/47)**

(54) **FLUESSIGKRISTALLINES MATERIAL**

LIQUID-CRYSTAL MATERIAL

MATÉRIAU À CRISTAUX LIQUIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2016 EP 16170725**

(43) Veröffentlichungstag der Anmeldung:
**27.03.2019 Patentblatt 2019/13**

(73) Patentinhaber: **Merck Patent GmbH**
**64293 Darmstadt (DE)**

(72) Erfinder:
- **JUNGE, Michael**
  **64319 PFUNGSTADT (DE)**
- **PATWAL, Ursula**
  **64354 REINHEIM (DE)**
- **PTAK-AGGUEL, Ewa Dominica**
  **64331 Weiterstadt (DE)**

(56) Entgegenhaltungen:
**EP-A2- 2 722 381**
**WO-A1-2014/090373**
**WO-A1-2015/090506**
**WO-A1-2015/154848**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 458 549 B1

**Beschreibung**

Die vorliegende Anmeldung betrifft ein flüssigkristallines Material, welches einen Farbstoff und eine Verbindung enthaltend eine N-Oxid-Gruppe enthält. Das flüssigkristalline Material eignet sich aufgrund seiner hohen Licht- und Hitzestabilität hervorragend zur Verwendung in optischen Schaltvorrichtungen zur Regulierung des Durchtritts von Sonnenlicht. Diese können unter anderem in Fenstern von Gebäuden oder in lichtdurchlässigen Dächern, insbesondere in Fahrzeugen, eingesetzt werden.

Derartige Schaltvorrichtungen sind unter dem Überbegriff schaltbare Fenster (switchable windows, smart windows) bekannt. Diese sind im Überblick beispielsweise in B. Jelle et al., Solar Energy Materials & Solar Cells 2012, S. 1 - 28, beschrieben. Vom Begriff schaltbares Fenster sind dabei auch schaltbare lichtdurchlässige Dächer, zum Beispiel Dachfenster oder Autodächer, umfasst.

Eine Variante dieser schaltbaren Fenster verwendet flüssigkristalline Materialien, welche Farbstoffe enthalten. Diese Farbstoffe werden durch die Moleküle des flüssigkristallinen Materials in definierter, beeinflussbarer Weise im Raum ausgerichtet, so dass sie in einem Schaltzustand mehr, in einem anderen Schaltzustand weniger auftreffendes Licht absorbieren.

Beispiele für schaltbare Fenster enthaltend flüssigkristalline Materialien sind unter anderem in WO 2009/141295 und WO 2015/090506 A1 beschrieben.

Es besteht weiterhin Bedarf an neuen flüssigkristallinen Materialien für die oben genannten Anwendungen. Dabei hat sich herausgestellt, dass die optischen Schaltvorrichtungen zur Regulierung des Durchtritts von Sonnenlicht einer hohen Belastung durch Hitze und Sonnenlicht ausgesetzt sind, welche zu einer Farbänderung oder sonstigen Funktionsstörung der Schicht aus flüssigkristallinem Material, die in der Schaltvorrichtung enthalten ist, führen können.

Es besteht daher hohes Interesse an neuen flüssigkristallinen Materialien, welche eine besonders große Stabilität gegenüber hohen Temperaturen und starkem Sonnenlichteinfall aufweisen.

Ein möglicher Ansatz, um diese Eigenschaften zu erreichen, ist die Verwendung von möglichst stabilen Farbstoffen. Dieser Ansatz wurde in der Vergangenheit vielfach verfolgt, hat jedoch den Nachteil, dass die Farbstoffe eine Reihe von weiteren Eigenschaften wie gute Löslichkeit, hohen Anisotropiegrad und passende Absorptionswellenlänge aufweisen müssen. Die Optimierung dieser Eigenschaften zusammen mit hoher Licht-und Temperaturstabilität schränkt jedoch den Kreis der verwendbaren Verbindungen stark ein.

Daher besteht ein hohes Bedürfnis an alternativen Ansätzen, mit denen licht- und temperaturstabile farbstoffhaltige flüssigkristalline Materialien erhalten werden können.

Überraschend wurde in diesem Zusammenhang gefunden, dass die Beifügung einer Verbindung enthaltend eine sterisch gehinderte N-Oxid-Gruppe zu farbstoffhaltigen flüssigkristallinen Materialien deren Licht- und Temperaturstabilität stark erhöht.

Gegenstand der Erfindung ist damit ein flüssigkristallines Material, dadurch gekennzeichnet, dass es einen Farbstoff und eine Verbindung (I) enthaltend eine sterisch gehinderte Gruppe der Formel (1-1-1), wie in Anspruch 1 und nachstehend definiert, enthält.

Die Gruppe der Formel (1-1-1) ist ein Radikal, wobei das ungepaarte Elektron am Sauerstoffatom durch einen Punkt gekennzeichnet ist.

Das erfindungsgemäße flüssigkristalline Material hat die überraschende Eigenschaft, hoch lichtstabil zu sein. Insbesondere zeigt es eine Farbdifferenz $\Delta E^*$ im Lab-Farbraum von weniger als 6.0, bevorzugt von weniger als 5.0, besonders bevorzugt von weniger als 4.0, ganz besonders bevorzugt von weniger als 3.0 nach Lichtbelastung in einem Suntest CPS+ bei 70°C Oberflächentemperatur der Proben.

Die Parameter des Lab-Farbraums und die Farbdifferenz $\Delta E^*$ sind dabei definiert wie in den Ausführungsbeispielen angegeben.

Weiterhin zeigt das erfindungsgemäße Material eine gute Hitzestabilität, insbesondere eine geringe Farbdifferenz $\Delta E^*$ im Lab-Farbraum von weniger als 6.0, bevorzugt von weniger als 5.0, nach Hitzebelastung bei 100°C für 7 Tage.

Es gelten im Rahmen der vorliegenden Anmeldung die folgenden Definitionen:

Unter der Bezeichnung "flüssigkristallines Material" wird ein Material verstanden, das in mindestens einem Temperaturbereich flüssigkristalline Eigenschaften, insbesondere nematisch flüssigkristalline Eigenschaften, aufweist.

Unter einer Alkylgruppe, einer Alkenylgruppe bzw. einer Alkinylgruppe werden insbesondere die Reste Methyl, Ethyl, n-Propyl, i-Propyl, n-Butyl, i-Butyl, s-Butyl, t-Butyl, 2-Methylbutyl, n-Pentyl, s-Pentyl, Cyclopentyl, neo-Pentyl, n-Hexyl, Cyclohexyl, neo-Hexyl, n-Heptyl, Cycloheptyl, n-Octyl, Cyclooctyl, 2-Ethylhexyl, Trifluormethyl, Pentafluorethyl, 2,2,2-Trifluorethyl, Ethenyl, Propenyl, Butenyl, Pentenyl, Cyclopentenyl, Hexenyl, Cyclohexenyl, Heptenyl, Cycloheptenyl, Octenyl, Cyclooctenyl, Ethinyl, Propinyl, Butinyl, Pentinyl, Hexinyl oder Octinyl verstanden.

Unter einer Alkoxy- oder Thioalkylgruppe werden insbesondere Methoxy, Trifluormethoxy, Ethoxy, n-Propoxy, i-Propoxy, n-Butoxy, i-Butoxy, s-Butoxy, t-Butoxy, n-Pentoxy, s-Pentoxy, 2-Methylbutoxy, n-Hexoxy, Cyclohexyloxy, n-Heptoxy, Cycloheptyloxy, n-Octyloxy, Cyclooctyloxy, 2-Ethylhexyloxy, Pentafluorethoxy, 2,2,2-Trifluorethoxy, Methylthio, Ethylthio, n-Propylthio, i-Propylthio, n-Butylthio, i-Butylthio, s-Butylthio, t-Butylthio, n-Pentylthio, s-Pentylthio, n-Hexylthio, Cyclohexylthio, n-Heptylthio, Cycloheptylthio, n-Octylthio, Cyclooctylthio, 2-Ethylhexylthio, Trifluormethylthio, Pentafluorethylthio, 2,2,2-Trifluorethylthio, Ethenylthio, Propenylthio, Butenylthio, Pentenylthio, Cyclopentenylthio, Hexenylthio, Cyclohexenylthio, Heptenylthio, Cycloheptenylthio, Octenylthio, Cyclooctenylthio, Ethinylthio, Propinylthio, Butinylthio, Pentinylthio, Hexinylthio, Heptinylthio oder Octinylthio verstanden.

Unter einer Arylgruppe bzw. Heteroarylgruppe werden insbesondere Benzol, Naphthalin, Anthracen, Phenanthren, Pyren, Dihydropyren, Chrysen, Perylen, Triphenylen, Fluoranthen, Benzanthracen, Benzphenanthren, Tetracen, Pentacen, Benzpyren, Furan, Benzofuran, Isobenzofuran, Dibenzofuran, Thiophen, Benzothiophen, Isobenzothiophen, Dibenzothiophen, Pyrrol, Indol, Isoindol, Carbazol, Pyridin, Chinolin, Isochinolin, Acridin, Phenanthridin, Benzo-5,6-chinolin, Benzo-6,7-chinolin, Benzo-7,8-chinolin, Phenothiazin, Phenoxazin, Pyrazol, Indazol, Imidazol, Benzimidazol, Naphthimidazol, Phenanthrimidazol, Pyridimidazol, Pyrazinimidazol, Chinoxalinimidazol, Oxazol, Benzoxazol, Naphthoxazol, Anthroxazol, Phenanthroxazol, Isoxazol, 1,2-Thiazol, 1,3-Thiazol, Benzothiazol, Pyridazin, Benzopyridazin, Pyrimidin, Benzpyrimidin, Chinoxalin, Pyrazin, Phenazin, Naphthyridin, Azacarbazol, Benzocarbolin, Phenanthrolin, 1,2,3-Triazol, 1,2,4-Triazol, Benzotriazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 1,3,5-Triazin, 1,2,4-Triazin, 1,2,3-Triazin, Tetrazol, 1,2,4,5-Tetrazin, 1,2,3,4-Tetrazin, 1,2,3,5-Tetrazin, Purin, Pteridin, Indolizin, Benzothiadiazol, Biphenyl, Terphenyl, Quaterphenyl, Fluoren, Spirobifluoren, Dihydrophenanthren, Dihydropyren, Tetrahydropyren, Indenofluoren, Truxen, Isotruxen, Spirotruxen, Spiroisotruxen, und Indenocarbazol verstanden.

Ringe

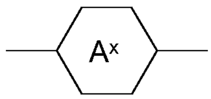

,

beispielsweise

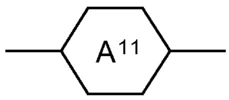

,

werden in der vorliegenden Anmeldung zur Verbesserung der Lesbarkeit im Fließtext als "$A^x$", beispielsweise "$A^{11}$", abgekürzt.

Unter der Bezeichnung

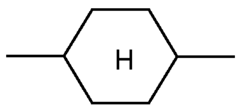

wird in der vorliegenden Anmeldung 1,4-Cyclohexylen verstanden.

Unter Sonnenlicht wird Licht verstanden, welches direkt oder indirekt, beispielsweise über Spiegelung, von der Sonne ausgeht. Bevorzugt wird unter Sonnenlicht Licht im VIS, UV-A und NIR-Bereich, insbesondere Licht einer Wellenlänge von 320 nm bis 2000 nm verstanden. Bevorzugt wird darunter Licht im VIS-Bereich verstanden. Unter Licht im VIS-Bereich wird dabei Licht einer Wellenlänge von 380 nm bis 780 nm Wellenlänge verstanden.

Unter der Bezeichnung sterisch gehindert in Bezug auf die Gruppe der Formel (1-1-1) wird im Rahmen der vorliegenden Erfindung verstanden, dass in der Nähe der Einheit N-O Gruppen vorliegen, welche die Einheit N-O räumlich abschirmen. Dies sind quaternäre C-Atome, die direkt an das Stickstoffatom der Einheit N-O gebunden sind. An beide Bindungen des Stickstoffatoms der Einheit N-O ist ein quaternäres Kohlenstoffatom gebunden. Das quaternäre Kohlenstoffatom ist dabei ein Kohlenstoffatom, das drei Alkylgruppen mit je 1 bis 12 C-Atomen trägt.

Besonders bevorzugt enthält die Verbindung (I) genau eine, genau zwei, genau drei oder genau vier Gruppen der Formel (1). Ganz besonders bevorzugt enthält sie genau zwei Gruppen der Formel (1). In dem Fall, dass die Verbindung (I) eine Mehrzahl von Gruppen der Formel (1) enthält, ist es bevorzugt, dass die Gruppen durch eine oder mehrere Abstandsgruppen voneinander getrennt sind.

Erfindungsgemäß enthält die Verbindung (I) eine Gruppe der Formel (1-1-1)

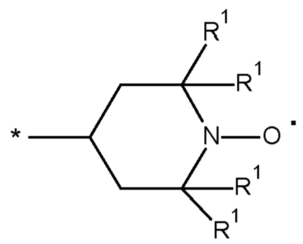

Formel (1-1-1),

wobei die mit * markierte Bindung die Bindung ist, mit der die Gruppe mit dem übrigen Teil der Verbindung verbunden ist, und

wobei $R^1$ wie oben definiert ist und bevorzugt gleich Methyl ist.

Bevorzugt entspricht die Verbindung (I) einer Formel (I)

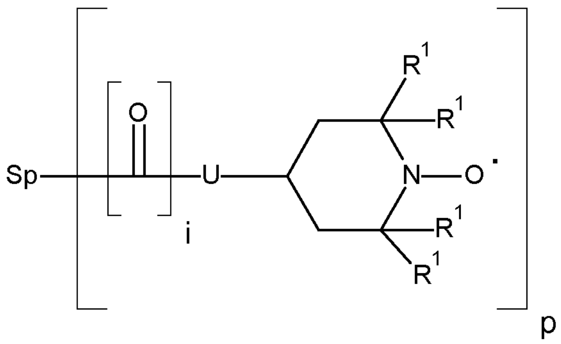

Formel (I),

wobei für die auftretenden Variablen gilt:

U ist bei jedem Auftreten gleich oder verschieden gewählt aus $-CH_2-$, -O-, -S- und -NH-;

Sp ist gewählt aus Alkylengruppen mit 2 bis 10 C-Atomen, die jeweils mit einem oder mehreren Resten $R^4$ substituiert sein können, Alkenylengruppen mit 2 bis 10 C-Atomen, die jeweils mit einem oder mehreren Resten $R^4$ substituiert sein können, Alkinylengruppen mit 2 bis 10 C-Atomen, die jeweils mit einem oder mehreren Resten $R^4$ substituiert sein können, Arylgruppen mit 6 bis 40 aromatischen Ringatomen, die jeweils mit einem oder mehreren Resten $R^4$ substituiert sein können, und Heteroarylgruppen mit 5 bis 40 aromatischen Ringatomen, die jeweils mit einem oder mehreren Resten $R^4$ substituiert sein können;

$R^1$ ist definiert wie oben;

$R^4$ ist bei jedem Auftreten gleich oder verschieden gewählt aus H, D, F, CN, Alkyl- oder Alkoxygruppen mit 1 bis 20 C-Atomen, Alkenyl- oder Alkinylgruppen mit 2 bis 20 C-Atomen, Arylgruppen mit 6 bis 40 aromatischen Ringatomen und Heteroarylgruppen mit 5 bis 40 aromatischen Ringatomen; wobei zwei oder mehr Reste $R^3$ miteinander verknüpft sein können und einen Ring bilden können; und wobei die genannten Alkyl-, Alkoxy-, Alkenyl- und Alkinylgruppen, Arylgruppen und Heteroarylgruppen mit F oder CN substituiert sein können;

i ist bei jedem Auftreten gleich oder verschieden 0 oder 1;

p ist gleich 2, 3 oder 4.

Bevorzugt ist $R^1$ in Formel (I) gleich Methyl. Weiterhin bevorzugt ist i gleich 1. Weiterhin bevorzugt ist p gleich 2. Nochmals weiterhin bevorzugt ist U gleich -O-. Nochmals weiterhin bevorzugt ist Sp gewählt aus Alkylengruppen mit 2 bis 10 C-Atomen.

Besonders bevorzugt entspricht die Verbindung (I) einer Formel (I-1)

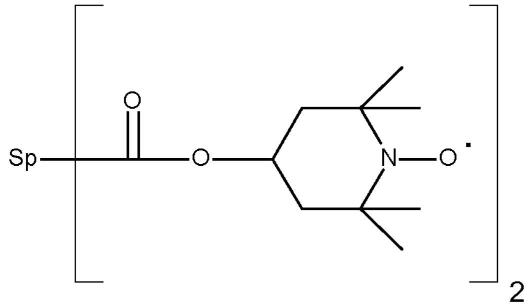

Formel (I-1),

wobei für die auftretenden Variablen gilt:

Sp ist gewählt aus Alkylengruppen mit 2 bis 10 C-Atomen, die jeweils mit einem oder mehreren Resten $R^4$ substituiert sein können, Alkenylengruppen mit 2 bis 10 C-Atomen, die jeweils mit einem oder mehreren Resten $R^4$ substituiert sein können, Alkinylengruppen mit 2 bis 10 C-Atomen, die jeweils mit einem oder mehreren Resten $R^4$ substituiert sein können, Arylgruppen mit 6 bis 40 aromatischen Ringatomen, die jeweils mit einem oder mehreren Resten $R^4$ substituiert sein können, und Heteroarylgruppen mit 5 bis 40 aromatischen Ringatomen, die jeweils mit einem oder mehreren Resten $R^4$ substituiert sein können;

$R^4$ ist definiert wie oben.

Besonders bevorzugt ist $R^4$ in Formel (I-1) gewählt aus Alkylengruppen mit 2 bis 10 C-Atomen.

Bevorzugte konkrete Verbindungen (I) sind in der folgenden Tabelle abgebildet:

| |
|---|
| 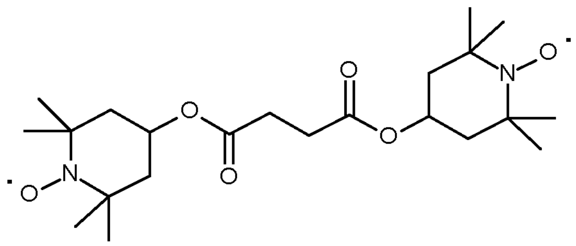 |
| (1-1) |
| 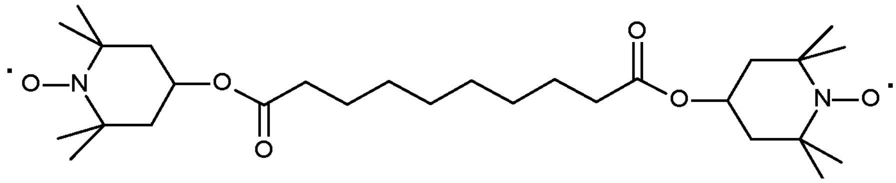 |
| (1-2) |
| 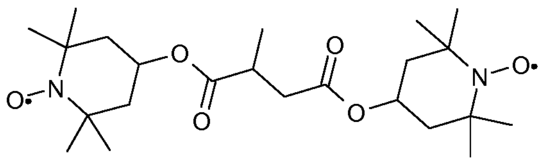 |
| (1-3) |

(fortgesetzt)

| |
|---|
| 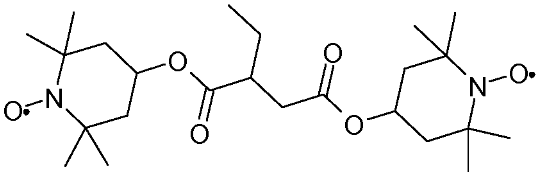 |
| (1-4) |
| 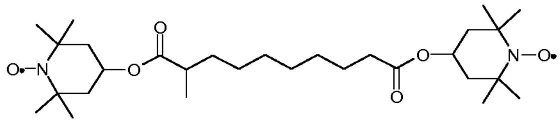 |
| (1-5) |
| 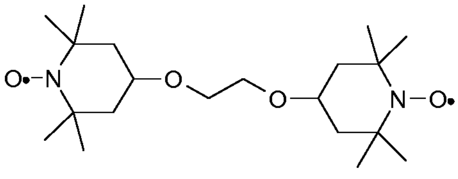 |
| (1-6) |
| 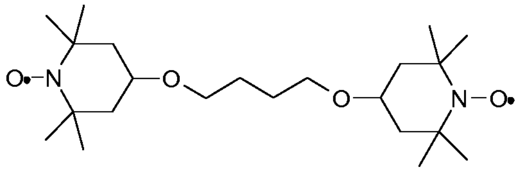 |
| (1-7) |
| 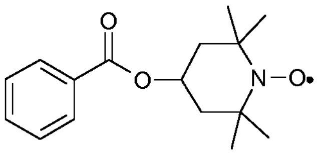 |
| (1-8) |
| 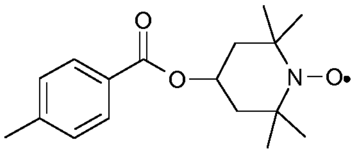 |
| (1-9) |
| 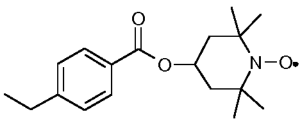 |
| (1-10) |
| 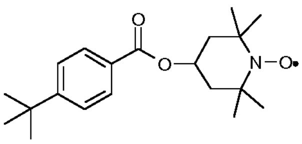 |

(fortgesetzt)

| (1-11) |
|---|
| 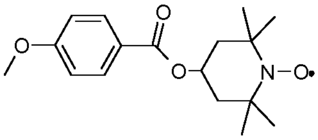 |
| (1-12) |
| 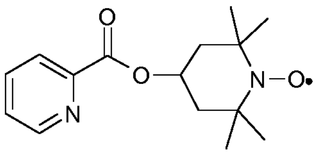 |
| (1-13) |
| 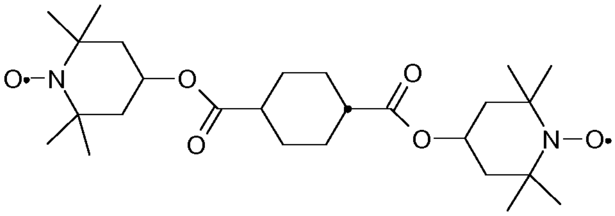 |
| (1-14) |
| 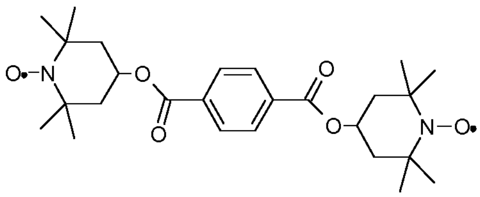 |
| (1-15) |
| 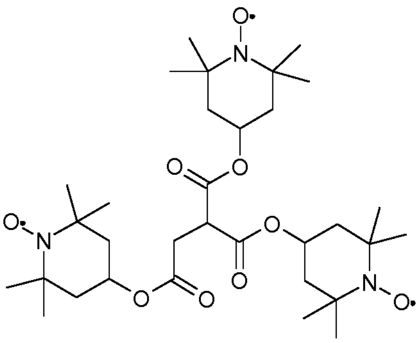 |
| (1-16) |

(fortgesetzt)

| |
|---|
| 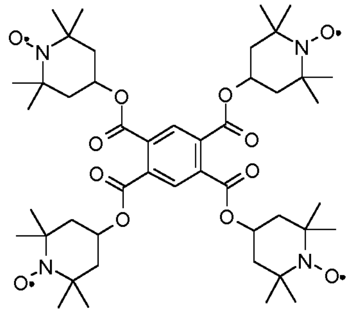 |
| (1-17) |

Bevorzugt ist die Verbindung (I) in einem Anteil von 0.01 Gew.-% bis 1 Gew.-% im flüssigkristallinen Material enthalten, besonders bevorzugt in einem Anteil von 0.02 Gew.-% bis 0.8 Gew.-%.

Das flüssigkristalline Material ist bevorzugt bei üblichen Umgebungstemperaturen nematisch flüssigkristallin. Besonders bevorzugt ist es in einer Spanne von +-20 °C, ganz besonders bevorzugt in einer Spanne von +-30 °C über- und unterhalb der üblichen Umgebungstemperaturen nematisch flüssigkristallin. Weiterhin bevorzugt hat das flüssigkristalline Material einen Klärpunkt, bevorzugt einen Phasenübergang von einem nematisch flüssigkristallinen Zustand zu einem isotropen Zustand, oberhalb von 80 °C, besonders bevorzugt oberhalb von 100 °C, ganz besonders bevorzugt oberhalb von 120 °C, und am stärksten bevorzugt oberhalb von 130 °C.

Das flüssigkristalline Material ist bevorzugt zu einem Anteil von mehr als 90 Gew.-% aus organischen Verbindungen zusammengesetzt, die eine stäbchenförmige Struktur haben. Bevorzugt enthält das flüssigkristalline Material mehr als 3 und weniger als 20 verschiedene der genannten organischen Verbindungen.

Verbindungen, welche als Bestandteile des flüssigkristallinen Materials verwendet werden können, sind dem Fachmann bekannt und können grundsätzlich beliebig gewählt werden. Es ist bevorzugt, dass das flüssigkristalline Material mindestens eine Verbindung enthält, welche Strukturelemente basierend auf 1,4-Phenylenen und 1,4-Cyclohexylenen aufweist. Besonders bevorzugt ist es, dass das flüssigkristalline Material mindestens eine Verbindung enthält, welche 2, 3 oder 4, besonders bevorzugt 3 oder 4 Strukturelemente basierend auf 1,4-Phenylenen und 1,4-Cyclohexylenen aufweist.

Bevorzugt enthält das flüssigkristalline Material eine oder mehrere mesogene Verbindungen, welche jeweils eine Gruppe ausgewählt aus -Cyc-, -Phe-, -Cyc-Cyc-, -Cyc-Phe-, -Phe-Cyc-, -Phe-Phe-, -Cyc-Z-Cyc-, -Cyc-Z-Phe-, -Phe-Z-Cyc- und -Phe-Z-Phe- enhalten, wobei

Cyc trans-1,4-Cyclohexylen bedeutet, worin auch eine oder mehrere nicht benachbarte $CH_2$-Gruppen durch -O- und/oder -S- ersetzt sein können und worin auch ein oder mehrere H-Atome durch F ersetzt sein können, Phe 1,3-Phenylen oder 1,4-Phenylen, bevorzugt 1,4-Phenylen, bedeutet, worin auch eine oder zwei nicht benachbarte CH-Gruppen durch N ersetzt sein können und worin auch ein oder mehrere H-Atome durch L ersetzt sein können,

Z $-CH_2-$, $-CF_2-$, -CO-, -O-, -NH-, -NH-(CO)-, $-CH_2CH_2-$, -CH=CH-, $-CF_2O-$, $-OCF_2-$, $-CH_2O-$, $-OCH_2-$, -COO-, -OCO-, $-C_2F_4-$ oder -CF=CF- bedeutet, und

L bei jedem Auftreten gleich oder verschieden F, Cl, CN oder geradkettiges oder verzweigtes, jeweils optional fluoriertes, Alkyl, Alkoxy, Arylalkyl oder Alkylarylalkyl mit 1 bis 5 C-Atomen, worin auch eine oder mehrere nicht benachbarte $CH_2$-Gruppen durch -O- und/oder -S- ersetzt sein können, bedeutet.

Weiterhin ist es bevorzugt, dass das flüssigkristalline Material mindestens eine Verbindung enthält, welche mindestens eine Gruppe gewählt aus den folgenden enthält:

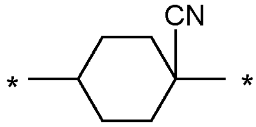 , 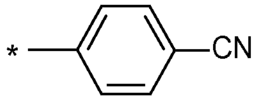 , 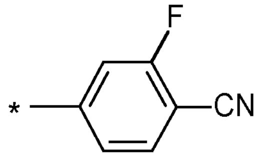 ,

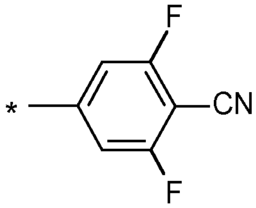, 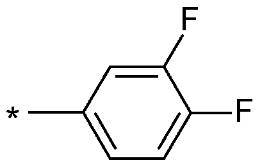, 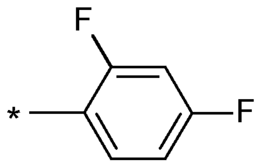,

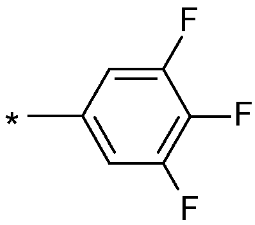, 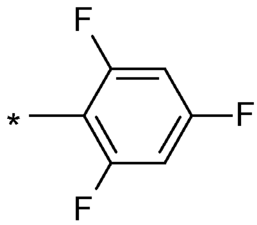,

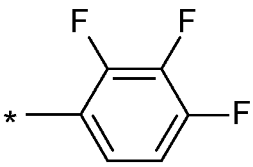, 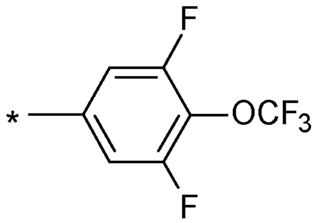, 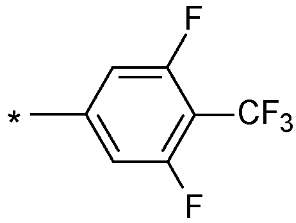,

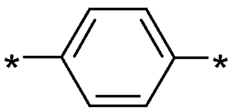, 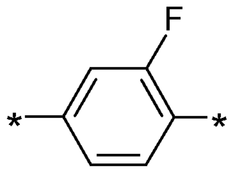, 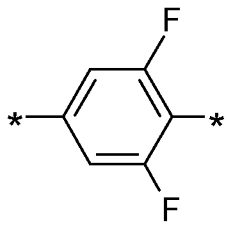,

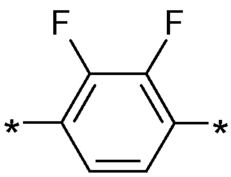, 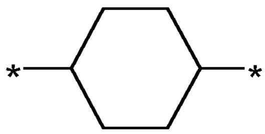, 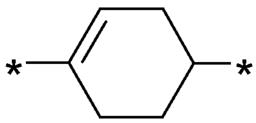,

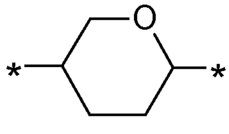, 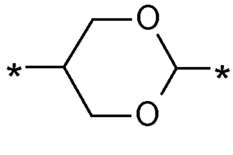

wobei die mit * markierte Bindung die Bindung ist, mit der die Gruppe mit dem übrigen Teil der Verbindung verbunden ist.

Es ist besonders bevorzugt, dass das flüssigkristalline Material mindestens eine Verbindung enthält, welche mindestens eine Gruppe gewählt aus den folgenden enthält:

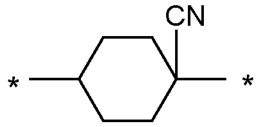 , 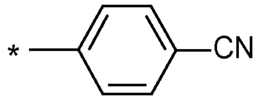 ,

wobei die mit * markierte Bindung die Bindung ist, mit der die Gruppe mit dem übrigen Teil der Verbindung verbunden ist.

Bevorzugt enthält das flüssigkristalline Material zusätzlich eine Verbindung (II), die eine sterisch gehinderte Hydroxyphenyl-Gruppe enthält. Dies hat den technischen Effekt, dass damit flüssigkristalline Materialien erhalten werden können, welche besonders lichtstabil und temperaturstabil sind.

Unter der Bezeichnung sterisch gehinderte Hydroxyphenyl-Gruppe wird im Rahmen der vorliegenden Erfindung verstanden, dass in der Nähe der Hydroxylgruppe der Hydroxyphenyl-Gruppe chemische Gruppen vorliegen, die diese räumlich abschirmen. Bevorzugt sind diese chemischen Gruppen an einer oder beiden der zur Hydroxylgruppe ortho-ständigen Positionen am Benzolring gebunden. Besonders bevorzugt sind diese chemischen Gruppen an beide der zur Hydroxylgruppe ortho-ständigen Positionen am Benzolring gebunden. Bevorzugt sind diese chemischen Gruppen gewählt aus Alkylgruppen mit 1 bis 10 C-Atomen und Silylgruppen, die Reste gewählt aus Alkylgruppen mit 1 bis 12 C-Atomen und Arylgruppen mit 6 bis 40 aromatischen Ringatomen tragen, besonders bevorzugt aus verzweigten Alkylgruppen mit 3 bis 10 C-Atomen, ganz besonders bevorzugt aus tert-Butylgruppen oder neo-Pentylgruppen.

Die Verbindung (II) enthält bevorzugt eine Gruppe der Formel (2)

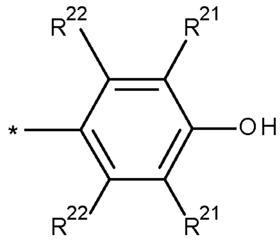

Formel (2),

wobei die mit * markierte Bindung die Bindung ist, mit der die Gruppe mit dem übrigen Teil der Verbindung verbunden ist, und

wobei $R^{21}$ bei jedem Auftreten gleich oder verschieden gewählt ist aus H; Silylgruppen, die Reste gewählt aus Alkylgruppen mit 1 bis 12 C-Atomen und Arylgruppen mit 6 bis 40 aromatischen Ringatomen tragen; und Alkylgruppen mit 1 bis 12 C-Atomen, die mit einem oder mehreren Resten gewählt aus F, Cl und CN substituiert sein können, wobei mindestens ein $R^{21}$ gewählt ist aus Silylgruppen, die Reste gewählt aus Alkylgruppen mit 1 bis 12 C-Atomen und Arylgruppen mit 6 bis 40 aromatischen Ringatomen tragen; und Alkylgruppen mit 1 bis 12 C-Atomen, die mit einem oder mehreren Resten gewählt aus F, Cl und CN substituiert sein können; und

wobei $R^{22}$ bei jedem Auftreten gleich oder verschieden gewählt ist aus H und Alkylgruppen mit 1 bis 12 C-Atomen, die mit einem oder mehreren Resten gewählt aus F, Cl und CN substituiert sein können.

Bevorzugt ist $R^{21}$ bei jedem Auftreten gleich oder verschieden gewählt aus sterisch anspruchsvollen Alkylgruppen, besonders bevorzugt aus verzweigten Alkylgruppen mit 3 bis 12 C-Atomen, die mit einem oder mehreren Resten gewählt aus F, Cl und CN substituiert sein können. Ganz besonders bevorzugt ist $R^{21}$ bei jedem Auftreten gleich oder verschieden gewählt aus tert-Butyl und neo-Pentyl, am stärksten bevorzugt ist $R^{21}$ tert-Butyl.

Bevorzugt ist $R^{22}$ gleich H.

Bevorzugt enthält die Verbindung (II) genau eine, genau zwei oder genau drei Gruppen der Formel (2), besonders bevorzugt enthält sie genau eine Gruppe der Formel (2).

Bevorzugt entspricht die Verbindung (II) einer Formel (II)

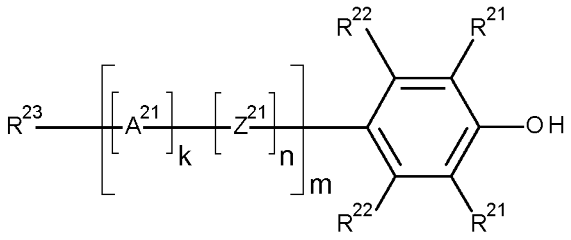

Formel (II),

wobei für die auftretenden Variablen gilt:

$R^{21}$ und $R^{22}$ sind definiert wie oben;

$R^{23}$ ist gewählt aus H, F, Cl, CN, NCS, Alkylgruppen mit 1 bis 20 C-Atomen, Alkoxygruppen mit 1 bis 20 C-Atomen, Thioalkylgruppen mit 1 bis 10 C-Atomen, Alkenylgruppen mit 2 bis 20 C-Atomen, und Alkenyloxygruppen mit 2 bis 20 C-Atomen, wobei ein oder mehrere H-Atome in den Alkyl-, Alkoxy-, Thioalkyl-, Alkenyl- und Alkenyloxygruppen durch F, Cl oder CN ersetzt sein können;

$A^{21}$ ist bei jedem Auftreten gleich oder verschieden gewählt aus

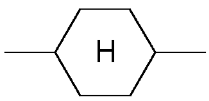 , 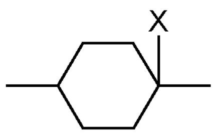 , 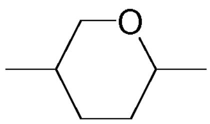 , 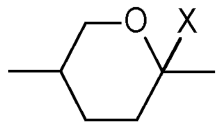 ,

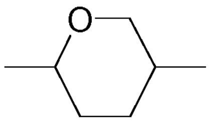 , 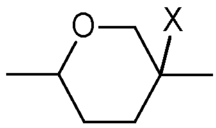 , 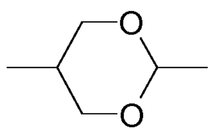 , 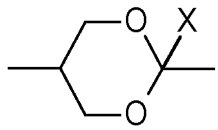 ,

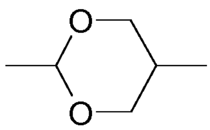 , 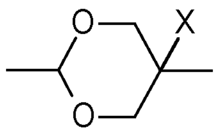 , 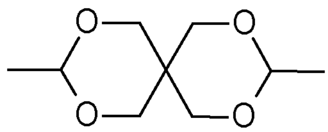 ,

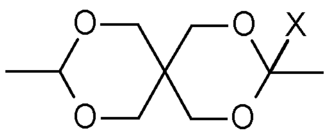 , 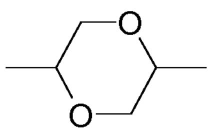 , 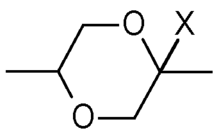 ,

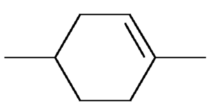 , 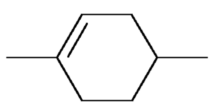 , 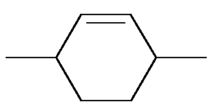 , 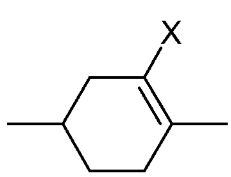 ,

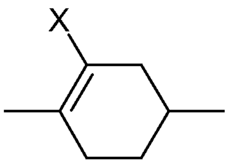 , 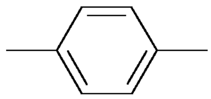 , 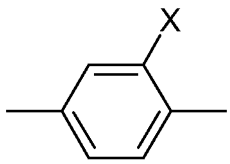 , 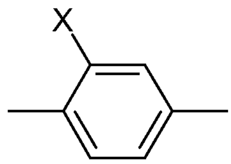 ,

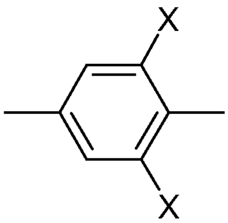 , 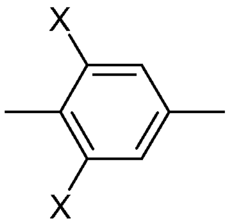 , 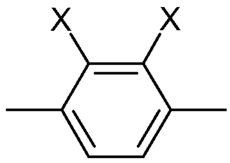 , 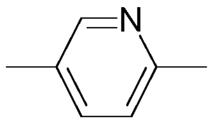 ,

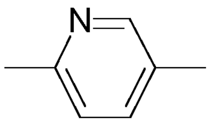 , 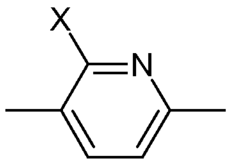 , 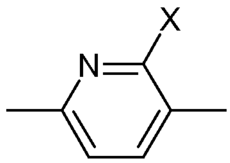 , 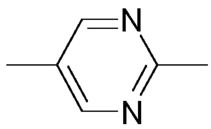 ,

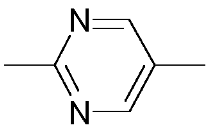 , 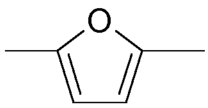 , 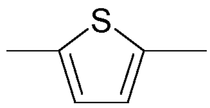 ,

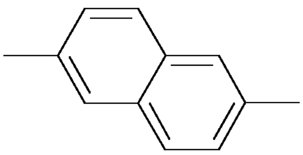 , 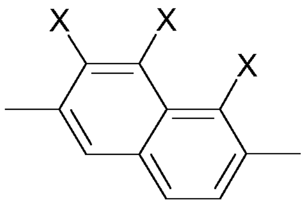 , 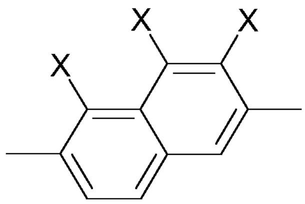 ,

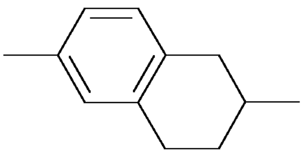 , 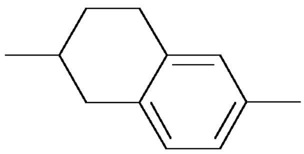 , 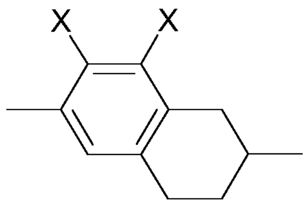 ,

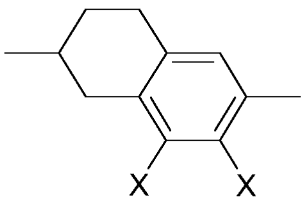 , 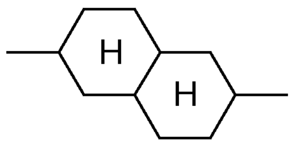 ,

und

X ist bei jedem Auftreten gleich oder verschieden gewählt aus F, Cl, CN, $N_3$, -NCS, $NO_2$, $-C \equiv C-R^X$, Alkylgruppen

mit 1 bis 12 C-Atomen, Alkoxygruppen mit 1 bis 10 C-Atomen und Thioalkylgruppen mit 1 bis 12 C-Atomen, wobei ein oder mehrere Wasserstoffatome in den Alkyl-, Alkoxy- und Thioalkylgruppen durch F, Cl oder CN ersetzt sein können, und wobei eine oder mehrere $CH_2$-Gruppen in den Alkyl-, Alkoxy- und Thioalkylgruppen durch O oder S ersetzt sein können;

$R^x$ ist bei jedem Auftreten gleich oder verschieden gewählt aus H, CN, und Alkylgruppen mit 1 bis 10 C-Atomen, wobei in den Alkylgruppen eine oder mehrere C-Atome durch F, Cl oder CN ersetzt sein können;

$Z^{21}$ ist bei jedem Auftreten gleich oder verschieden gewählt aus Alkylengruppen mit 1 bis 12 C-Atomen, Alkenylengruppen mit 2 bis 12 C-Atomen, Alkinylengruppen mit 2 bis 12 C-Atomen, -O-, -S-, -NH-, -(C=O)-O-, -O-(C=O)-, $-CF_2-O-$, $-O-CF_2-$, $-O-CH_2-$, und $-CH_2-O-$;

k ist bei jedem Auftreten gleich oder verschieden 0, 1 oder 2;

m ist gleich 0, 1, 2 oder 3;

n ist bei jedem Auftreten gleich oder verschieden 0, 1 oder 2.

Bevorzugt ist in Formel (II) $R^{23}$ gewählt aus Alkyl- oder Alkoxygruppen mit 1 bis 20 C-Atomen, besonders bevorzugt aus Alkylgruppen mit 1 bis 12 C-Atomen. Weiterhin gelten die bevorzugten Ausführungsformen für die Gruppen $R^{21}$ und $R^{22}$.

Weiterhin ist $A^{21}$ bevorzugt bei jedem Auftreten gleich oder verschieden gewählt aus

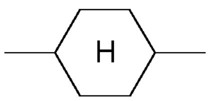
,
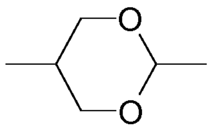
,

und

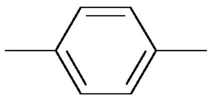
.

Nochmals weiterhin sind k, m und n bei jedem Auftreten gleich oder verschieden gewählt aus 0 oder 1.

Weiterhin bevorzugt ist k gleich 1 oder 2, und m ist gleich 1, 2 oder 3. Am stärksten bevorzugt ist k gleich 1, m gleich 1 und n gleich 0, so dass eine Verbindung der bevorzugten Formel (IIA) vorliegt:

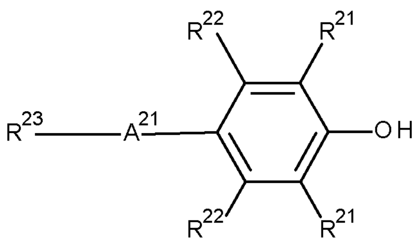

Formel (IIA),

wobei die auftretenden Variablen definiert sind wie oben. Bevorzugt entsprechen die Variablen $R^{21}$, $R^{22}$, $R^{23}$ und $A^{21}$ den oben angegebenen bevorzugten Ausführungsformen.

Besonders bevorzugte Ausführungformen für die Verbindung (II) entsprechen den folgenden Formeln:

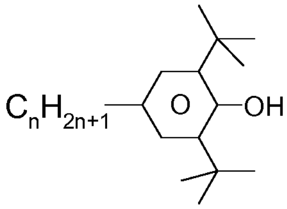

wobei n = 1, 2, 3, 4, 5, 6, oder 7 ist, bevorzugt gleich 1, 4 oder 7 ist; Formel (II-1)

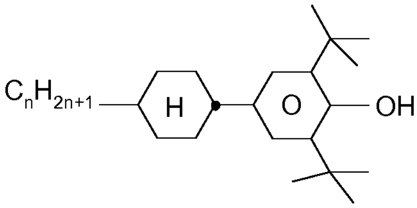

wobei n = 1, 2, 3, 4, 5, 6, oder 7 ist, bevorzugt gleich 3 ist; Formel (II-2)

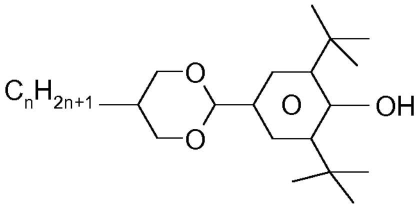

wobei n = 1, 2, 3, 4, 5, 6, oder 7 ist, bevorzugt gleich 3 ist; Formel (II-3).

Bevorzugte konkrete Verbindungen (II) sind in der folgenden Tabelle abgebildet:

| | |
|---|---|
| 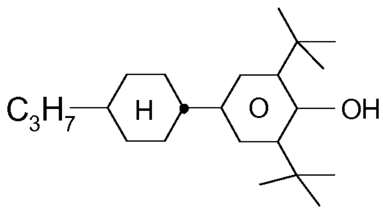 | 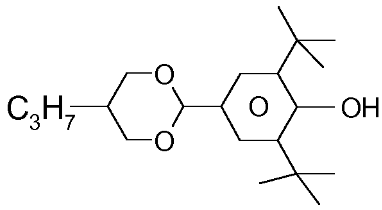 |
| (2-1) | (2-2) |
| 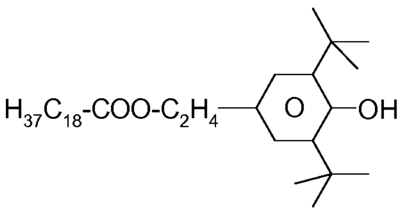 | 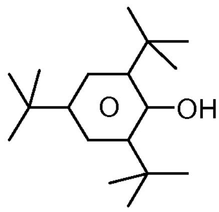 |
| (2-3) | (2-4) |

(fortgesetzt)

| | |
|---|---|
| 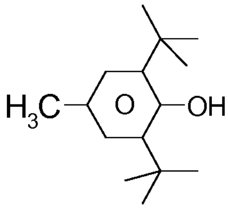 | 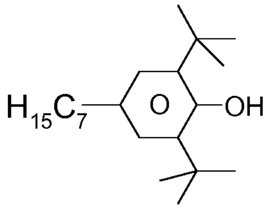 |
| (2-5) | (2-6) |
| 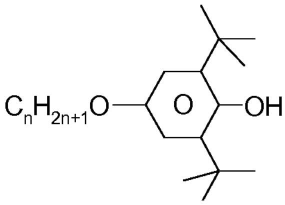 | 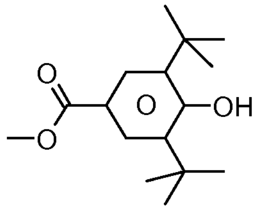 |
| (2-7) | (2-8) |
| 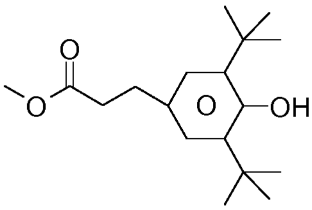 | 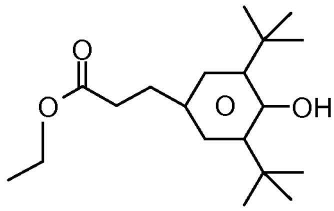 |
| (2-9) | (2-10) |
| 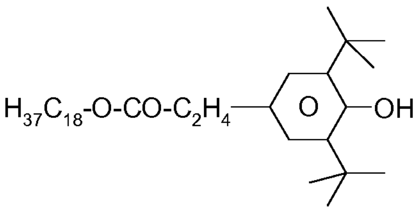 | 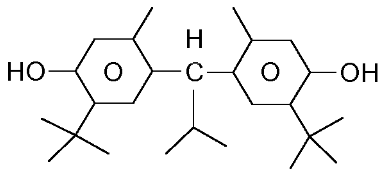 |
| (2-11) | (2-12) |
| 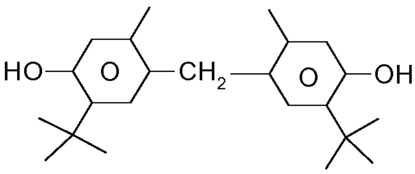 | 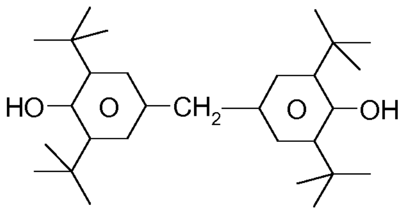 |
| (2-13) | (2-14) |
| 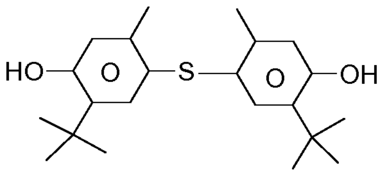 | 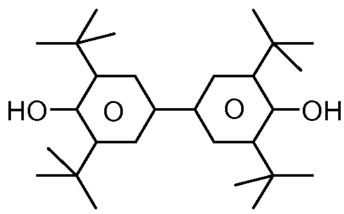 |
| (2-15) | (2-16) |

(fortgesetzt)

| | |
|---|---|
| 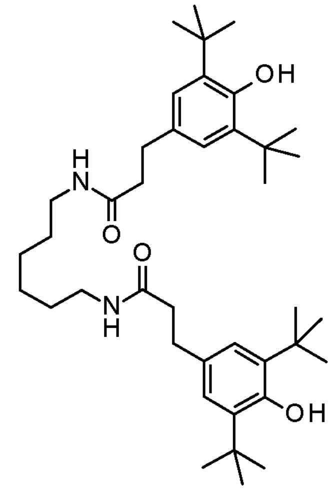 | 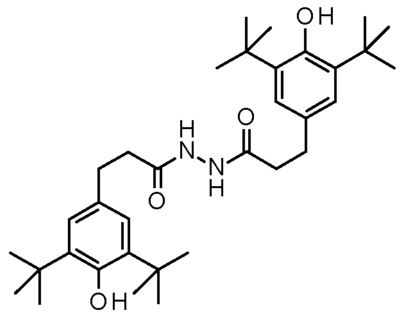 |
| (2-17) | (2-18) |
| 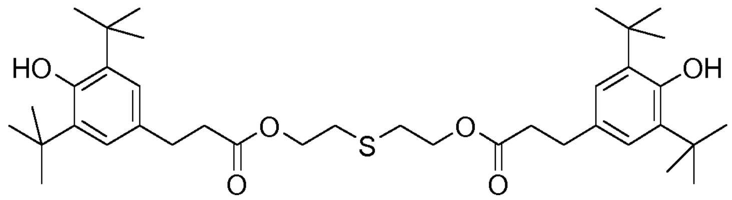 | |
| (2-19) | |
| 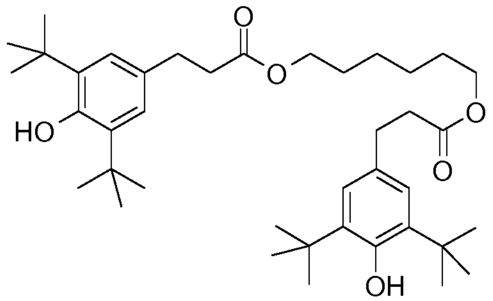 | |
| (2-20) | |
| 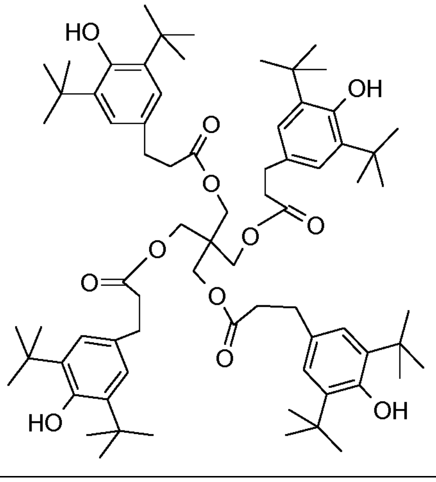 | 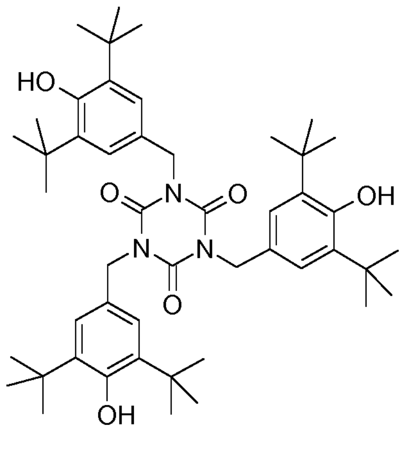 |
| (2-21) | (2-22) |

(fortgesetzt)

| | |
|---|---|
| 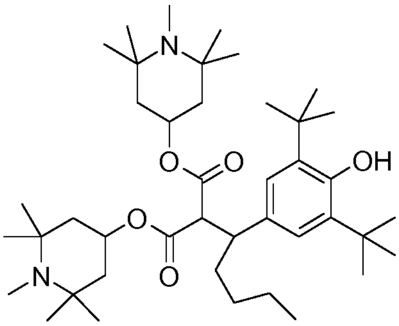 | |
| (2-23) | |

Besonders bevorzugt ist, dass das flüssigkristalline Material eine Kombination einer Verbindung (I) der Formel (I-1) mit einer Verbindung (II) der Formel (II) enthält. Ganz besonders bevorzugt ist die Kombination einer Verbindung (I) gewählt aus Verbindungen

| |
|---|
| 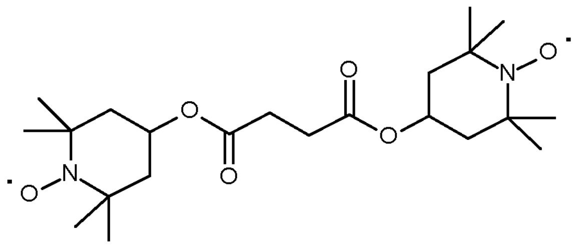 |
| und |
| 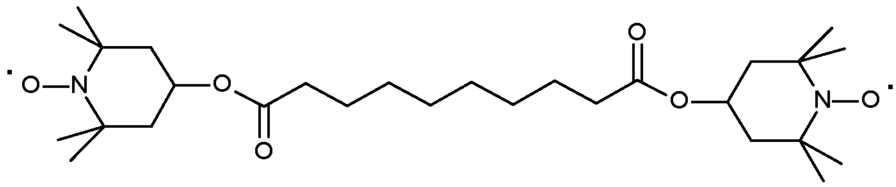 |

mit einer Verbindung der Formel (II), gewählt aus Verbindungen

| |
|---|
| 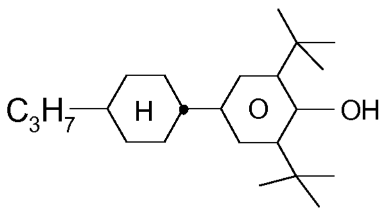 |
| und |
| 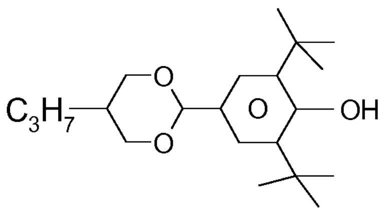 |

Bevorzugt ist die Verbindung (II) in einem Anteil von 0.01 Gew.-% bis 1 Gew.-% im flüssigkristallinen Material enthalten, besonders bevorzugt in einem Anteil von 0.02 Gew.-% bis 0.8 Gew.-%.

Der im flüssigkristallinen Material enthaltene Farbstoff ist bevorzugt eine organische Verbindung, besonders bevorzugt eine organische Verbindung enthaltend mindestens eine kondensierte Aryl- oder Heteroarylgruppe. Unter einer kondensierten Aryl- bzw. Heteroarylgruppe wird dabei eine Gruppe verstanden, die mindestens zwei aromatische bzw. heteroaromatische Einzelringe, insbesondere 5- oder 6-Ringe, enthält, welche mindestens eine Kante miteinander teilen. Beispiele für kondensierte Arylgruppen und Heteroarylgruppen sind Naphthyl, Anthracenyl, Pyrenyl, Perylenyl, Carbazolyl, Acridinyl und Chinolinyl.

Bevorzugt enthält das flüssigkristalline Material mindestens zwei, besonders bevorzugt mindestens drei und ganz besonders bevorzugt drei oder vier verschiedene Farbstoffe. Bevorzugt decken die mindestens zwei Farbstoffe jeweils verschiedene Bereiche des Lichtspektrums ab.

Wenn zwei oder mehr Farbstoffe im flüssigkristallinen Material vorliegen, ergänzen sich die Absorptionsspektren dieser Farbstoffe bevorzugt derart, dass im Wesentlichen das gesamte sichtbare Spektrum des Lichts absorbiert wird. Dadurch entsteht für das menschliche Auge der Eindruck von schwarzer Farbe. Bevorzugt wird dies dadurch erreicht, dass drei oder mehr verschiedene Farbstoffe verwendet werden, von denen mindestens einer blaues Licht absorbiert, mindestens einer grünes bis gelbes Licht absorbiert, und mindestens einer rotes Licht absorbiert. Lichtfarbe ist dabei entsprechend B. Bahadur, Liquid Crystals - Applications and Uses, Vol. 3, 1992, World Scientific Publishing, Abschnitt 11.2.1, definiert.

Der Gesamtanteil der Farbstoffe im flüssigkristallinen Material beträgt bevorzugt 0.01 bis 20 Gew.-%, besonders bevorzugt 0.1 bis 15 Gew.-% und ganz besonders bevorzugt 0.2 bis 12 Gew.-%. Der Anteil jedes einzelnen der einen oder mehreren Farbstoffe beträgt bevorzugt 0.01 bis 15 Gew.-%, bevorzugt 0.05 bis 12 Gew.-% und ganz besonders bevorzugt 0.1 bis 10 Gew.-%.

Der im flüssigkristallinen Material enthaltene Farbstoff liegt darin bevorzugt gelöst vor. Der Farbstoff wird bevorzugt in seiner Ausrichtung durch die Ausrichtung der Moleküle des flüssigkristallinen Materials im flüssigkristallinen Zustand beeinflusst.

Bevorzugt ist der Farbstoff ein dichroitischer Farbstoff, besonders bevorzugt ein positiv dichroitischer Farbstoff. Unter positiv dichroitisch wird verstanden, dass der Farbstoff einen positiven Anisotropiegrad R aufweist. Besonders bevorzugt ist der Anisotropiegrad R größer als 0.4, ganz besonders bevorzugt größer als 0.5 und am stärksten bevorzugt größer als 0.6. Der Anisotropiegrad R wird dabei bestimmt wie in den Ausführungsbeispielen des Anmeldetextes WO2015/154848 angegeben.

Es kann in einer alternativen Ausführungsform auch bevorzugt sein, dass der Farbstoff ein negativ dichroitischer Farbstoff ist. Unter negativ dichroitisch wird verstanden, dass der Farbstoff einen negativen Anisotropiegrad R aufweist.

Bevorzugt sind die im flüssigkristallinen Material vorhandenen Farbstoffe entweder alle positiv dichroitisch, oder alle negativ dichroitisch.

Weiterhin bevorzugt absorbiert der Farbstoff gemäß der vorliegenden Anmeldung vorwiegend Licht im UV-VIS-NIR-Bereich, d. h. in einem Wellenlängenbereich von 320 bis 1500 nm. Besonders bevorzugt absorbiert der Farbstoff vorwiegend Licht im VIS -Bereich, d. h. in einem Wellenlängenbereich von 380 bis 780 nm. Besonders bevorzugt hat der Farbstoff ein oder mehrere Absorptionsmaxima im wie oben definierten UV-VIS-NIR-Bereich, bevorzugt im VIS-Bereich, d.h. von 380 nm bis 780 nm Wellenlänge. Für Anwendungen in schaltbaren Fenstern kann es ebenfalls bevorzugt sein, wenn der Farbstoff ein oder mehrere Absorptionsmaxima im NIR-Bereich hat, insbesondere zwischen 780 nm und 1500 nm.

Weiterhin bevorzugt ist der Farbstoff gewählt aus den in B. Bahadur, Liquid Crystals - Applications and Uses, Vol. 3, 1992, World Scientific Publishing, Abschnitt 11.2.1 angegebenen Farbstoffklassen und besonders bevorzugt aus den in der Tabelle aufgeführten expliziten Verbindungen.

Bevorzugt ist der Farbstoff gewählt aus Azoverbindungen, Anthrachinonen, Methinverbindungen, Azomethinverbindungen, Merocyaninverbindungen, Naphthochinonen, Tetrazinen; Rylenen, insbesondere Perylenen und Terylenen; Benzothiadiazolen; Pyrromethenen und Diketopyrrolopyrrolen. Besonders bevorzugt sind darunter Azoverbindungen, Anthrachinone, Benzothiadiazole, insbesondere wie in WO 2014/187529 offenbart, Diketopyrrolopyrrole, insbesondere wie in WO 2015/090497 offenbart, und Rylene, insbesondere wie in WO 2014/090373 offenbart. Am stärksten bevorzugt ist der Farbstoff gewählt aus Azofarbstoffen, Anthrachinonen enthaltend Aminogruppen, und Anthrachinonen ohne Aminogruppen.

Die folgenden Verbindungen sind Beispiele für die genannten Farbstoffe:

| |
|---|
| 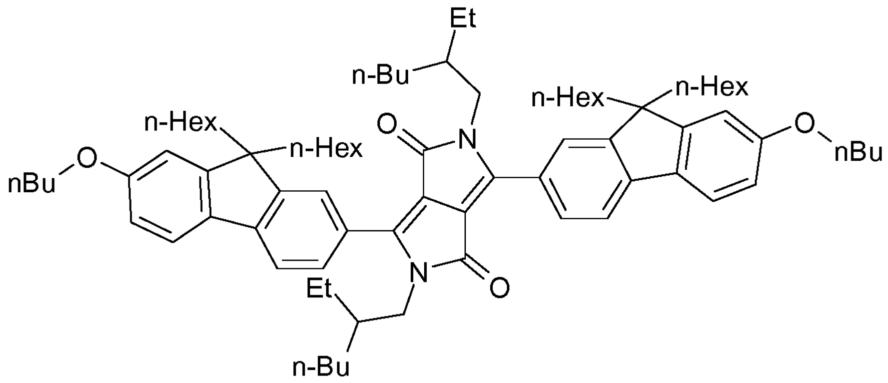 |
| 1 |
| 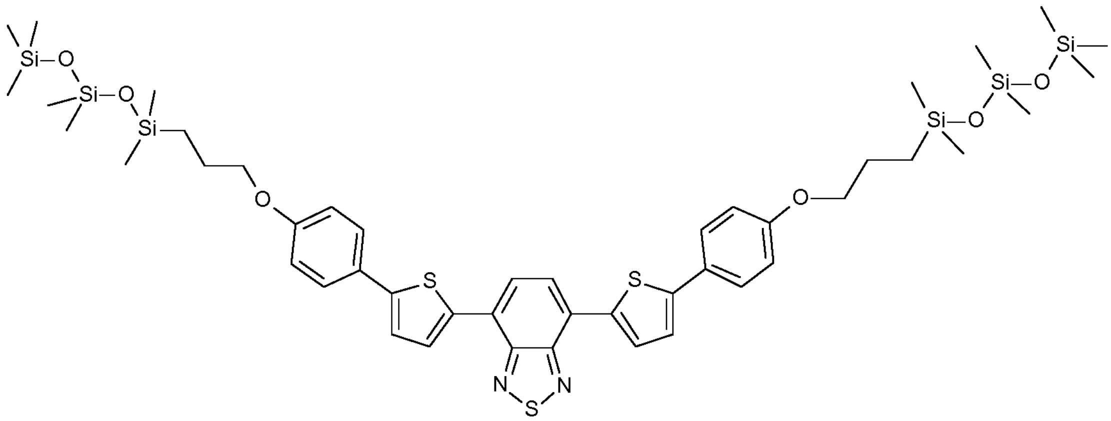 |
| 2 |
| 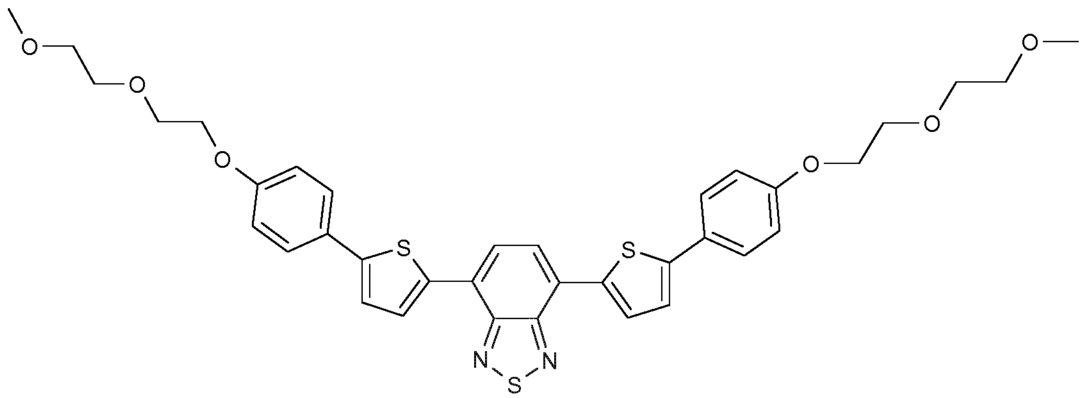 |
| 3 |
| 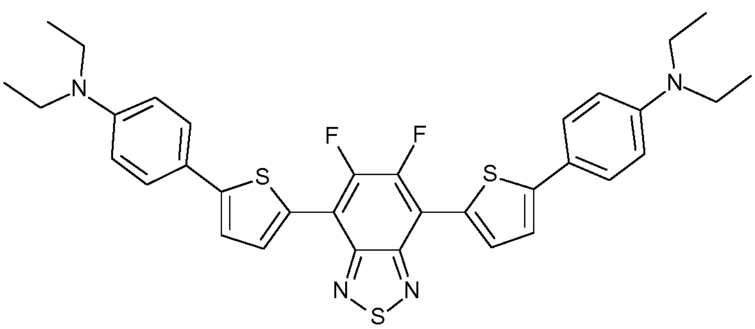 |

(fortgesetzt)

| |
|---|
| 4 |
| 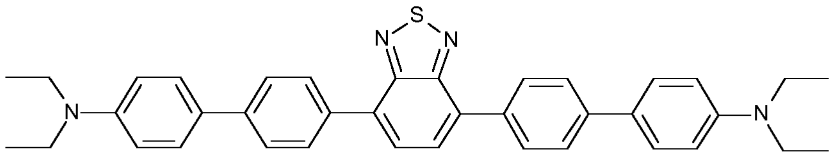 |
| 5 |
| 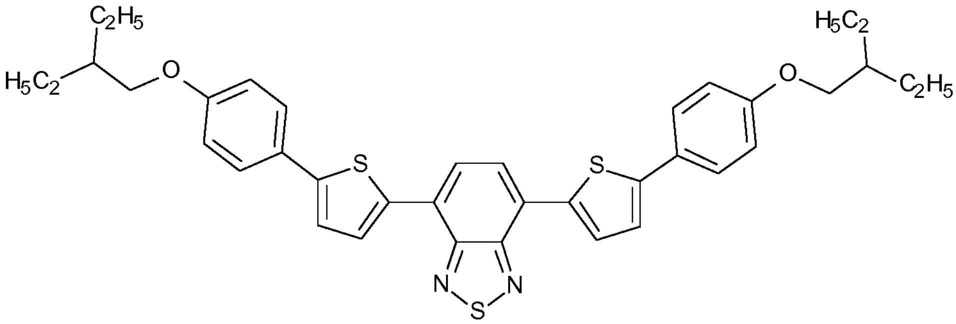 |
| 6 |
| 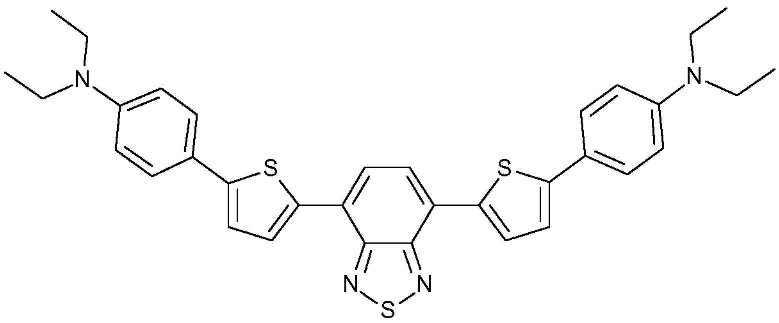 |
| 7 |
| 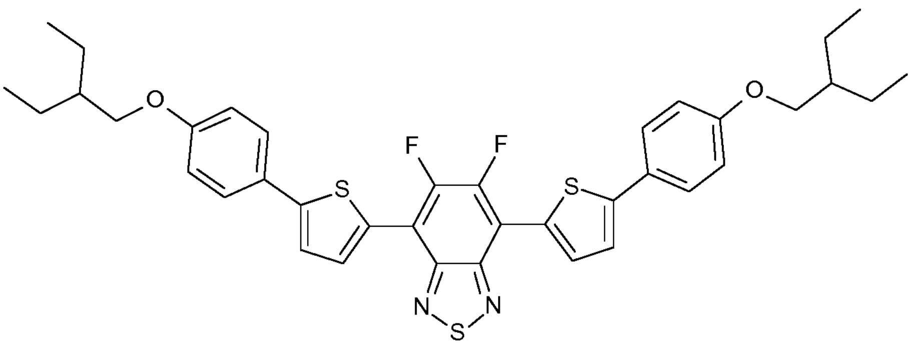 |
| 8 |

(fortgesetzt)

| |
|---|
| 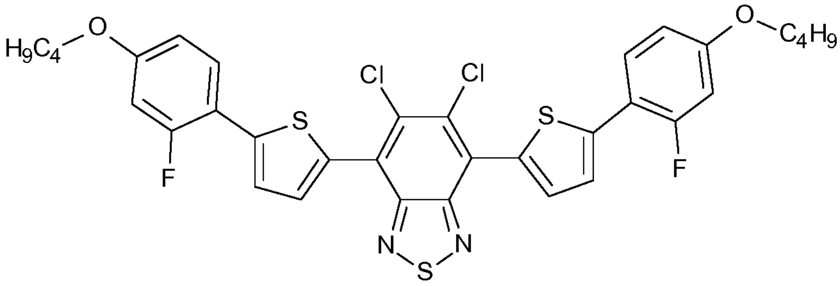 |
| 9 |
| 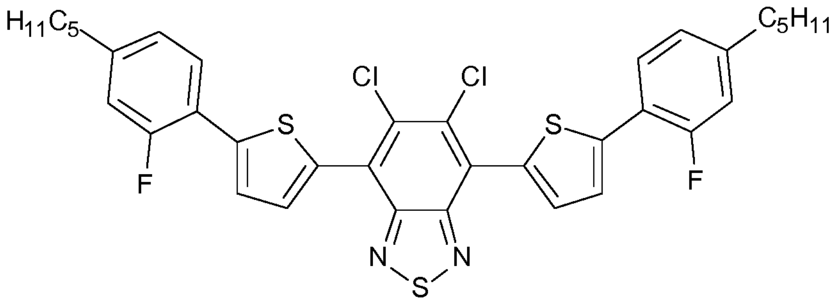 |
| 10 |
| 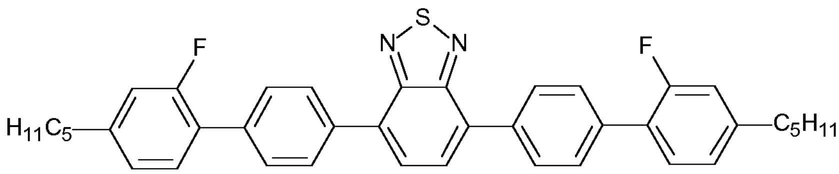 |
| 11 |
| 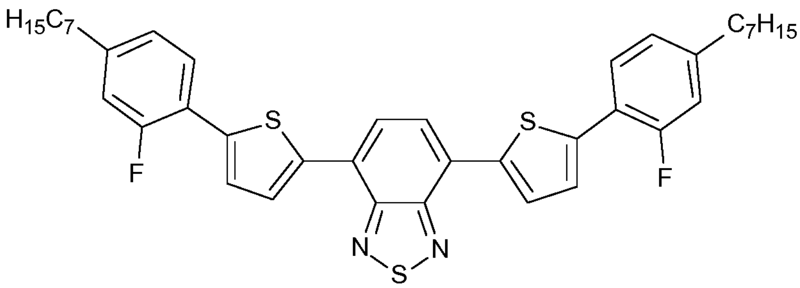 |
| 12 |

(fortgesetzt)

| |
|---|
| 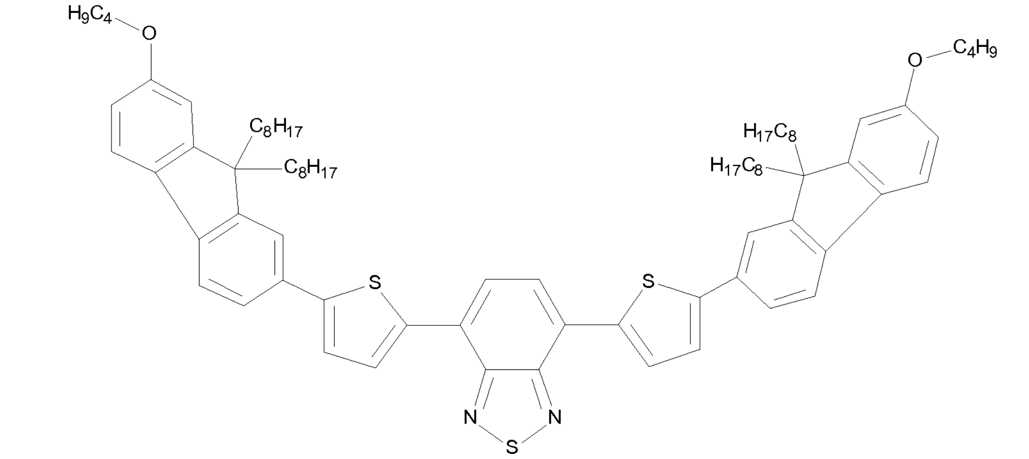 |
| 13 |
| 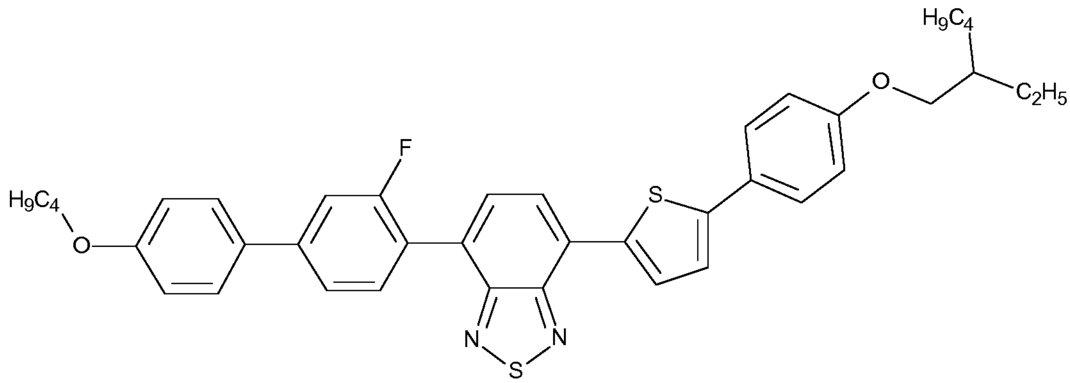 |
| 14 |
| 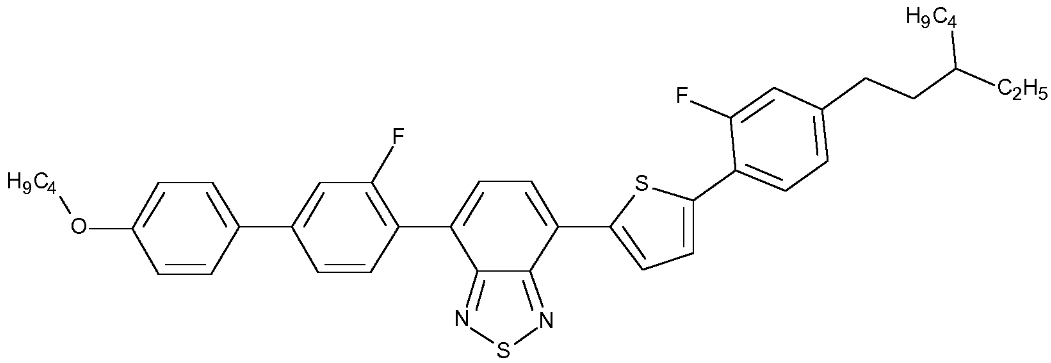 |
| 15 |
| 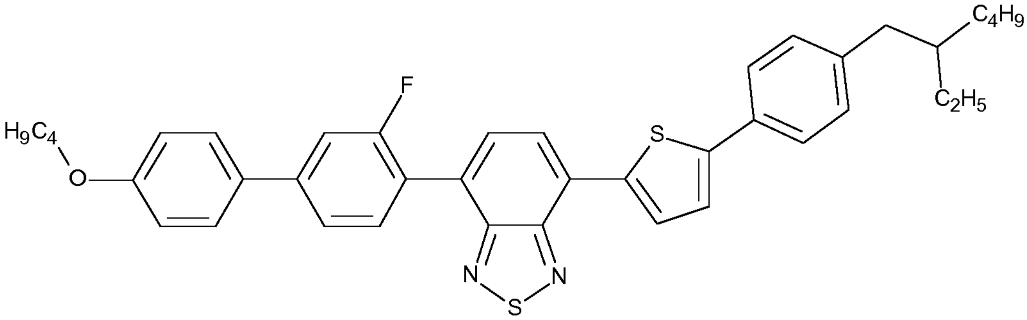 |

(fortgesetzt)

| 16 |
|---|
| 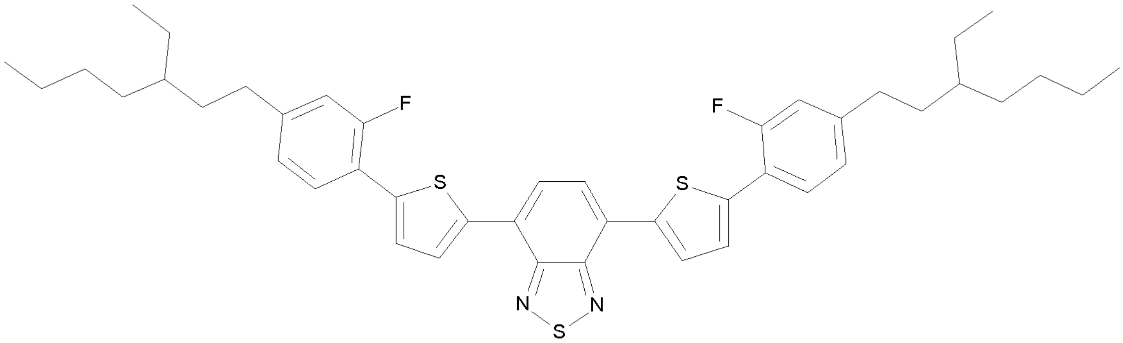 |
| 17 |
| 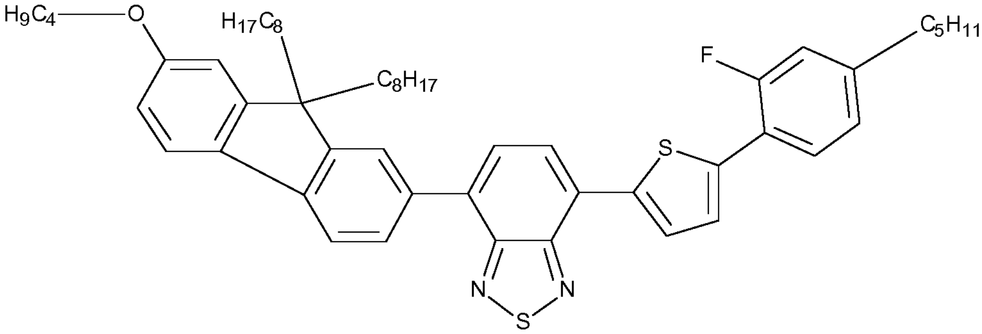 |
| 18 |
| 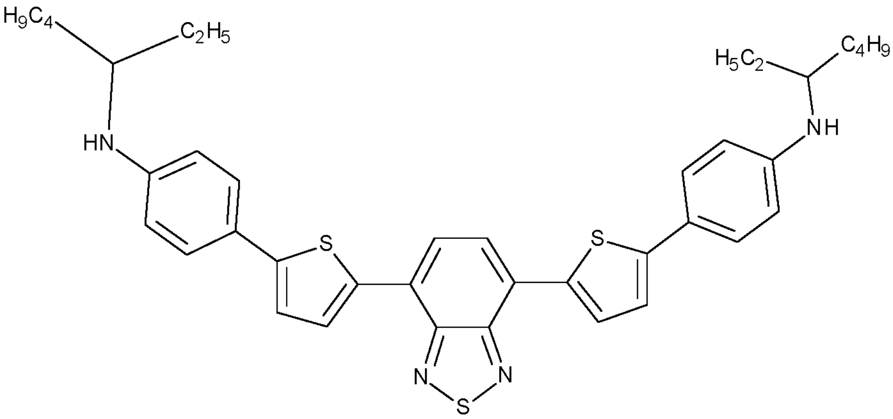 |
| 19 |
| 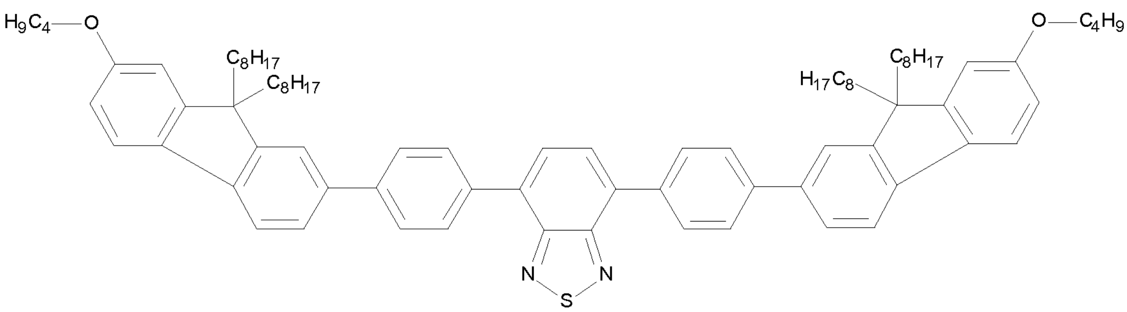 |
| 20 |

(fortgesetzt)

| |
|---|
| 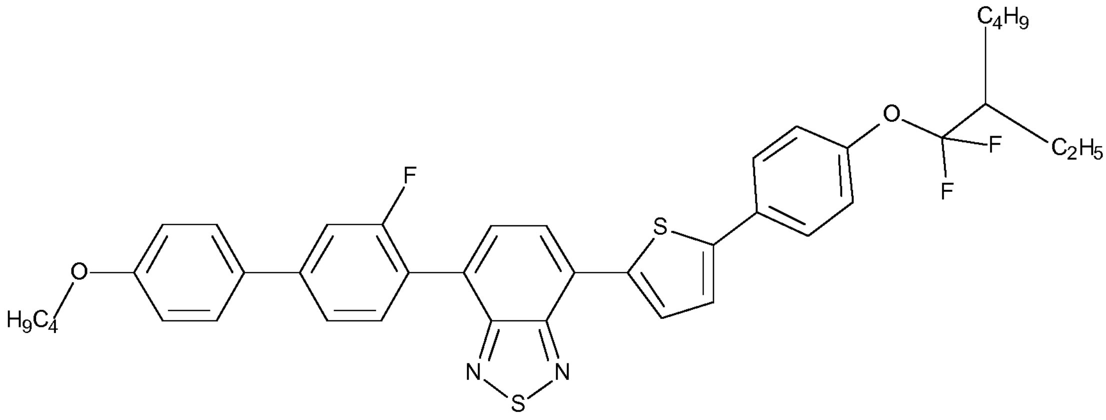 |
| 21 |
| 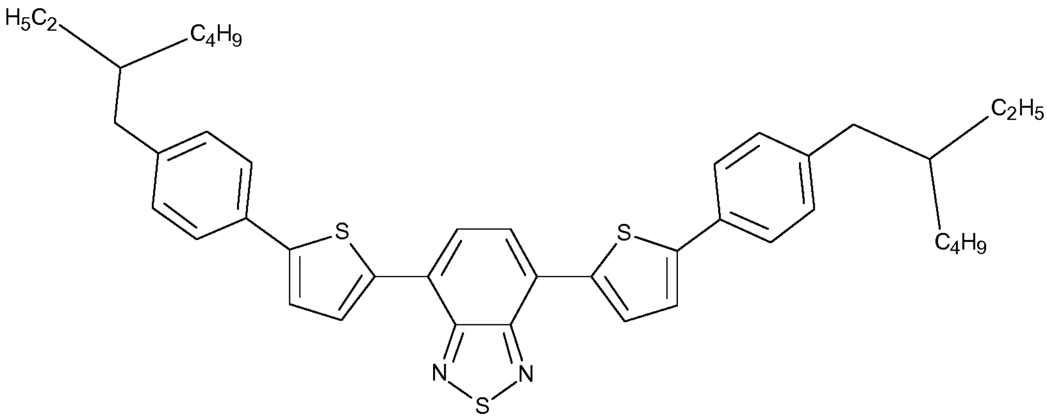 |
| 22 |
| 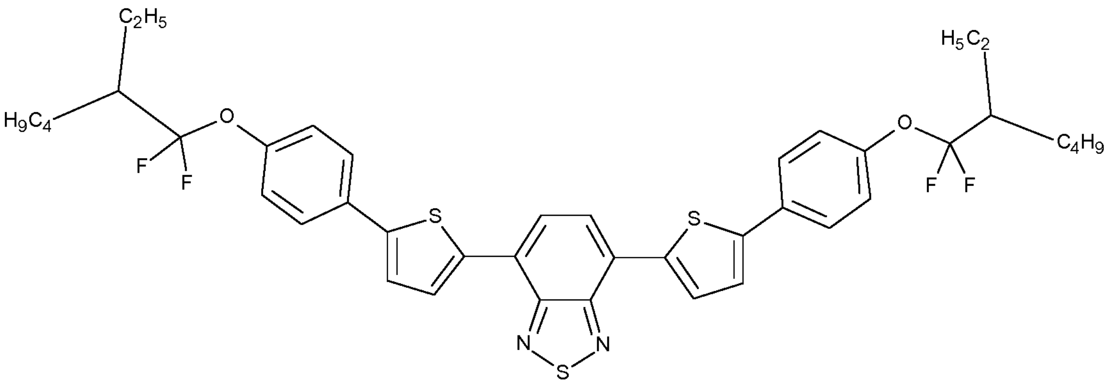 |
| 23 |
| 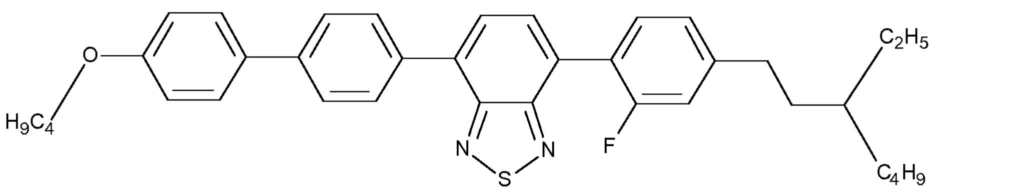 |
| 24 |

(fortgesetzt)

| |
|---|
| 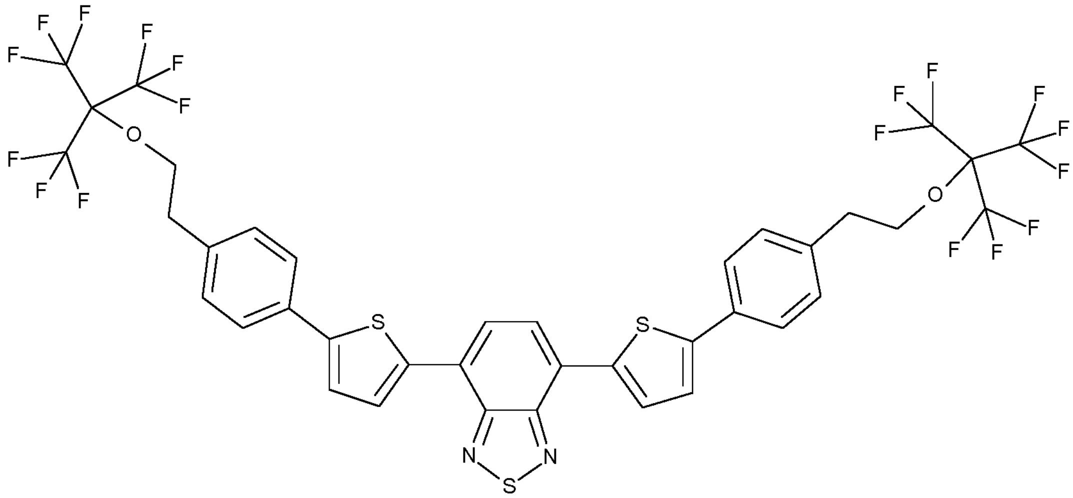 |
| 25 |
| 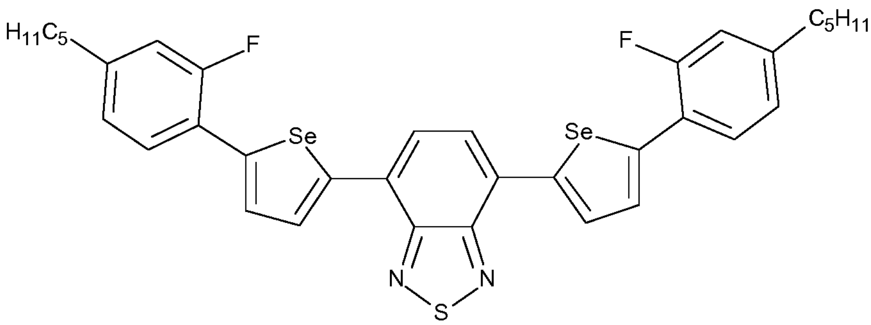 |
| 26 |
| 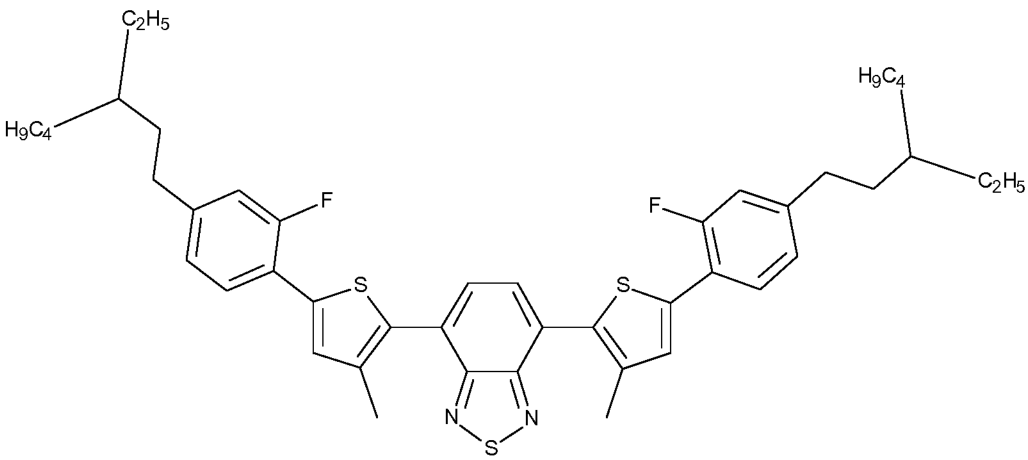 |
| 27 |
| 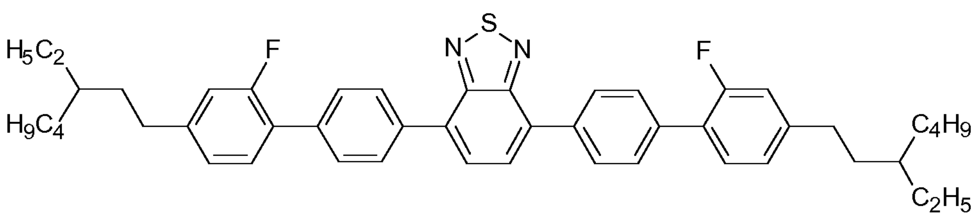 |
| 28 |

(fortgesetzt)

| |
|---|
| 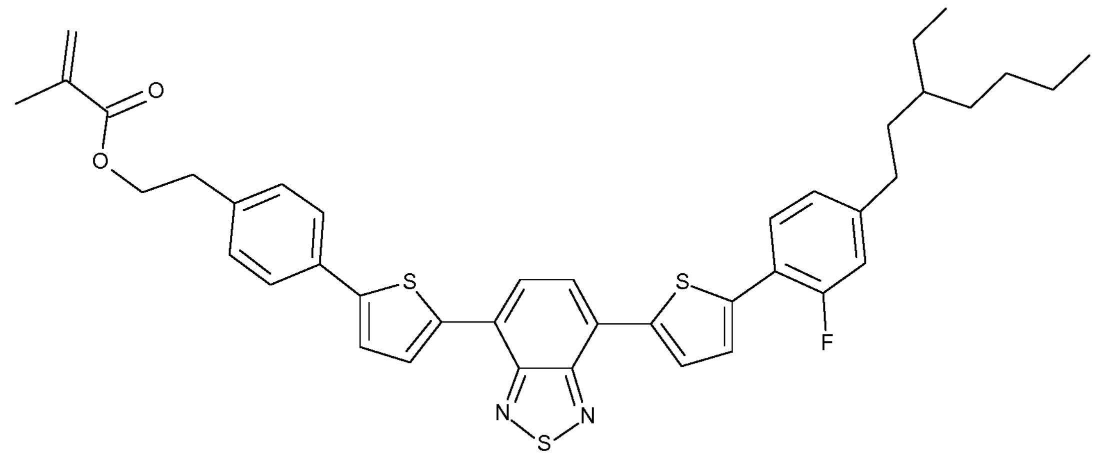 |
| 29 |
| 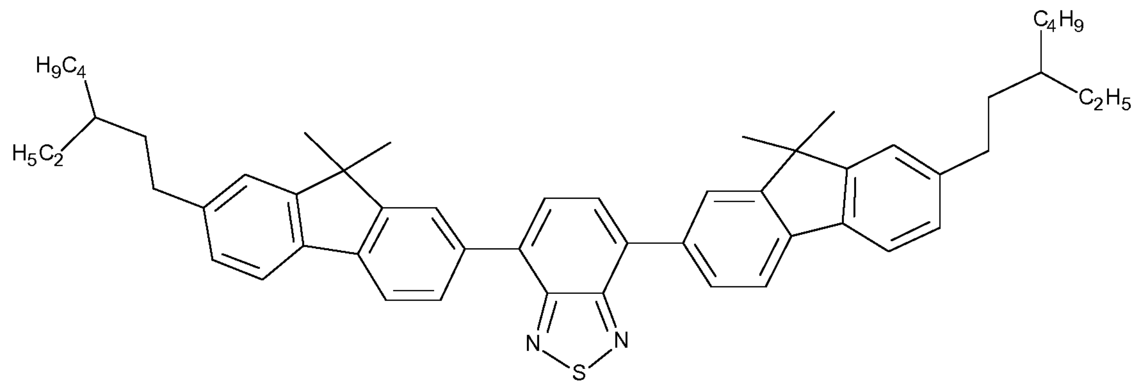 |
| 30 |
| 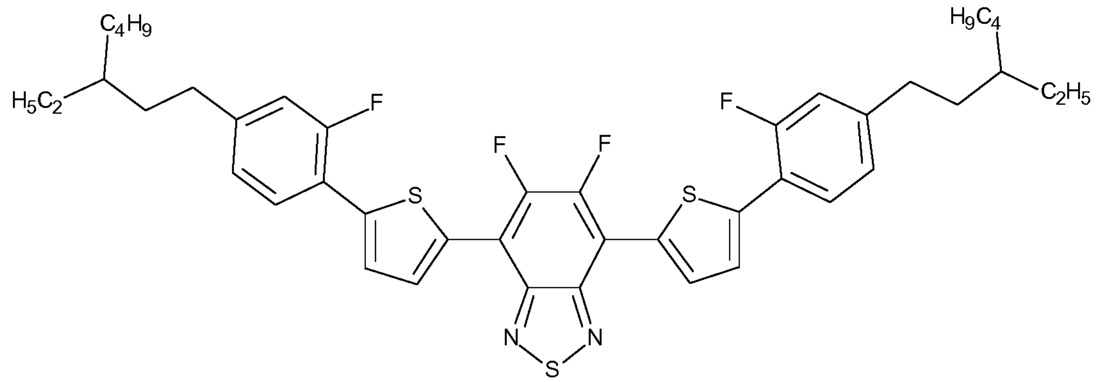 |
| 31 |

(fortgesetzt)

| |
|---|
| 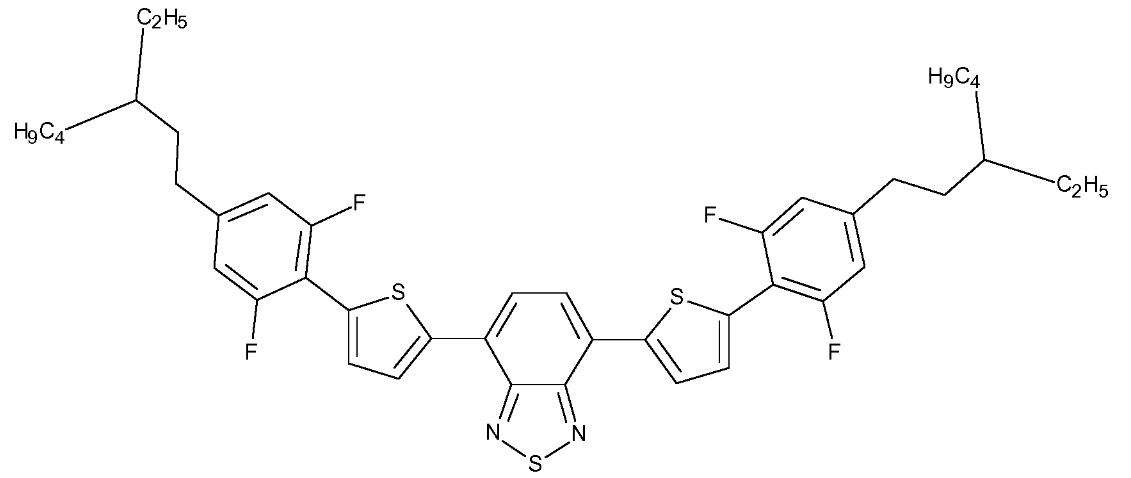 |
| 32 |
| 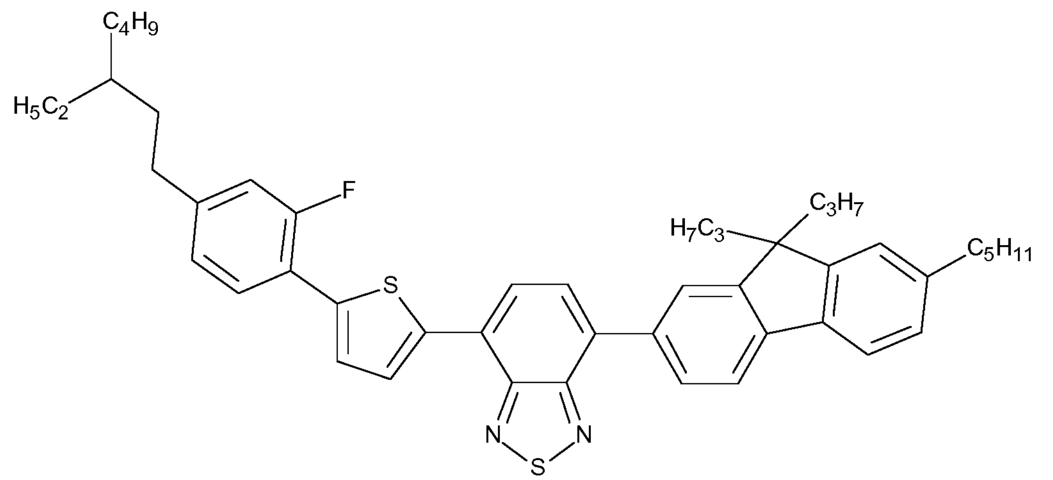 |
| 33 |
| 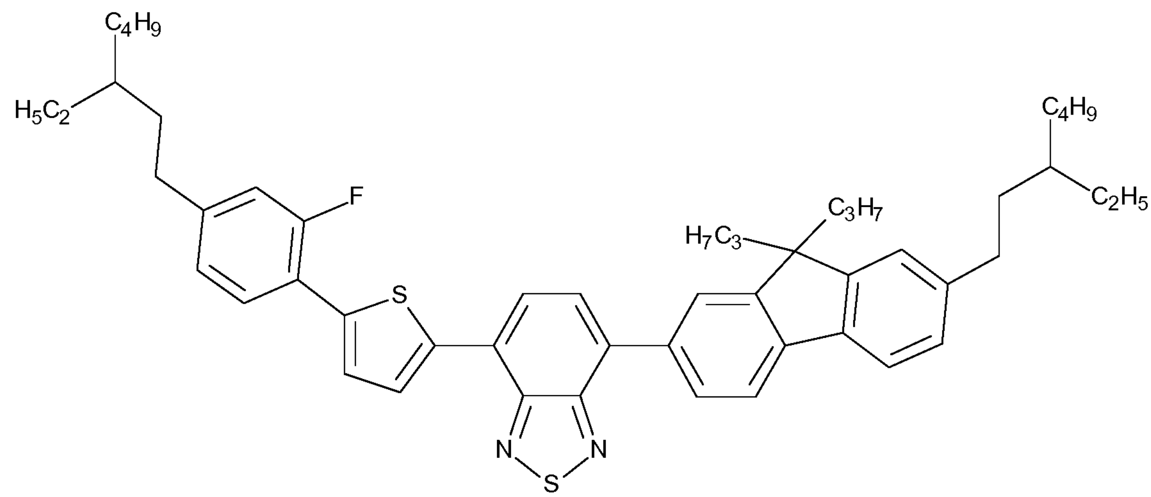 |
| 34 |

(fortgesetzt)

| |
|---|
| 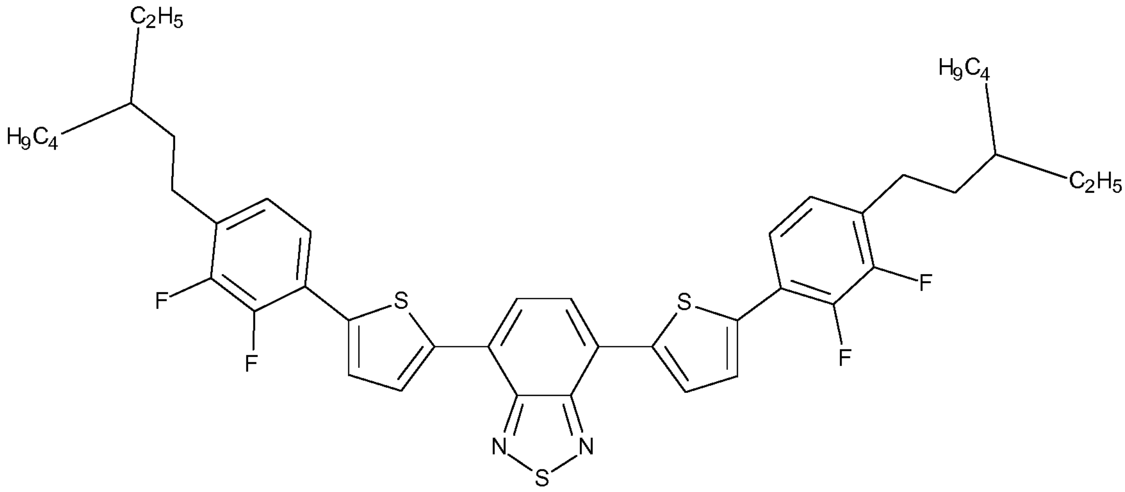 |
| 35 |
| 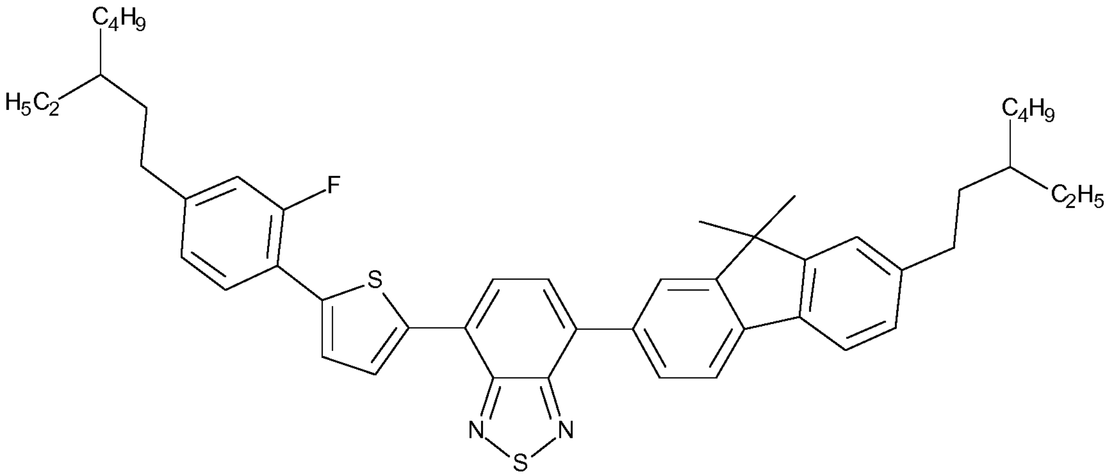 |
| 36 |
| 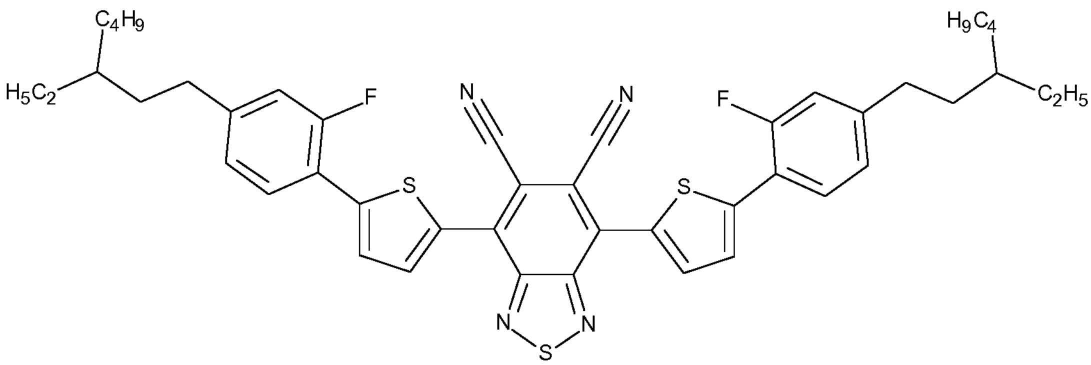 |
| 37 |

(fortgesetzt)

| |
|---|
| 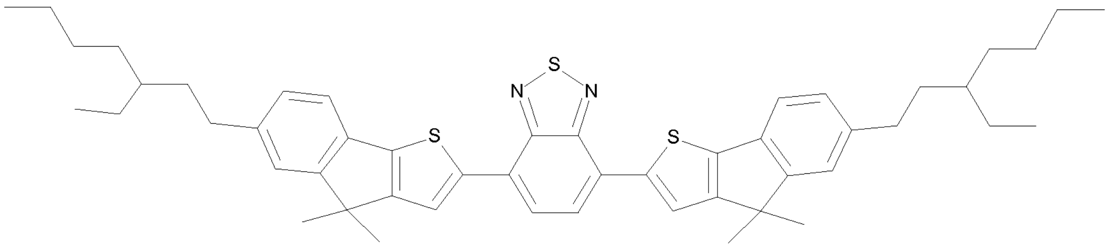 |
| 38 |
| 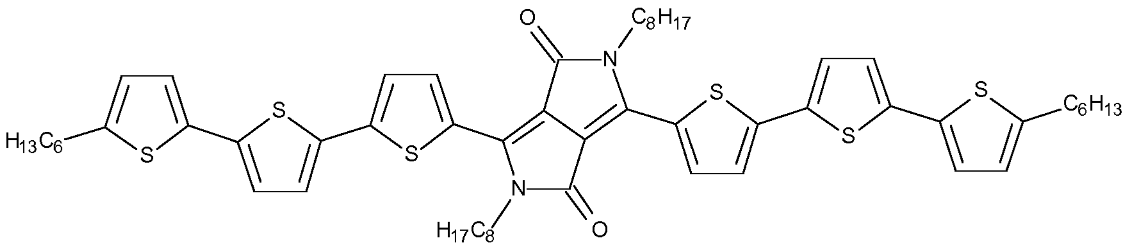 |
| 39 |
| 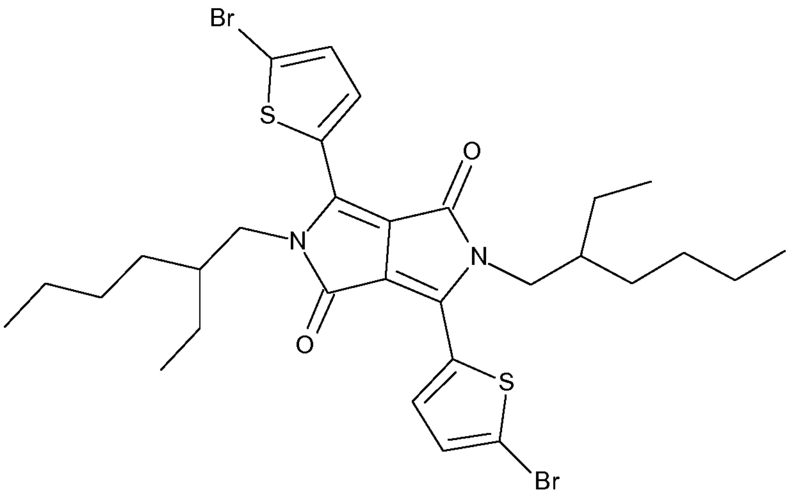 |
| 40 |
| 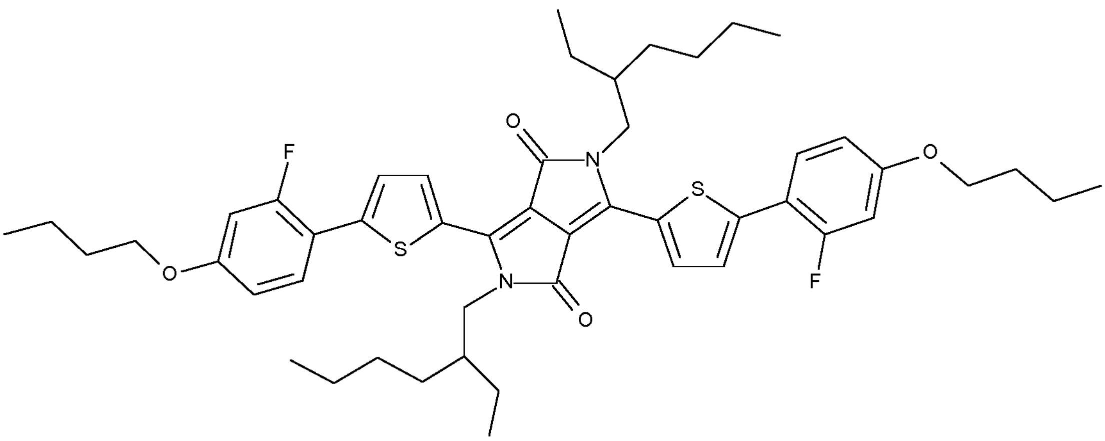 |
| 41 |

(fortgesetzt)

| |
|---|
| 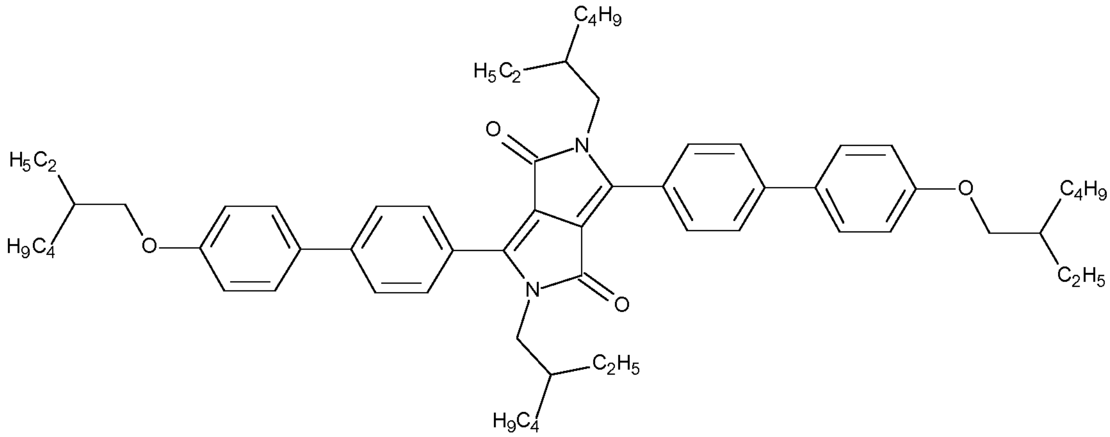 |
| 42 |
| 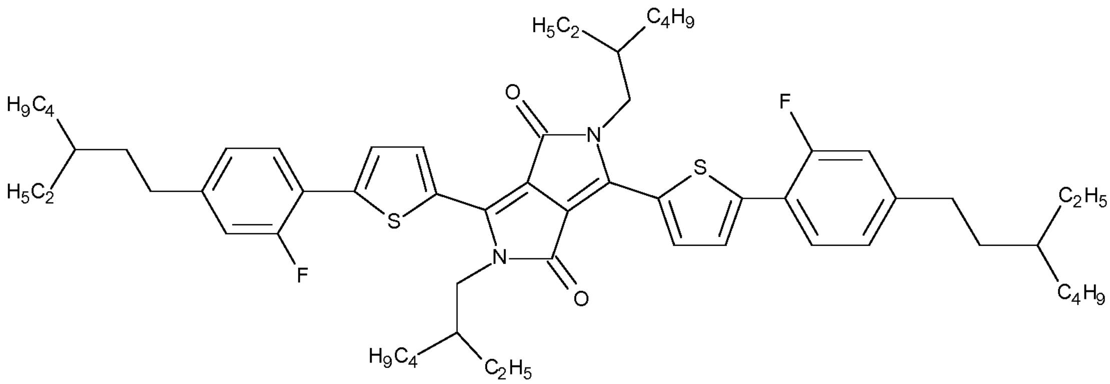 |
| 43 |
| 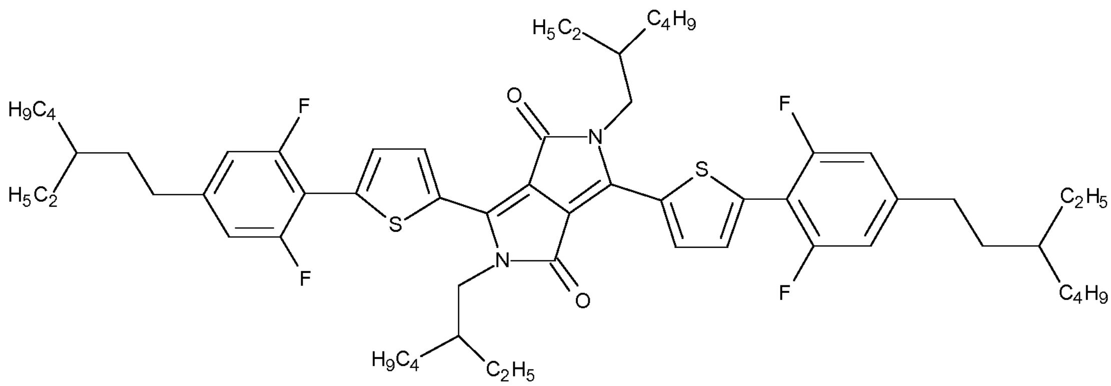 |
| 44 |

(fortgesetzt)

| |
|---|
| 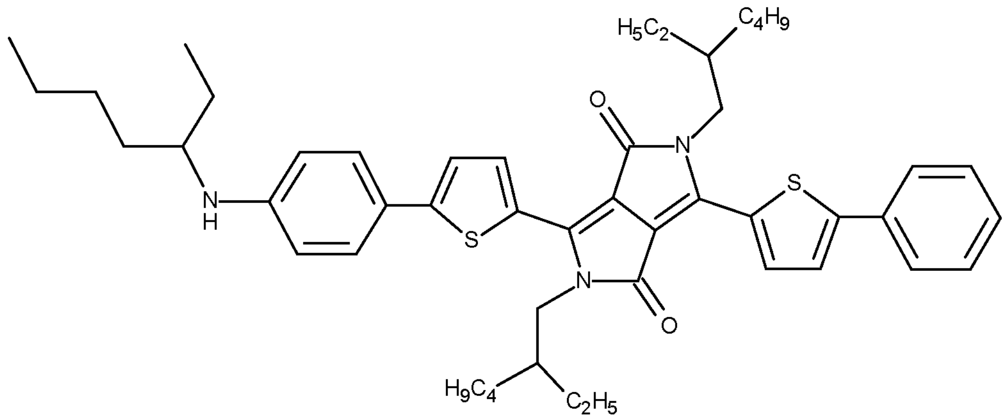 |
| 45 |
| 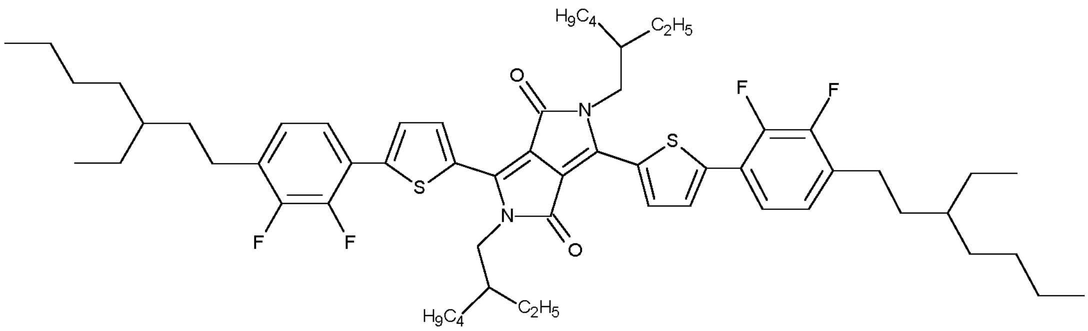 |
| 46 |
| 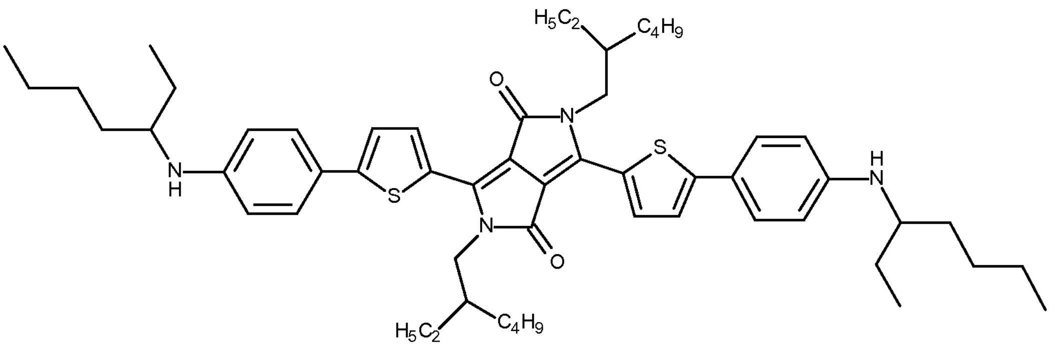 |
| 47 |
| 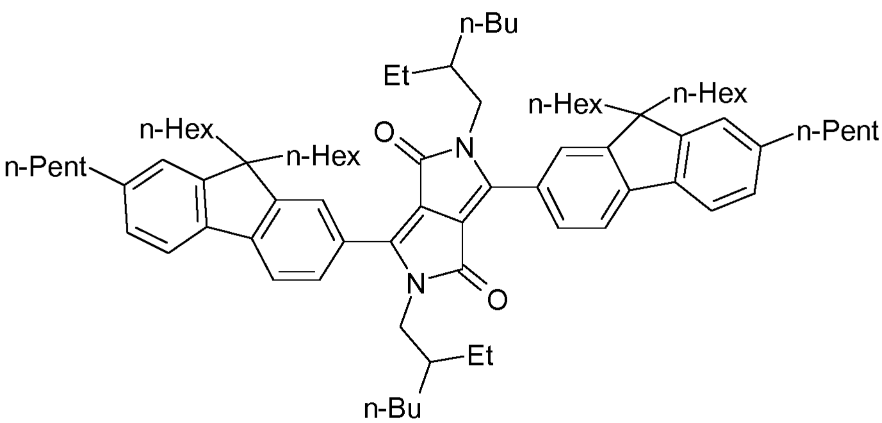 |

(fortgesetzt)

| |
|---|
| 48 |
| 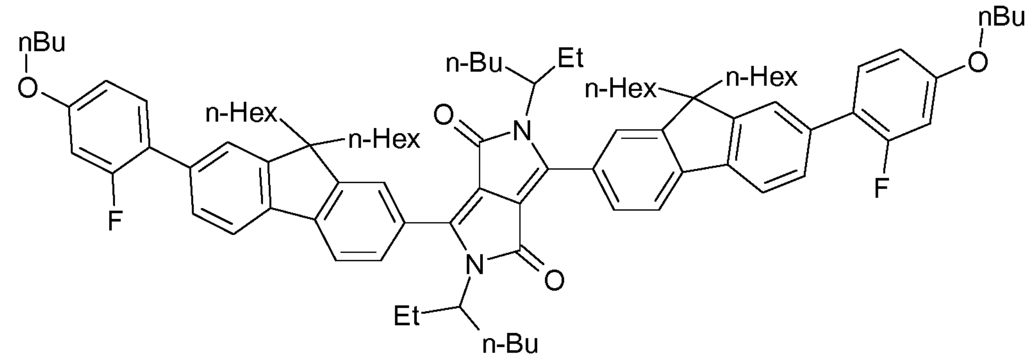 |
| 49 |
| 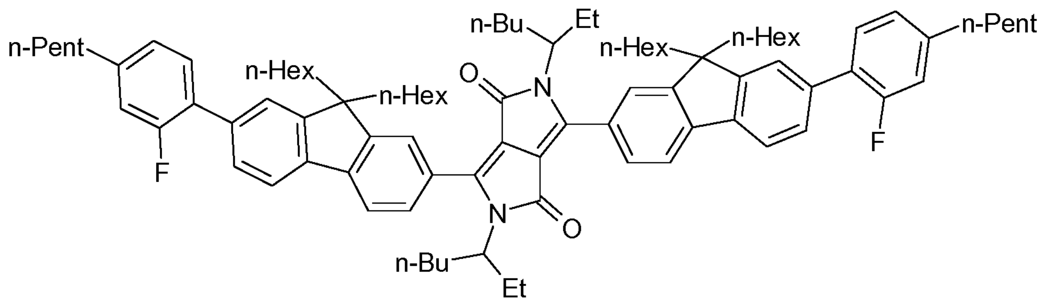 |
| 50 |
| 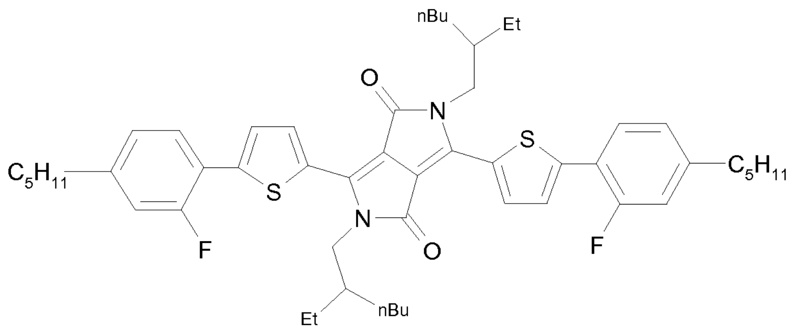 |
| 51 |
| 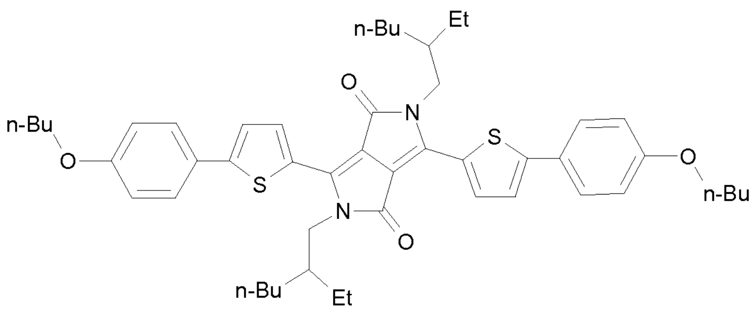 |
| 52 |

(fortgesetzt)

| |
|---|
| 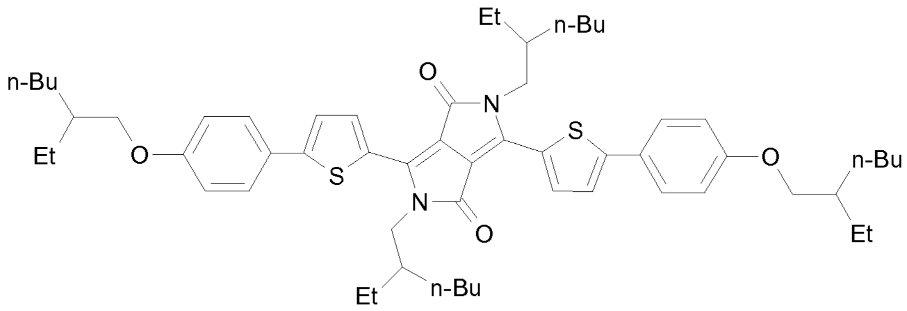 |
| 53 |
| 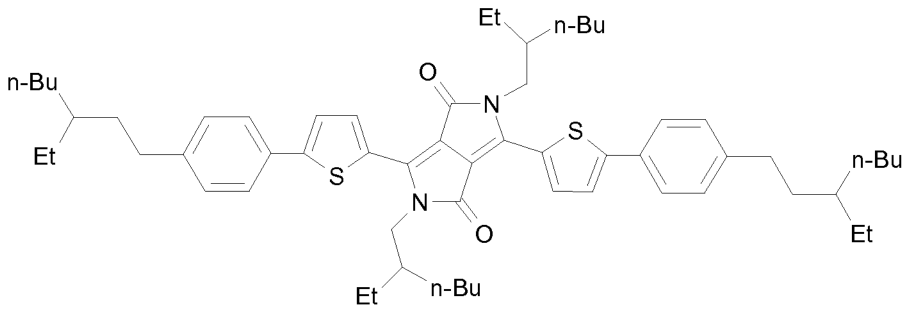 |
| 54 |
| 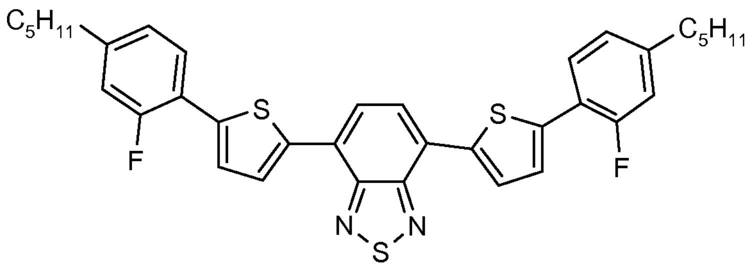 |
| 55 |
| 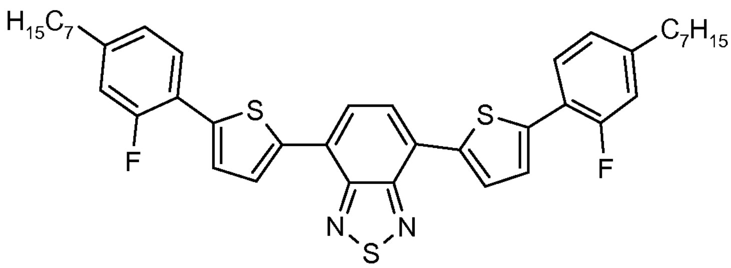 |
| 56 |
| 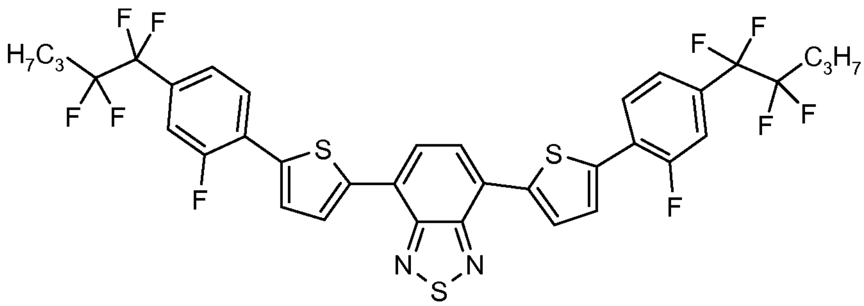 |

(fortgesetzt)

| |
|---|
| 57 |
| 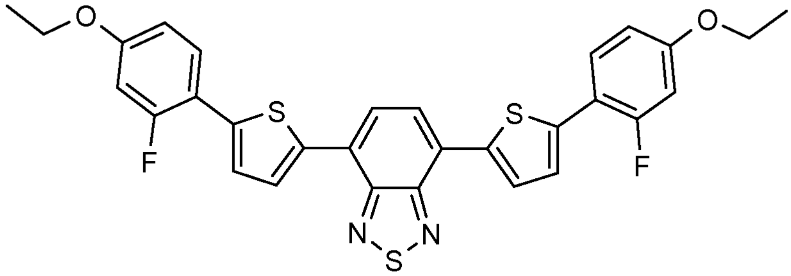 |
| 58 |
| 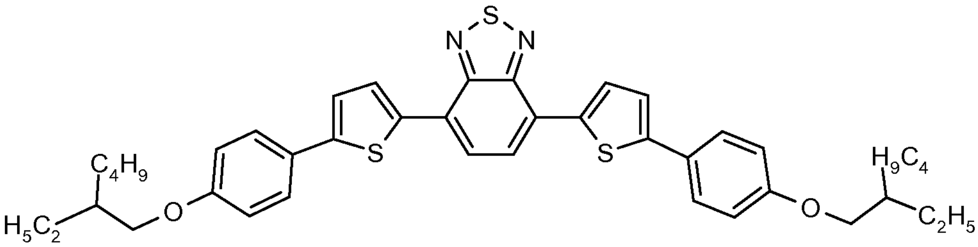 |
| 59 |
| 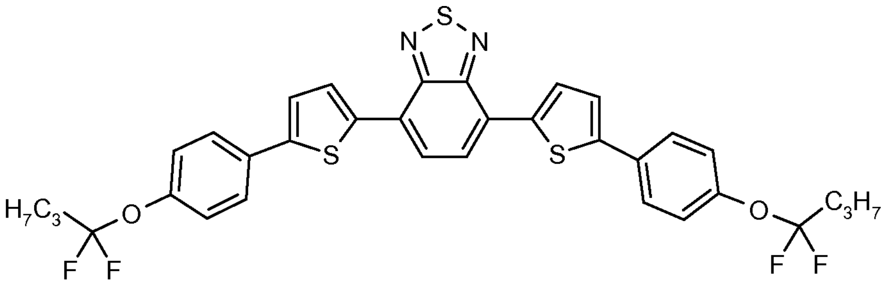 |
| 60 |
| 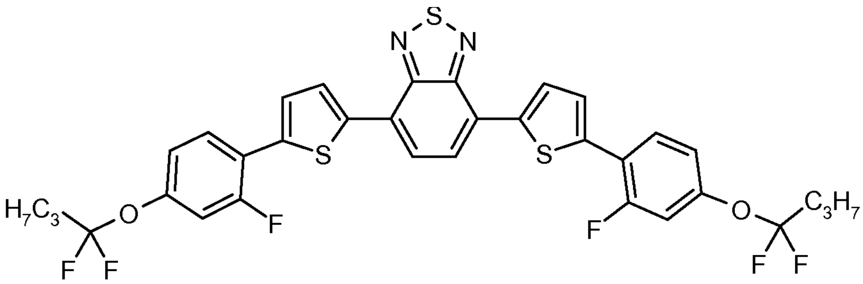 |
| 61 |
| 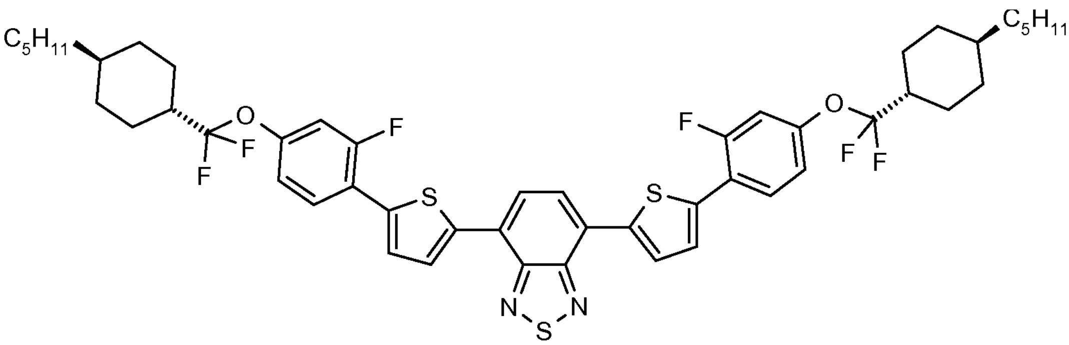 |

(fortgesetzt)

| |
|---|
| 62 |
| 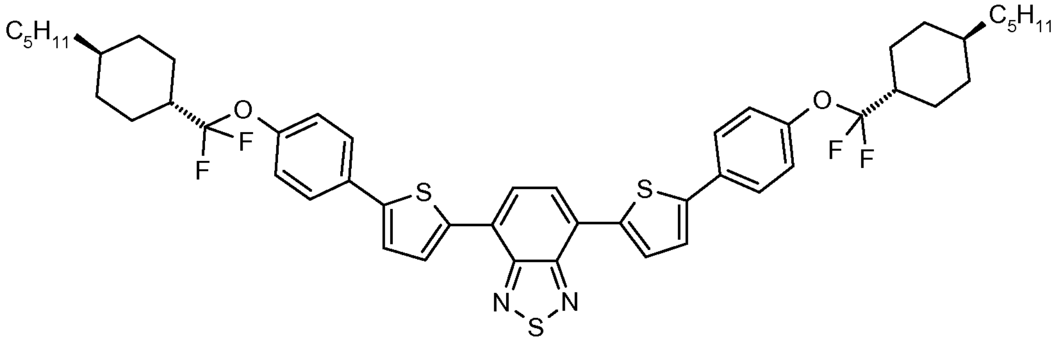 |
| 63 |
| 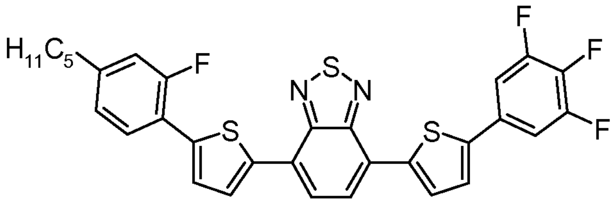 |
| 64 |
| 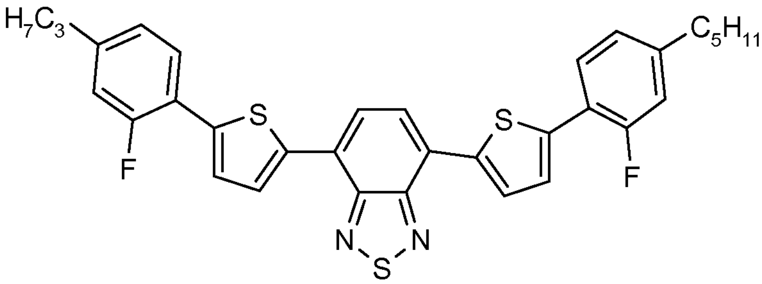 |
| 65 |
| 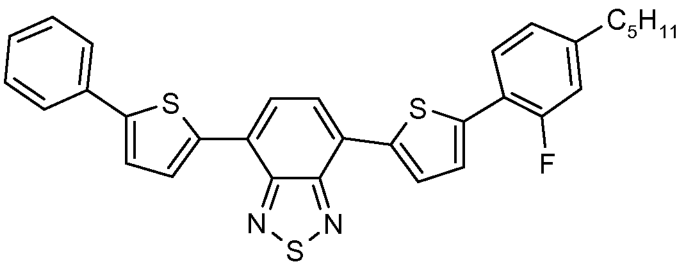 |
| 66 |
| 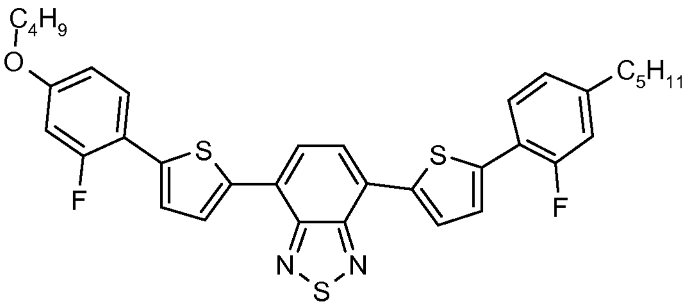 |

(fortgesetzt)

| |
|---|
| 67 |
| 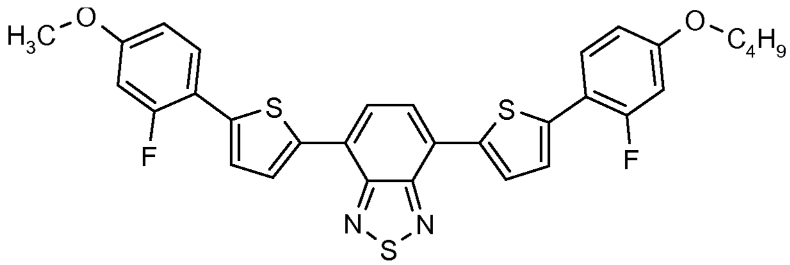 |
| 68 |
| 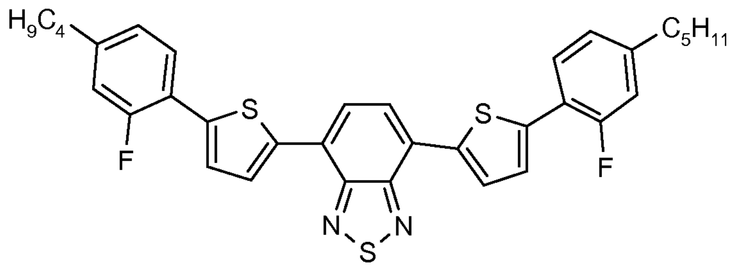 |
| 69 |
| 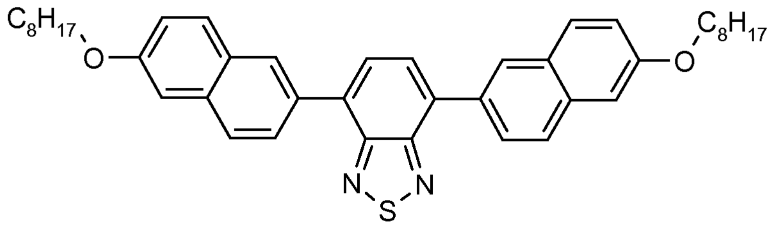 |
| 70 |
| 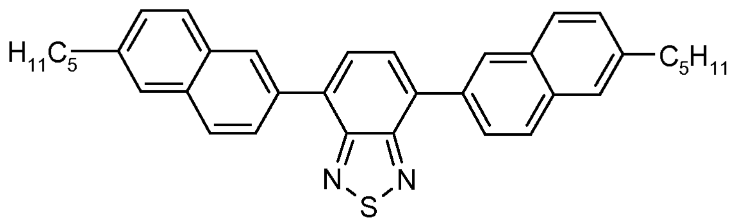 |
| 71 |
| 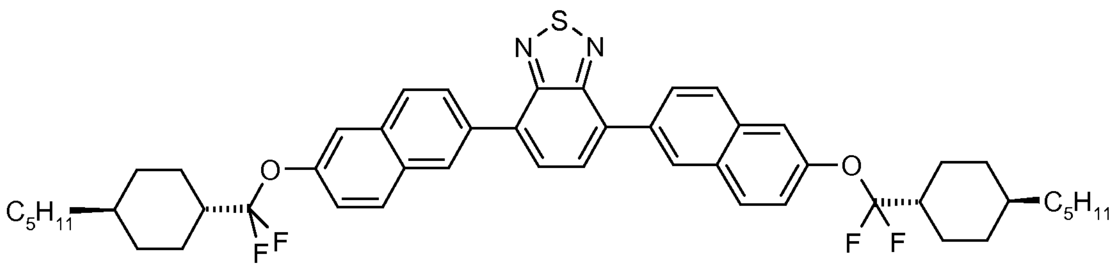 |
| 72 |

(fortgesetzt)

| |
|---|
| 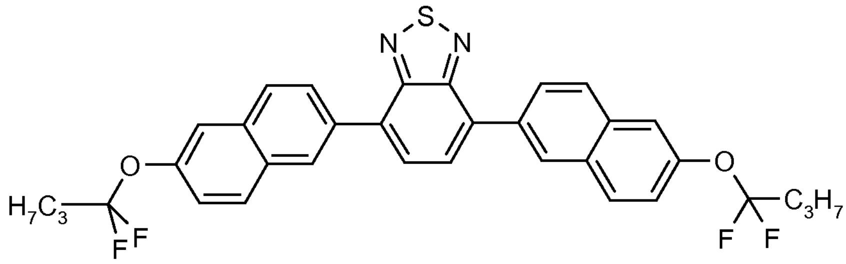 |
| 73 |
| 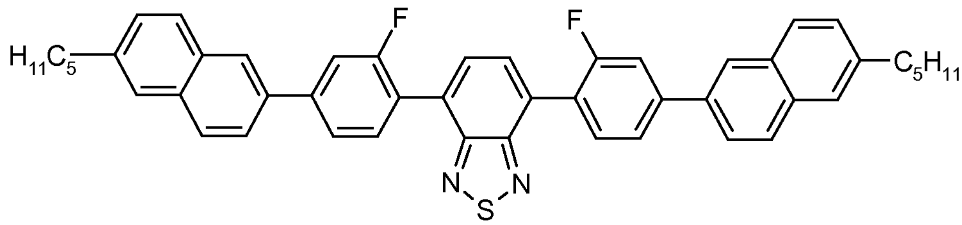 |
| 74 |
| 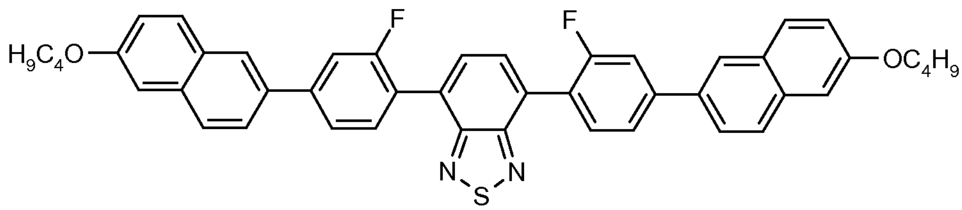 |
| 75 |
| 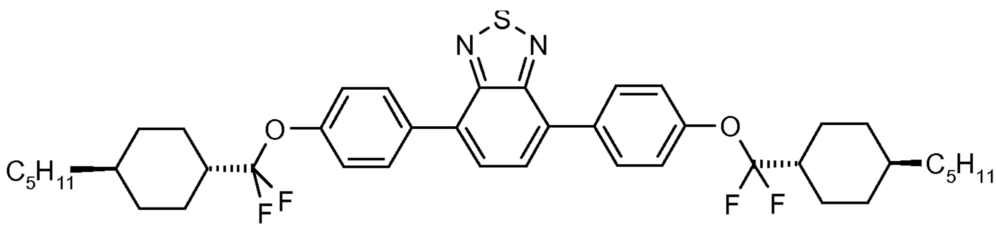 |
| 76 |
| 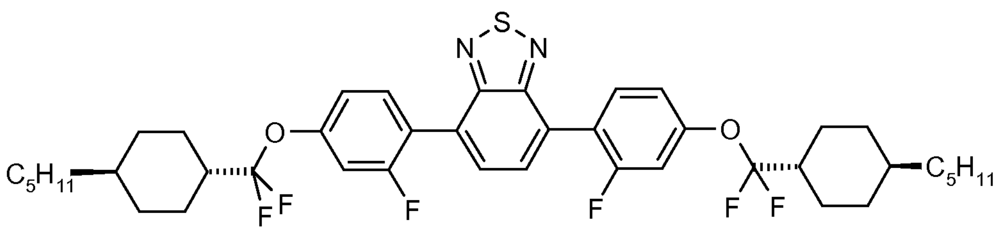 |
| 77 |
| 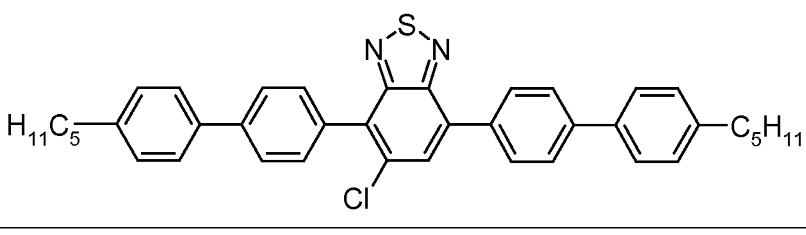 |
| 78 |

(fortgesetzt)

| |
|---|
| 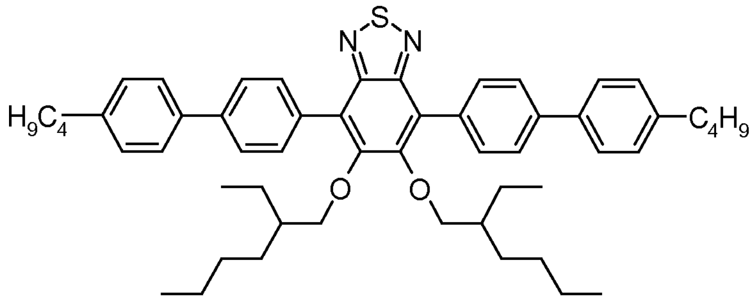 |
| 79 |
| 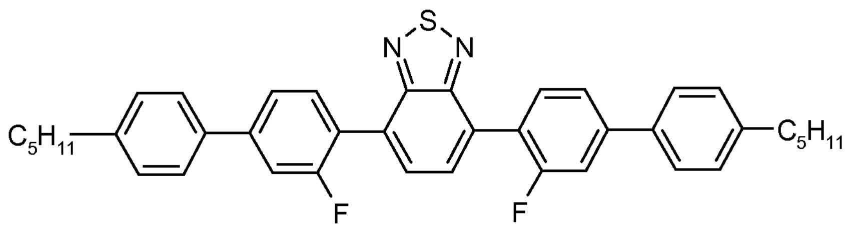 |
| 80 |
| 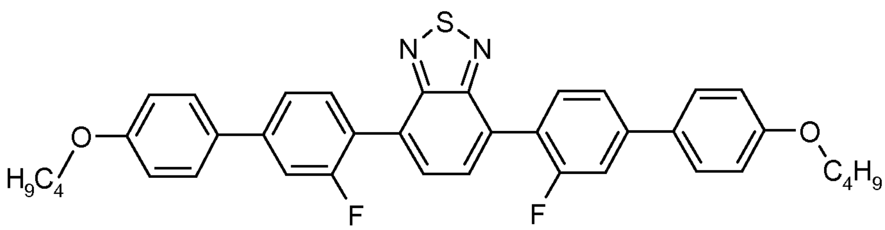 |
| 81 |
| 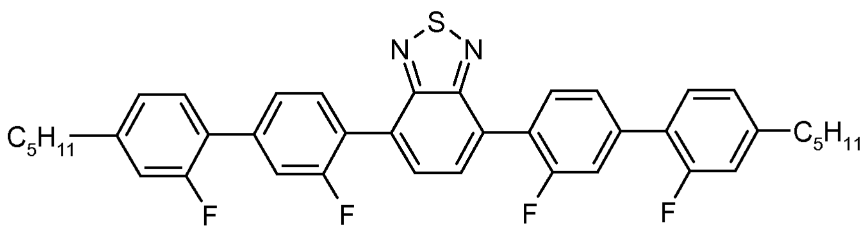 |
| 82 |
| 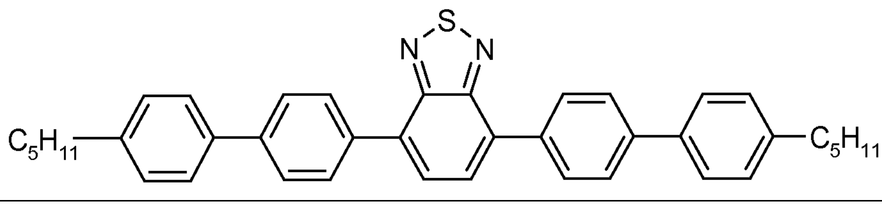 |
| 83 |
| 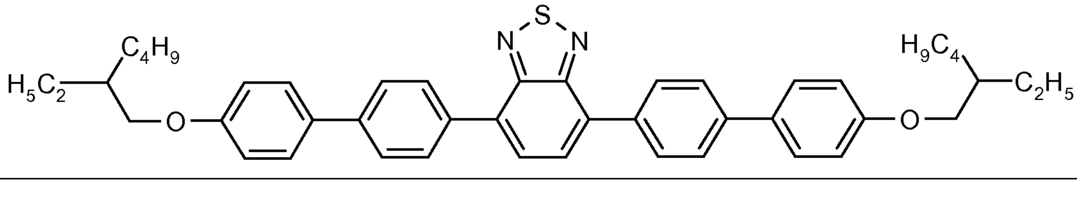 |
| 84 |

(fortgesetzt)

| |
|---|
| 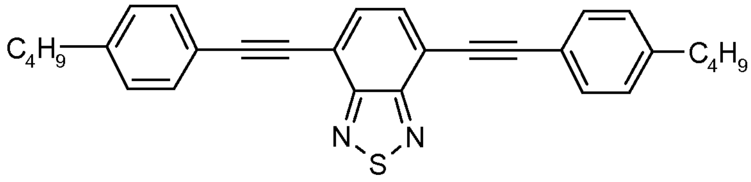 |
| 85 |
| 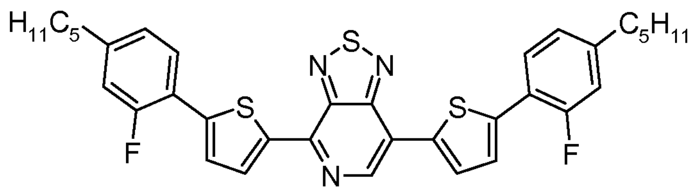 |
| 86 |
| 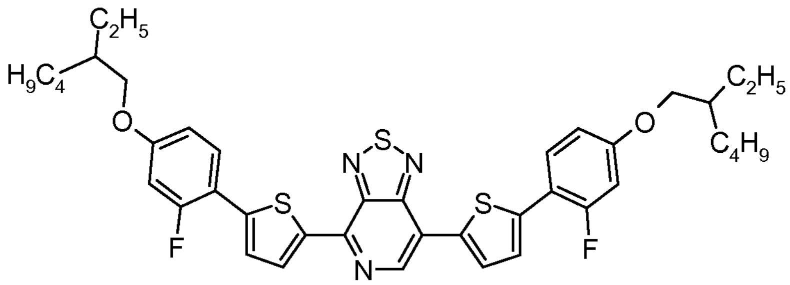 |
| 87 |
| 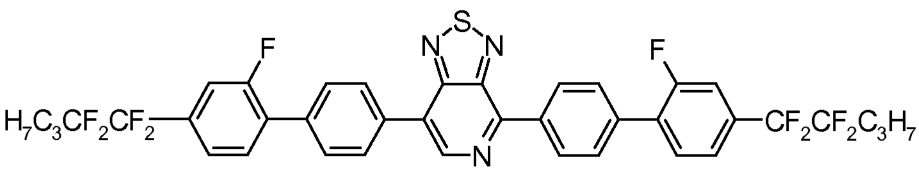 |
| 88 |
| 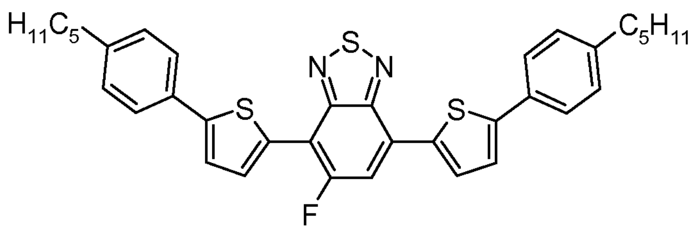 |
| 89 |
| 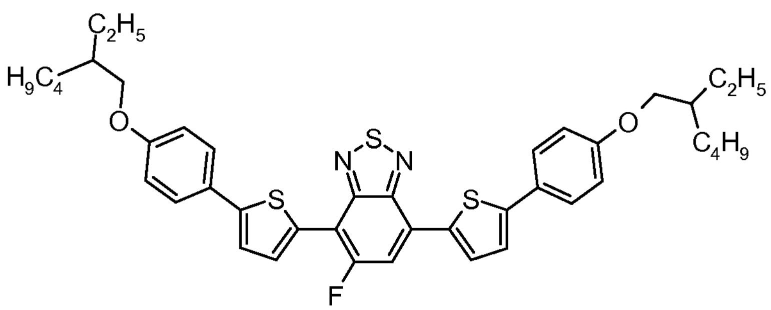 |
| 90 |

(fortgesetzt)

| |
|---|
| 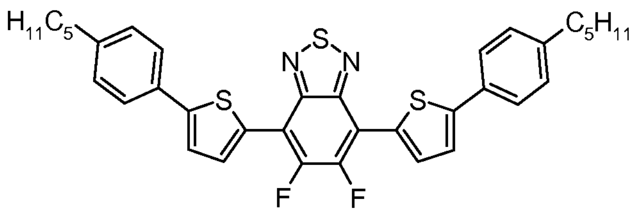 |
| 91 |
| 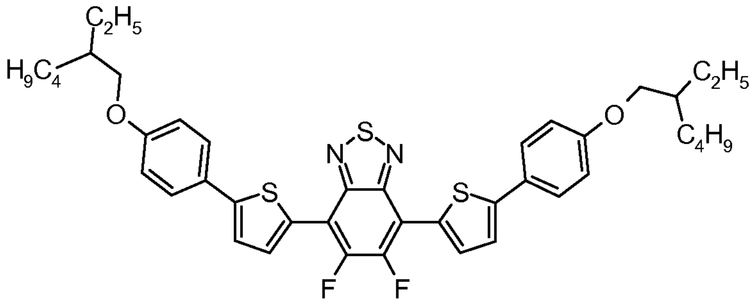 |
| 92 |
| 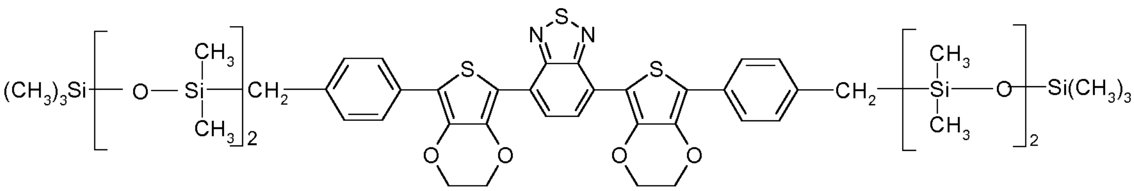 |
| 93 |
| 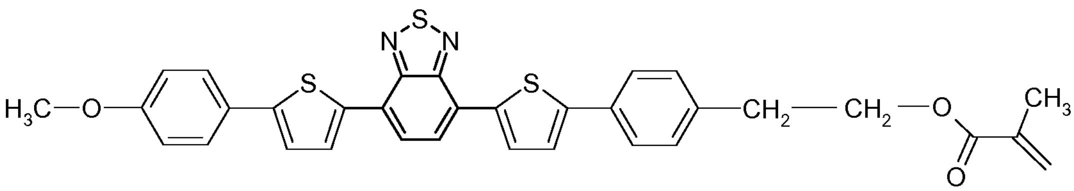 |
| 94 |
| 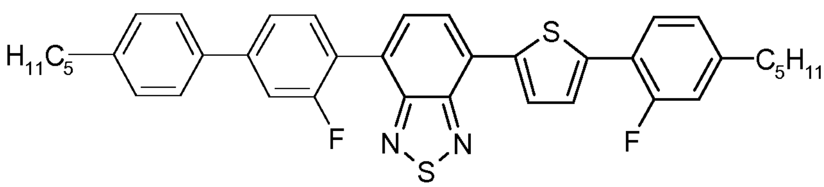 |
| 95 |
| 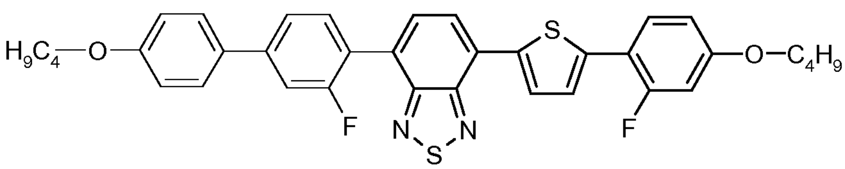 |
| 96 |

(fortgesetzt)

| |
|---|
| 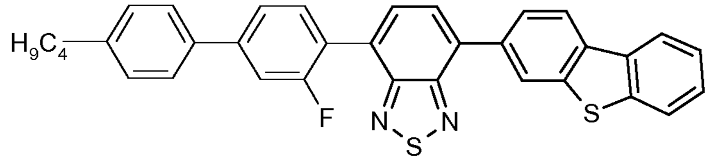 |
| 97 |
| 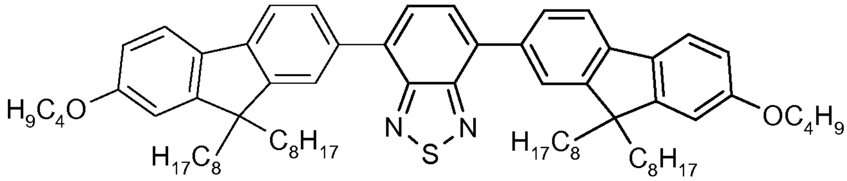 |
| 98 |
| 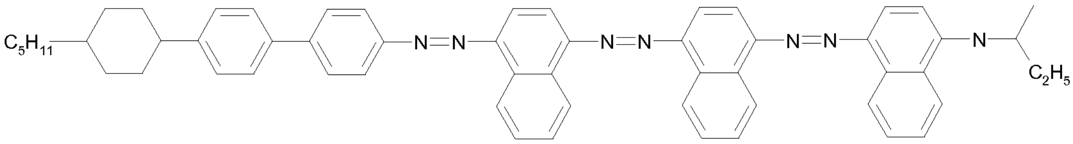 |
| 99 |
| 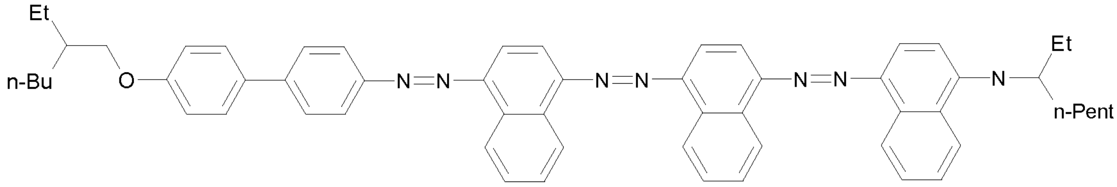 |
| 100 |
| 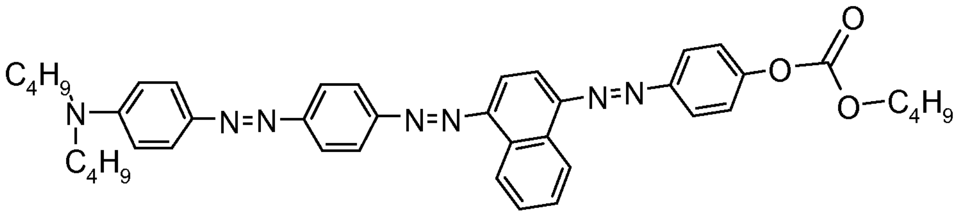 |
| 101 |
| 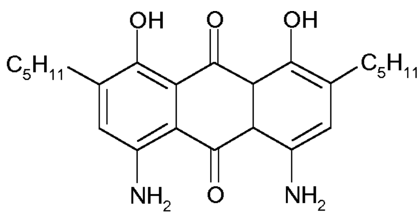 |
| 102 |
| 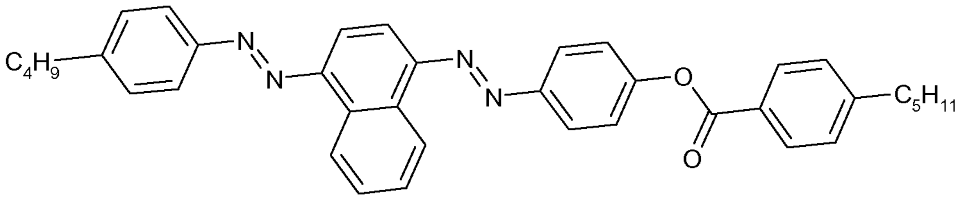 |

(fortgesetzt)

| |
|---|
| 103 |
| 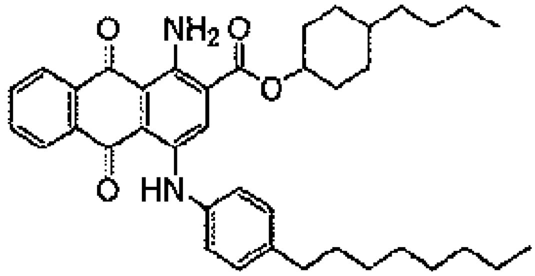 |
| 104 |
| 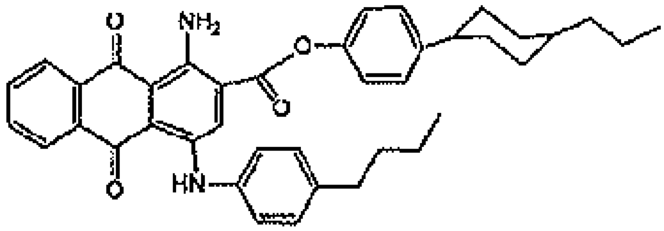 |
| 105 |
| 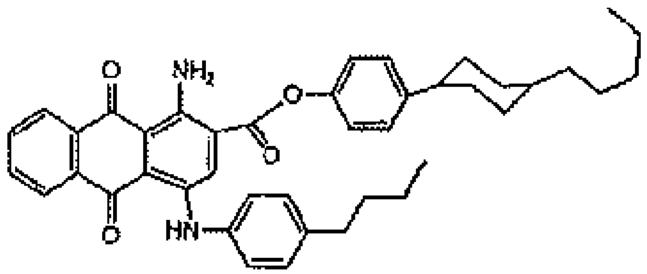 |
| 106 |

Das flüssigkristalline Material enthält bevorzugt einen chiralen Dotierstoff. Chirale Dotierstoffe werden bevorzugt in einer Gesamtkonzentration von 0.01 Gew.-% bis 3 Gew.-%, besonders bevorzugt von 0.05 Gew.-% bis 1 Gew.-% eingesetzt. Um hohe Werte für die Verdrillung der Moleküle des flüssigkristallinen Materials zu erhalten, kann die Gesamtkonzentration der chiralen Dotierstoffe auch höher als 3 Gew.-% gewählt werden, bevorzugt bis maximal 15 Gew.-%.

Bevorzugte chirale Dotierstoffe sind die in der folgenden Tabelle abgebildeten Verbindungen:

| |
|---|
| 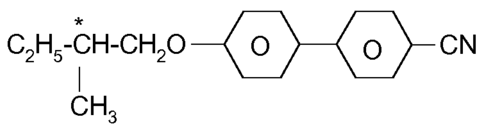 |
| CD1 |
| 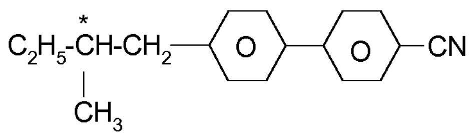 |
| CD2 |

(fortgesetzt)

| |
|---|
| 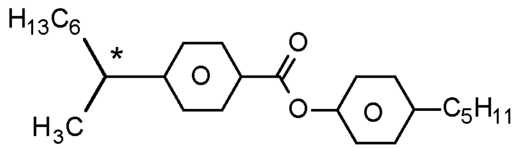 |
| CD3 |
| 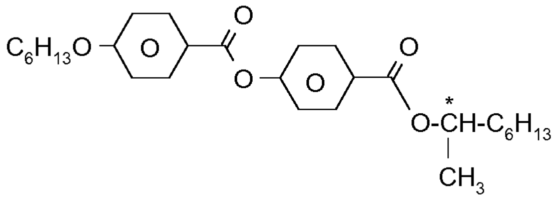 |
| CD4 |
| 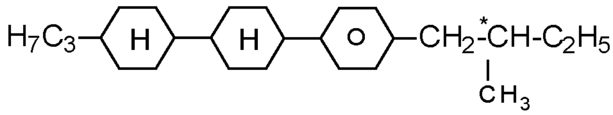 |
| CD5 |
| 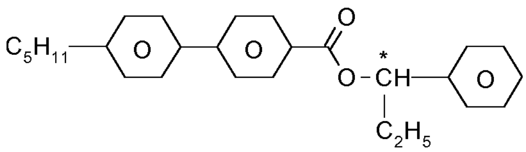 |
| CD6 |
| 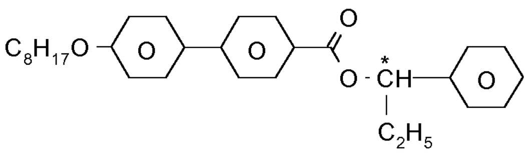 |
| CD7 |
| 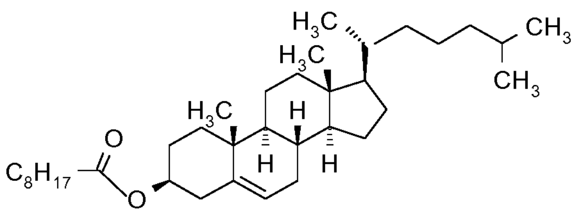 |
| CD8 |
| 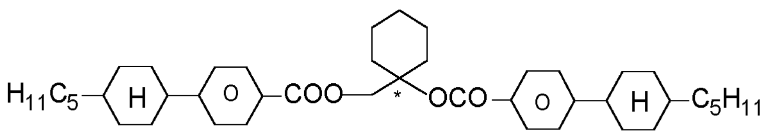 |
| CD9 |
| 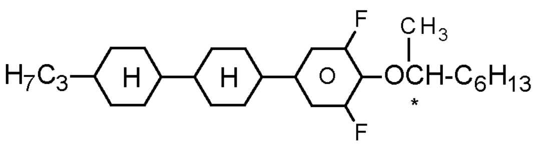 |

(fortgesetzt)

| CD10 |
|---|
| 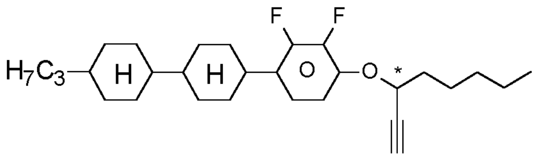 |
| CD11 |
| 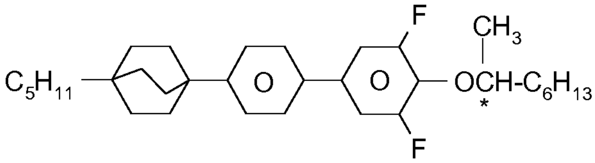 |
| CD12 |
| 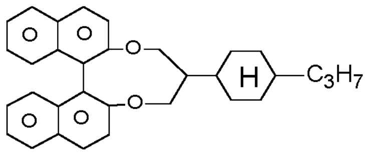 |
| CD13 |

Das flüssigkristalline Material kann grundsätzlich in einer beliebigen optischen Schaltvorrichtung verwendet werden. Die optische Schaltvorrichtung kann in Anzeigevorrichtungen oder in schaltbaren Fenstern verwendet werden. Bevorzugt ist die Verwendung in schaltbaren Fenstern, inbesondere in schaltbaren Fenstern, welche eine schaltbare Schicht enthaltend das erfindungsgemäße flüssigkristalline Material enthalten.

Bevorzugt ist die Verwendung des flüssigkristallinen Materials in einer Vorrichtung zur Regulierung des Durchtritts von Sonnenlicht.

Weiterer Gegenstand der Erfindung ist damit eine optische Schaltvorrichtung zur Regulierung des Durchtritts von Sonnenlicht, enthaltend eine Schicht eines flüssigkristallinen Materials, dadurch gekennzeichnet, dass das flüssigkristalline Material eine Verbindung (I), wie oben definiert, und einen Farbstoff enthält. Bevorzugt reguliert die optische Schaltvorrichtung den Lichtdurchtritt durch ein Flächenelement. Weiterhin bevorzugt erfolgt die Regulierung des Lichtdurchtritts homogen über die Fläche des Flächenelements. Unter homogener Regulierung wird dabei verstanden, dass die Transmission an allen Stellen innerhalb des Flächenelements weitgehend gleich hoch ist.

Das Flächenelement hat dabei bevorzugt eine Ausdehnung von mindestens 0.05 $m^2$, besonders bevorzugt mindestens 0.1 $m^2$, besonders bevorzugt mindestens 0.5 $m^2$ und ganz besonders bevorzugt mindestens 0.8 $m^2$.

Das flüssigkristalline Material liegt in der Vorrichtung bevorzugt in einer Schicht vor. Diese Schicht ist bevorzugt schaltbar, das heißt in ihrer Lichtdurchlässigkeit einstellbar, und wird daher auch als Schaltschicht bezeichnet. Die Schicht weist bevorzugt eine Dicke von 12 bis 40 $\mu$m, besonders bevorzugt von 14 bis 30 $\mu$m und ganz besonders bevorzugt von 15 bis 25 $\mu$m auf.

Die erfindungsgemäße Vorrichtung ist bevorzugt zur Regulierung des Lichtdurchtritts in Form von Sonnenlicht von der Umgebung in einen Raum hinein geeignet. Der Raum kann dabei ein beliebiger weitgehend von der Umgebung abgeschlossener Raum sein, beispielsweise ein Gebäude, ein Fahrzeug, oder ein Container. Die Vorrichtung kann allgemein für beliebige Räume verwendet werden, besonders wenn diese nur begrenzten Luftaustausch mit der Umgebung aufweisen und lichtdurchlässige Begrenzungsflächen aufweisen, durch die Energie-Eintrag von außen in Form von Lichtenergie stattfinden kann. Besonders bevorzugt ist die Verwendung der Vorrichtung für Räume, welche starker Sonneneinstrahlung durch lichtdurchlässige Flächen, beispielsweise durch Fensterflächen, ausgesetzt sind. Beispiele hierfür sind Räume mit großen Fensterflächen nach außen und die Innenräume von Fahrzeugen, insbesondere von Autos.

Die erfindungsgemäße Vorrichtung ist bevorzugt in einer Öffnung einer größeren flächigen Struktur angeordnet, wobei die flächige Struktur selbst nicht oder nur geringfügig Lichtdurchtritt zulässt, und wobei die Öffnung relativ gesehen lichtdurchlässiger ist. Bevorzugt ist die flächige Struktur eine Wand oder eine sonstige Begrenzung eines Raums nach außen.

Die erfindungsgemäße Vorrichtung ist schaltbar. Unter Schaltung wird dabei eine Änderung des Lichtdurchtritts

durch die Vorrichtung verstanden. Die erfindungsgemäße Vorrichtung ist bevorzugt elektrisch schaltbar. In diesem Fall umfasst sie bevorzugt zwei oder mehr Elektroden, die zu beiden Seiten der Schicht enthaltend das flüssigkristalline Material angebracht sind. Die Elektroden bestehen bevorzugt aus ITO oder aus einer dünnen, bevorzugt transparenten Metall- und/oder Metalloxidschicht, beispielsweise aus Silber oder FTO (Fluor-dotiertes Zinnoxid) oder einem alternativen, dem Fachmann für diese Verwendung bekannten Material. Die ITO-Elektroden können mit einer Passivierungsschicht, beispielsweise aus $SiO_2$, ausgestattet sein. Die Elektroden sind bevorzugt mit elektrischen Anschlüssen versehen. Die Spannung wird bevorzugt durch eine Batterie, einen Akkumulator, oder durch externe Stromversorgung bereitgestellt.

Der Schaltvorgang erfolgt im Fall von elektrischer Schaltung durch eine Ausrichtung der Moleküle des flüssigkristallinen Materials im flüssigkristallinen Zustand durch das Anlegen von Spannung.

In einer bevorzugten Ausführungsform wird dabei die Vorrichtung durch Anlegen einer Spannung von einem Zustand mit hoher Absorption, d. h. geringer Lichtdurchlässigkeit, der ohne Spannung vorliegt, in einen Zustand mit geringerer Absorption, d. h. höherer Lichtdurchlässigkeit, überführt. Bevorzugt ist das flüssigkristalline Material in der Schicht in der Vorrichtung in beiden Zuständen nematisch flüssigkristallin. Der spannungslose Zustand ist bevorzugt dadurch gekennzeichnet, dass die Moleküle des flüssigkristallinen Materials im flüssigkristallinen Zustand, und damit die Moleküle des Farbstoffs, parallel zur Ebene der Schaltschicht ausgerichtet vorliegen. Dies wird bevorzugt durch eine entsprechend gewählte Orientierungsschicht erreicht. Bevorzugt liegen die Moleküle in diesem Fall unverdrillt und parallel zur Ebene der Schaltschicht ausgerichtet vor. Der Zustand unter Spannung ist bevorzugt dadurch gekennzeichnet, dass die Moleküle des flüssigkristallinen Materials, und damit die Moleküle des Farbstoffs, senkrecht zur Ebene der Schaltschicht vorliegen.

Gemäß einer unter bestimmten Bedingungen bevorzugten Ausführungform liegen die Moleküle des flüssigkristallinen Materials im spannungslosen Zustand verdrillt nematisch und parallel zur Ebene der Schaltschicht vor. Im Zustand unter Spannung liegen sie senkrecht zur Ebene der Schaltschicht vor.

Gemäß einer alternativen, unter bestimmten Bedingungen ebenfalls bevorzugten Ausführungsform liegen die Moleküle im spannungslosen Zustand senkrecht zur Ebene der Schaltschicht vor. Dies wird bevorzugt durch entsprechend ausgestaltete Orientierungsschichten erreicht. Im Zustand unter Spannung liegen sie in diesem Fall parallel zur Ebene der Schaltschicht vor. Dabei können sie entweder verdrillt oder unverdrillt vorliegen.

Gemäß einer bevorzugten Ausführungsform der Erfindung kann die Vorrichtung ohne externe Stromversorgung betrieben werden, indem die nötige Energie durch eine Solarzelle oder eine sonstige Vorrichtung zur Umwandlung von Licht und/oder Wärmeenergie in elektrische Energie bereitgestellt wird, die mit der Vorrichtung verbunden ist. Die Bereitstellung der Energie durch die Solarzelle kann direkt oder indirekt, d. h. über eine dazwischengeschaltete Batterie oder Akkumulator oder sonstige Einheit zur Speicherung von Energie, erfolgen. Bevorzugt ist die Solarzelle außen an der Vorrichtung angebracht oder sie ist innerer Bestandteil der Vorrichtung, wie beispielsweise in WO 2009/141295 offenbart.

Die erfindungsgemäße Vorrichtung weist bevorzugt die folgende Schichtenabfolge auf, wobei zusätzlich weitere Schichten vorhanden sein können. Bevorzugt grenzen die im Folgenden angegebenen Schichten in der Vorrichtung direkt aneinander.

- Substratschicht, bevorzugt aus Glas oder Polymer
- elektrisch leitfähige transparente Schicht, bevorzugt aus ITO
- Orientierungsschicht
- Schaltschicht, enthaltend das erfindungsgemäße Material
- Orientierungsschicht
- elektrisch leitfähige transparente Schicht, bevorzugt aus ITO
- Substratschicht, bevorzugt aus Glas oder Polymer.

Bevorzugt ist eine Ausführungsform, die zwei hintereinander angeordnete LC-Zellen der oben angegebenen Schichtenabfolge umfasst, inbesondere wie in WO 2014/180525 offenbart.

Die bevorzugten Ausführungsformen der einzelnen Schichten werden im Folgenden dargestellt.

Bevorzugt umfasst die erfindungsgemäße Vorrichtung eine oder mehrere, besonders bevorzugt zwei Orientierungsschichten. Die Orientierungsschichten liegen bevorzugt direkt angrenzend an die beiden Seiten der Schicht enthaltend das flüssigkristalline Material vor.

Als Orientierungsschichten der erfindungsgemäßen Vorrichtung können beliebige dem Fachmann hierzu bekannte Schichten verwendet werden. Bevorzugt sind Polyimid-Schichten, besonders bevorzugt Schichten aus geriebenem Polyimid. Auf bestimmte, dem Fachmann bekannte Art geriebenes Polyimid führt zu einer Ausrichtung der Moleküle des flüssigkristallinen Materials im flüssigkristallinen Zustand in Reiberichtung, wenn die Moleküle parallel zur Orientierungsschicht vorliegen (planare Ausrichtung). Dabei ist es bevorzugt, dass die Moleküle des flüssigkristallinen Materials im flüssigkristallinen Zustand nicht völlig planar auf der Orientierungsschicht vorliegen, sondern einen leichten Aufstellwinkel aufweisen (pretilt). Zum Erreichen von vertikaler Ausrichtung der Moleküle zur Oberfläche der Orientierungsschicht (homeotrope Ausrichtung) wird bevorzugt auf bestimmte Art behandeltes Polyimid als Material für die Orientierungsschicht eingesetzt (Polyimid für sehr hohe Pretiltwinkel). Weiterhin können Polymere, die durch einen Belichtungsvorgang mit polarisiertem Licht erhalten wurden, als Orientierungsschicht zum Erreichen einer Ausrichtung der Moleküle gemäß einer Orientierungsachse verwendet werden (photoalignment).

Wenn Verdrillung der Moleküle des flüssigkristallinen Materials in mindestens einem Schaltzustand vorliegt, ist es bevorzugt, dass in der erfindungsgemäßen Vorrichtung die Reiberichtungen der beiden Orientierungsschichten, die die Schaltschicht enthaltend das flüssigkristalline Material umgeben, einen Winkel von 30° bis 270° einschließen.

Weiterhin bevorzugt ist in der erfindungsgemäßen Vorrichtung die Schicht enthaltend das flüssigkristalline Material zwischen zwei Substratschichten angeordnet bzw. von diesen eingeschlossen. Die Substratschichten können beispielsweise aus Glas oder einem Polymer, bevorzugt einem lichtdurchlässigen Polymer, bestehen.

Bevorzugt ist die Vorrichtung dadurch gekennzeichnet, dass sie genau einen Polarisator aufweist. Dieser ist bevorzugt ein Linearpolarisator.

Gemäß einer alternativen Ausführungsform umfasst die Vorrichtung keinen Polarisator auf Polymerbasis, besonders bevorzugt keinen in fester Materiephase vorliegenden Polarisator und ganz besonders bevorzugt überhaupt keinen Polarisator.

Weiterhin bevorzugt enthält erfindungsgemäße Vorrichtung ein Lichtleitsystem, das Licht zu einer Solarzelle oder einer sonstigen Vorrichtung zur Umwandlung von Licht und/oder Wärmeenergie in elektrische Energie leitet, bevorzugt wie in WO 2009/141295 beschrieben.

In einer bevorzugten Ausführungsform ist die erfindungsgemäße Vorrichtung Bestandteil eines in seiner Lichtdurchlässigkeit schaltbaren Fensters, besonders bevorzugt eines Fensters enthaltend mindestens eine Glasfläche, ganz besonders bevorzugt eines Fensters, welches Mehrscheiben-Isolierglas enthält.

Unter Fenster wird dabei insbesondere eine Struktur in einem Gebäude verstanden, welche einen Rahmen und mindestens eine von diesem Rahmen umfasste Glasscheibe enthält. Bevorzugt enthält sie einen wärmeisolierenden Rahmen und zwei oder mehr Glasscheiben (Mehrscheiben-Isolierglas).

Gemäß einer bevorzugten Ausführungsform ist die erfindungsgemäße Vorrichtung direkt auf einer Glasfläche eines Fensters aufgebracht, besonders bevorzugt im Zwischenraum zwischen zwei Glasscheiben von Mehrscheiben-Isolierglas.

Weiterhin wird die Vorrichtung bevorzugt als aktive, schaltende Komponente von teilweise lichttransparenten, schaltbaren Autodächern oder von schaltbaren Autofenstern verwendet.
Dabei ist die Schichtabfolge bevorzugt

- Polarisationsschicht
- Substratschicht, bevorzugt aus Glas oder Polymer
- elektrisch leitfähige transparente Schicht, bevorzugt aus ITO
- Orientierungsschicht
- Schaltschicht, enthaltend das erfindungsgemäße Material
- Orientierungsschicht
- elektrisch leitfähige transparente Schicht, bevorzugt aus ITO
- Substratschicht, bevorzugt aus Glas oder Polymer,

wobei die Polarisationsschicht nach außen gerichtet ist, hin zur Lichtquelle, insbesondere hin zur Sonne.

Es ist bevorzugt, dass sich zwischen Polarisator und Substratschicht eine oder mehrere weitere Schichten befinden. Bevorzugt kompensieren diese Schichten die unterschiedlichen thermischen Ausdehnungskoeffizienten von Polarisationsschicht und Substratschicht. Bevorzugt sind dafür Schichten gewählt aus Klebstoffschichten und Klebefilmen, beispielsweise Optically Clear Adhesive von 3M.

Alternativ kann sich die Polarisationsschicht auch zwischen den beiden Substratschichten oder auf der der Sonne abgewandten Seite der Vorrichtung befinden. In diesem Fall ist es bevorzugt, dass die auf der Außenseite der Schaltschicht liegenden Schichten UV-Licht absorbieren. Insbesondere ist es bevorzugt, dass die Substratschicht UV-absorbierende Additive enthält, oder dass ein UV-Filter auf der Substratschicht aufgebracht ist.

Bevorzugt sind die Substratschichten optisch anisotrop. Insbesondere sind sie nicht oder nur gering doppelbrechend. Bevorzugt weisen sie keine oder nur eine geringe Spannungsdoppelbrechung auf. Dies ist insbesondere mit Substratschichten aus Polymer erreichbar.

Weiterhin ist es im Fall der Verwendung der Vorrichtung in schaltbaren Autodächern oder Autofenstern bevorzugt, dass die Vorrichtung nicht eben, sondern im Raum gekrümmt ist. Dies wird bevorzugt durch die Verwendung gekrümmter Substratschichten erreicht.

**Ausführungsbeispiele**

1) Herstellung der flüssigkristallinen Mischungen

Als Grundmischung wird die folgende Mischung M1 verwendet:

| Zusammensetzung der Hostmischung M1 | | |
|---|---|---|
| Klärpunkt | 114.5 °C | |
| Delta-n | 0.1342 | |
| $n_e$ | 1.6293 | |
| $n_o$ | 1.4951 | |
| Zusammensetzung | Verbindung | Gew.-% |
| | CPG-3-F | 5 |
| | CPG-5-F | 5 |
| | CPU-3-F | 15 |
| | CPU-5-F | 15 |
| | CP-3-N | 16 |
| | CP-5-N | 16 |
| | CCGU-3-F | 7 |
| | CGPC-3-3 | 4 |
| | CGPC-5-3 | 4 |
| | CGPC-5-5 | 4 |
| | CCZPC-3-3 | 3 |
| | CCZPC-3-4 | 3 |
| | CCZPC-3-5 | 3 |

Die Mischung M1-F wird erhalten, indem zur Mischung M1 die Farbstoffe F1, F2 und F3 in den angegebenen Mengenanteilen zugegeben werden:

| Farbstoff | Mengenanteil (Gew.-%) |
|---|---|
| F1 | 0.385 |
| F2 | 0.73 |
| F3 | 0.84 |

Strukturen der Farbstoffe:

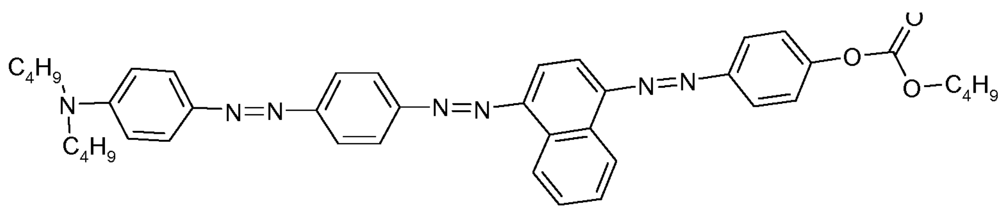

F1

(fortgesetzt)

| |
|---|
| 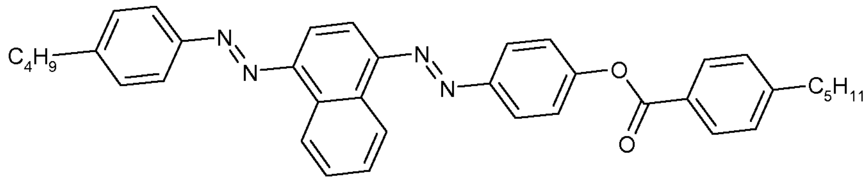 |
| F2 |
| 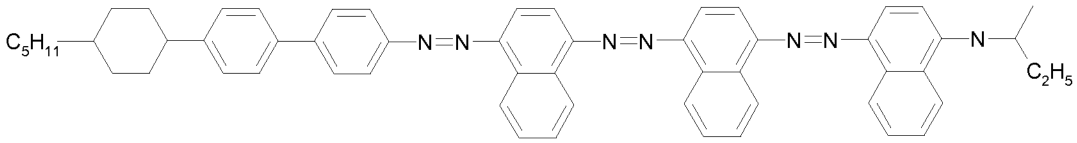 |
| F3 |

Aus der Mischung M1-F werden durch Zugabe der Additive A1 und/oder A2 die folgenden flüssigkristallinen Mischungen hergestellt:

| | Anteil Verbindung A1 (Gew.-%) | Anteil Verbindung A2 (Gew.-%) |
|---|---|---|
| LC1 | 0.03 | 0 |
| LC2 | 0.06 | 0 |
| LC3 | 0.1 | 0 |
| LC4 | 0.25 | 0 |
| LC5 | 0.5 | 0 |
| LC6 | 0.1 | 0.1 |
| LC7 | 0.1 | 0.03 |
| LC8 | 0.15 | 0.05 |
| LC9 | 0.05 | 0.15 |
| LC10 | 0.15 | 0.15 |

Weiterhin werden die folgenden flüssigkristallinen Mischungen als Referenz hergestellt:

| | Anteil Verbindung A2 (Gew.-%) | Anteil Verbindung A3 (Gew.-%) | Anteil Verbindung A4 (Gew.-%) |
|---|---|---|---|
| V-LC1 | 0.03 | 0 | 0 |
| V-LC2 | 0.1 | 0 | 0 |
| V-LC3 | 0 | 0.1 | 0 |
| V-LC4 | 0 | 0 | 0.1 |

Die Additive A1, A2, A3 und A4 haben die folgenden Strukturen:

| |
|---|
| 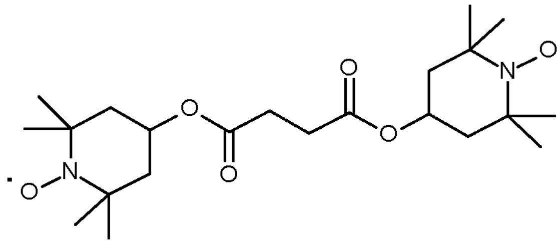 |
| A1 |
| 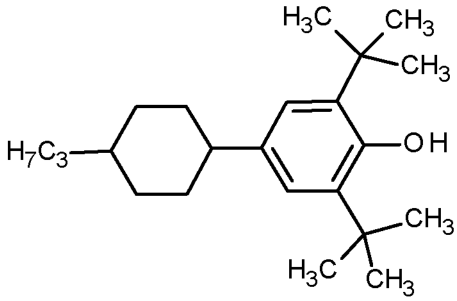 |
| A2 |
| 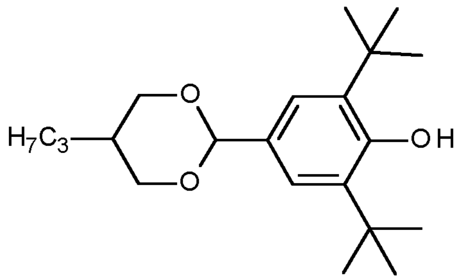 |
| A3 |
| 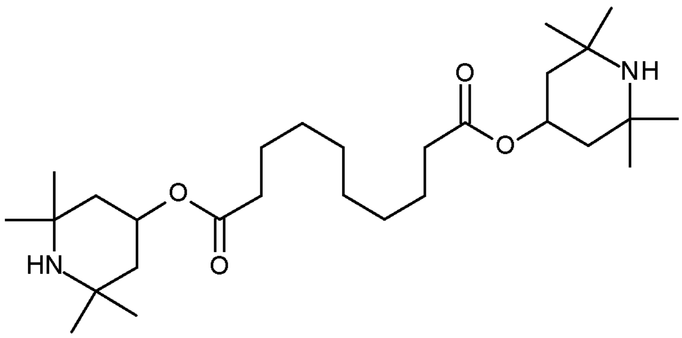 |
| A4 |

Die Mischungen werden in LC-Zellen mit Polyimid-Orientierungsschichten (antiparallel gerieben, Polyimid AL-1054 für planare Orientierung) gefüllt. Die Schichtdicke der Schicht enthaltend die Mischungen beträgt 25 μm. Die Zellen werden mit UV-Kleber (Norland) versiegelt.

Der Lichtbelastungstest wird an den Zellen wie folgt durchgeführt:

Die Zellen werden spektroskopisch vermessen (Anfangswert). Dann wird in einem Suntest CPS+ von MTS Atlas mit der Einstellung Black Standard Temperature 70°C (=Oberflächentemperatur der Proben) und unter Verwendung eines UV-Kantenfilters GG400 der Firma Schott, der die Probe hermetisch gegen kürzerwelliges UV-Licht abschirmt, für 16 Wochen lichtbelastet.

Der Hitzebelastungstest wird an den Zellen wie folgt durchgeführt:

Die Proben werden spektroskopisch vermessen (Anfangswert) und dann für 7 Tage in einem Ofen mit 100°C gelagert. Anschließend wird erneut das Spektrum bei Raumtemperatur ermittelt.

Bestimmung der Farbwerte und des Farbabstands ΔE*:

Aus den Transmissionskurven der jeweiligen Spektren werden die Werte x, y, und z gemäß M. Richter, Einführung in die Farbmetrik (Sammlung Göschen, Band 2608) ermittelt. Aus den Werten x, y und z werden L*,a*,b* und daraus dann die entsprechenden Differenzen ΔL*, Δa* und Δb* ermittelt, gemäß M. Richter, Einführung in die Farbmetrik. Das verwendete Spektrometer ist ein Perkin Elmer Lambda 1050.

Der im Lab-Farbraum berechnete Farbabstand (Farbdifferenz) ΔE* wird schließlich wie folgt berechnet:

$$\Delta E^* = [\ (\Delta L^*)^2 + (\Delta a^*)^2 + (\Delta b^*)^2\ ]^{0.5}$$

Es werden die folgenden Ergebnisse für die hergestellten Zellen erhalten:

| Vorrichtung enthaltend | ΔE* nach Lichtbelastungstest | ΔE* nach Hitzebelastungstest |
|---|---|---|
| LC1 | 6 | 5.3 |
| LC2 | 5.5 | 5.4 |
| LC3 | 3.1 | 5.5 |
| LC4 | 1.8 | 5.4 |
| LC5 | 4.1 | 5.3 |
| LC6 | 3.1 | 0.3 |
| LC7 | 2.9 | 1.1 |
| LC8 | 2.8 | 0.6 |
| LC9 | 4.9 | 0.5 |
| LC10 | 2.9 | 0.5 |

Es werden die folgenden Ergebnisse für Vorrichtungen enthaltend die Referenzmischungen erhalten:

| Vorrichtung enthaltend | ΔE* nach Lichtbelastungstest | ΔE* nach Hitzebelastungstest |
|---|---|---|
| V-LC1 | 17.6 | 0.3 |
| V-LC2 | 15.1 | 0.15 |
| V-LC3 | 18.8 | n.d. |
| V-LC4 | 15.9 | n.d. |
| M1-F (ohne Additive) | 23.0 | n.d. |

Die erhaltenen Ergebnisse zeigen, dass im Lichtbelastungstest für die Vorrichtungen, die Mischungen mit dem Additiv A1 enthalten (LC1 bis LC5), gute Werte für die Farbdifferenz ΔE* erhalten werden.

Auch im Hitzestabilitätstest werden mit dem Additiv A1 relativ gute Werte für die Farbdifferenz ΔE* erhalten.

Für die Referenz-Vorrichtungen, die Mischungen enthaltend die Additive A2, A3 oder A4 enthalten, werden hingegen sehr schlechte Werte für die Farbdifferenz ΔE* im Lichtbelastungstest erhalten (V-LC1 bis V-LC4), die nicht akzeptabel sind. Gleiches gilt für die Mischung M1-F ohne stabilisierende Additive.

Mit Vorrichtungen, die beide Additive A1 und A2 enthalten (LC6 bis LC10), werden sehr gute Werte für die Farbdifferenz ΔE* sowohl im Lichtstabilitätstest als auch im Hitzestabilitätstest erhalten. Diese übertreffen nochmals die guten Werte, die mit dem Additiv A1 allein erhalten werden.

## Patentansprüche

1. Optische Schaltvorrichtung zur Regulierung des Durchtritts von Sonnenlicht, enthaltend eine Schicht enthaltend ein

flüssigkristallines Material, **dadurch gekennzeichnet, dass** das flüssigkristalline Material einen Farbstoff und eine Verbindung (I), enthaltend eine sterisch gehinderte Gruppe der Formel (1-1-1), enthält

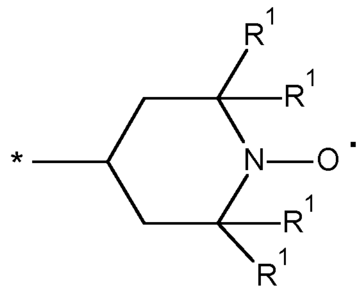

Formel (1-1-1),

wobei die mit * markierte Bindung die Bindung ist, mit der die Gruppe der Formel (1-1-1) mit dem übrigen Teil der Verbindung verbunden ist, und
wobei $R^1$ Methyl ist.

**2.** Optische Schaltvorrichtung nach Anspruch 1, **dadurch gekennzeichnet, dass** die Verbindung (I) einer Formel (I)

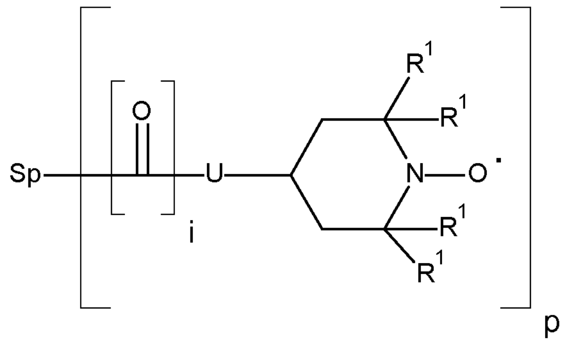

Formel (I),

entspricht, wobei für die auftretenden Variablen gilt:

U ist bei jedem Auftreten gleich oder verschieden gewählt aus $-CH_2-$, -O-, -S- und -NH-;
Sp ist gewählt aus Alkylengruppen mit 2 bis 10 C-Atomen, die jeweils mit einem oder mehreren Resten $R^4$ substituiert sein können, Alkenylengruppen mit 2 bis 10 C-Atomen, die jeweils mit einem oder mehreren Resten $R^4$ substituiert sein können, Alkinylengruppen mit 2 bis 10 C-Atomen, die jeweils mit einem oder mehreren Resten $R^4$ substituiert sein können, Arylgruppen mit 6 bis 40 aromatischen Ringatomen, die jeweils mit einem oder mehreren Resten $R^4$ substituiert sein können, und Heteroarylgruppen mit 5 bis 40 aromatischen Ringatomen, die jeweils mit einem oder mehreren Resten $R^4$ substituiert sein können;
$R^1$ ist wie in Anspruch 1 definiert;
$R^4$ ist bei jedem Auftreten gleich oder verschieden gewählt aus H, D, F, CN, Alkyl- oder Alkoxygruppen mit 1 bis 20 C-Atomen, Alkenyl- oder Alkinylgruppen mit 2 bis 20 C-Atomen, Arylgruppen mit 6 bis 40 aromatischen Ringatomen und Heteroarylgruppen mit 5 bis 40 aromatischen Ringatomen; wobei zwei oder mehr Reste $R^4$ miteinander verknüpft sein können und einen Ring bilden können; und wobei die genannten Alkyl-, Alkoxy-, Alkenyl- und Alkinylgruppen, Arylgruppen und Heteroarylgruppen mit F oder CN substituiert sein können;
i ist bei jedem Auftreten gleich oder verschieden 0 oder 1;
p ist gleich 2, 3 oder 4.

**3.** Optische Schaltvorrichtung nach Anspruch 1 oder 2, **dadurch gekennzeichnet, dass** die Verbindung (I) in einem Anteil von 0,01 Gew.-% bis 1 Gew.-% im flüssigkristallinen Material enthalten ist.

**4.** Optische Schaltvorrichtung nach einem oder mehreren der Ansprüche 1 bis 3, **dadurch gekennzeichnet, dass** das flüssigkristalline Material mindestens eine Verbindung enthält, welche mindestens eine Gruppe gewählt aus

den folgenden enthält:

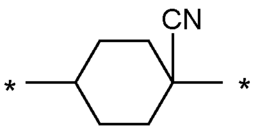,
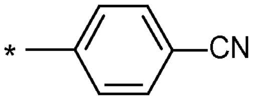,
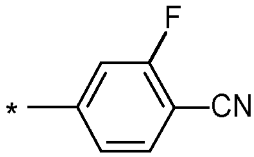,

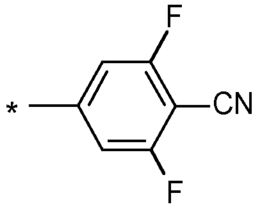,
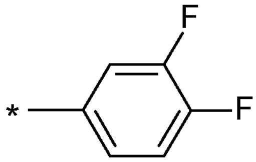,
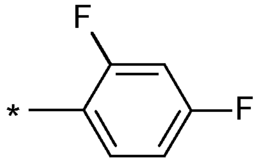,

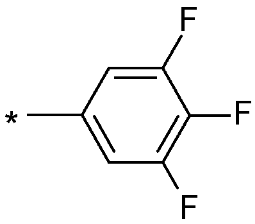,
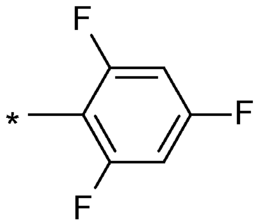,

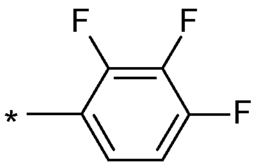,
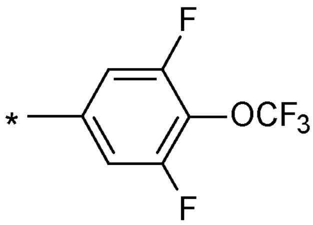,
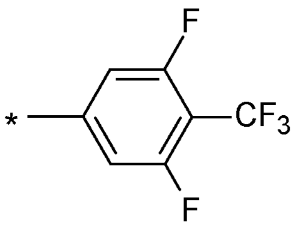,

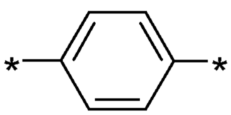,
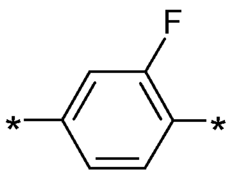,
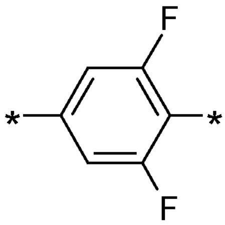,

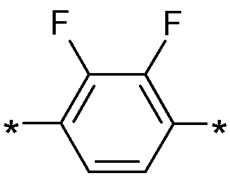,
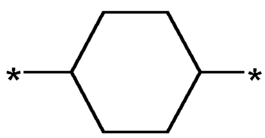,
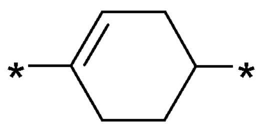,

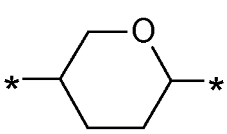,  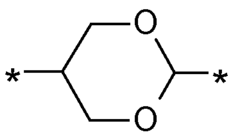,

wobei die mit * markierte Bindung die Bindung ist, mit der die Gruppe mit dem übrigen Teil der Verbindung verbunden ist.

5. Optische Schaltvorrichtung nach einem oder mehreren der Ansprüche 1 bis 4, **dadurch gekennzeichnet, dass** das flüssigkristalline Material zusätzlich eine Verbindung (II) enthält, die eine sterisch gehinderte Hydroxyphenyl-Gruppe enthält, wobei die Verbindung (II) eine Gruppe der Formel (2) enthält

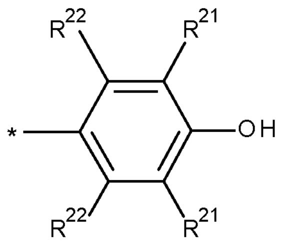

Formel (2),

wobei die mit * markierte Bindung die Bindung ist, mit der die Gruppe mit dem übrigen Teil der Verbindung verbunden ist, und
wobei $R^{21}$ bei jedem Auftreten gleich oder verschieden gewählt ist aus verzweigten Alkylgruppen mit 3 bis 12 C-Atomen, die mit einem oder mehreren Resten gewählt aus F, Cl und CN substituiert sein können;und
wobei $R^{22}$ bei jedem Auftreten gleich oder verschieden gewählt ist aus H und Alkylgruppen mit 1 bis 12 C-Atomen, die mit einem oder mehreren Resten gewählt aus F, Cl und CN substituiert sein können.

6. Optische Schaltvorrichtung nach einem oder mehreren der Ansprüche 1 bis 5, **dadurch gekennzeichnet, dass** die Verbindung (II) in einem Anteil von 0,01 Gew.-% bis 1 Gew.-% im flüssigkristallinen Material enthalten ist.

7. Optische Schaltvorrichtung nach einem oder mehreren der Ansprüche 1 bis 6, **dadurch gekennzeichnet, dass** der Farbstoff ein dichroitischer Farbstoff ist.

8. Optische Schaltvorrichtung nach einem oder mehreren der Ansprüche 1 bis 7, **dadurch gekennzeichnet, dass** das flüssigkristalline Material mindestens drei verschiedene Farbstoffe enthält.

9. Optische Schaltvorrichtung nach einem oder mehreren der Ansprüche 1 bis 8, **dadurch gekennzeichnet, dass** der Farbstoff gewählt ist aus Azoverbindungen, Anthrachinonen, Methinverbindungen, Azomethinverbindungen, Merocyaninverbindungen, Naphthochinonen, Tetrazinen, Rylenen, Benzothiadiazolen, Pyrromethenen und Diketopyrrolopyrrolen.

10. Optische Schaltvorrichtung nach einem oder mehreren der Ansprüche 1 bis 9, **dadurch gekennzeichnet, dass** sie die folgende Schichtabfolge enthält:

- Polarisationsschicht
- Substratschicht
- elektrisch leitfähige transparente Schicht
- Orientierungsschicht
- Schaltschicht, enthaltend das flüssigkristalline Material
- Orientierungsschicht
- elektrisch leitfähige transparente Schicht
- Substratschicht,

wobei die Polarisationsschicht hin zur Sonne gerichtet ist.

## Claims

1. Optical switching device for regulation of the passage of sunlight, containing a layer comprising a liquid-crystalline material, **characterised in that** the liquid-crystalline material comprises a dye and a compound (I) containing a sterically hindered group of the formula (1-1-1)

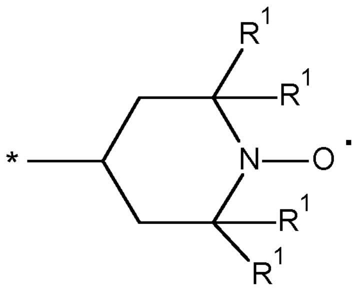

formula (1-1-1),

where the bond marked by * is the bond by means of which the group of the formula (1-1-1) is connected to the remainder of the compound, and
where $R^1$ is methyl.

2. Optical switching device according to Claim 1, **characterised in that** the compound (I) conforms to a formula (I)

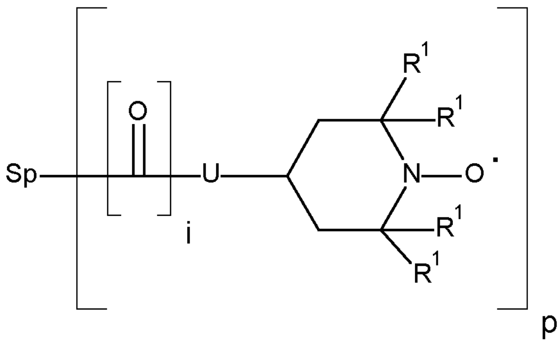

formula (I),

where the following applies to the variables occurring:

U is selected on each occurrence, identically or differently, from $-CH_2-$, -O-, -S- and -NH-;
Sp is selected from alkylene groups having 2 to 10 C atoms, which may in each case be substituted by one or more radicals $R^4$, alkenylene groups having 2 to 10 C atoms, which may in each case be substituted by one or more radicals $R^4$, alkynylene groups having 2 to 10 C atoms, which may in each case be substituted by one or more radicals $R^4$, aryl groups having 6 to 40 aromatic ring atoms, which may in each case be substituted by one or more radicals $R^4$, and heteroaryl groups having 5 to 40 aromatic ring atoms, which may in each case be substituted by one or more radicals $R^4$;
$R^1$ is as defined in Claim 1;
$R^4$ is selected on each occurrence, identically or differently, from H, D, F, CN, alkyl or alkoxy groups having 1 to 20 C atoms, alkenyl or alkynyl groups having 2 to 20 C atoms, aryl groups having 6 to 40 aromatic ring atoms and heteroaryl groups having 5 to 40 aromatic ring atoms; where two or more radicals $R^4$ may be linked to one another and may form a ring; and where the said alkyl, alkoxy, alkenyl and alkynyl groups, aryl groups and heteroaryl groups may be substituted by F or CN;
i is on each occurrence, identically or differently, 0 or 1;
p is equal to 2, 3 or 4.

**3.** Optical switching device according to Claim 1 or 2, **characterised in that** the compound (I) is present in the liquid-crystalline material in a proportion of 0.01% by weight to 1% by weight.

**4.** Optical switching device according to one or more of Claims 1 to 3, **characterised in that** the liquid-crystalline material comprises at least one compound which contains at least one group selected from the following:

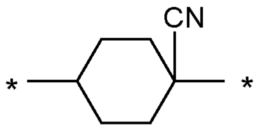 , 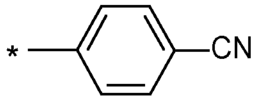 , 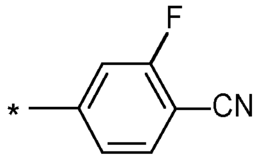 ,

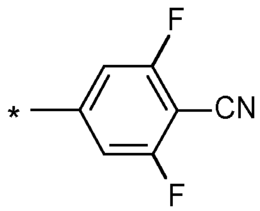 , 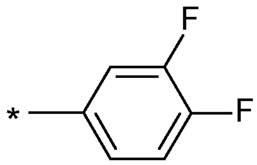 , 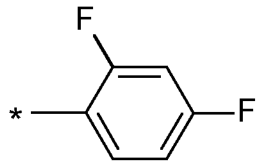 ,

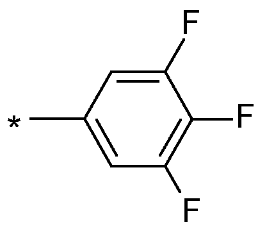 , 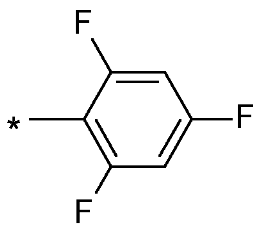 , 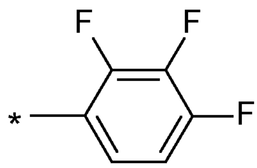 ,

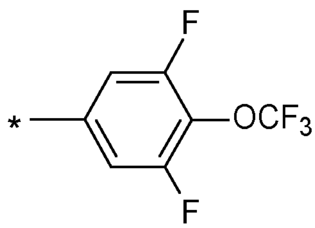 , 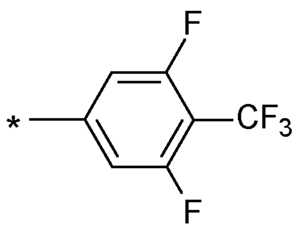 ,

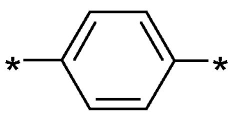 , 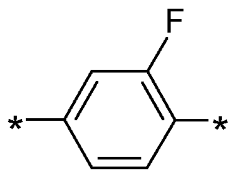 , 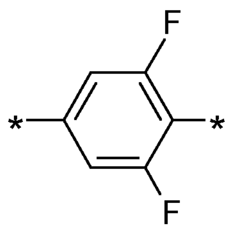 ,

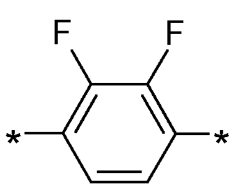 , 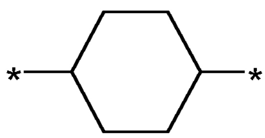 , 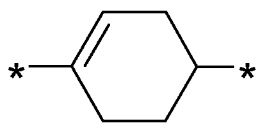 ,

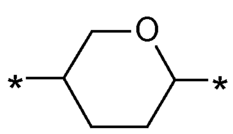 , 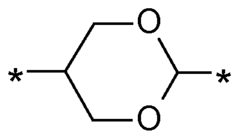 ,

where the bond marked by * is the bond by means of which the group is connected to the remainder of the compound.

5. Optical switching device according to one or more of Claims 1 to 4, **characterised in that** the liquid-crystalline material additionally comprises a compound (II) which contains a sterically hindered hydroxyphenyl group, where the compound (II) contains a group of the formula (2)

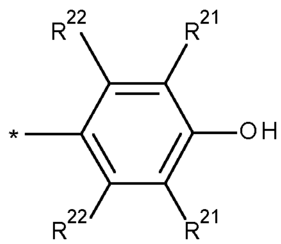

formula (2),

where the bond marked by * is the bond by means of which the group is connected to the remainder of the compound, and
where $R^{21}$ is selected on each occurrence, identically or differently, from branched alkyl groups having 3 to 12 C atoms, which may be substituted by one or more radicals selected from F, Cl and CN; and
where $R^{22}$ is selected on each occurrence, identically or differently, from H and alkyl groups having 1 to 12 C atoms, which may be substituted by one or more radicals selected from F, Cl and CN.

6. Optical switching device according to one or more of Claims 1 to 5, **characterised in that** the compound (II) is present in the liquid-crystalline material in a proportion of 0.01% by weight to 1% by weight.

7. Optical switching device according to one or more of Claims 1 to 6, **characterised in that** the dye is a dichroic dye.

8. Optical switching device according to one or more of Claims 1 to 7, **characterised in that** the liquid-crystalline material comprises at least three different dyes.

9. Optical switching device according to one or more of Claims 1 to 8, **characterised in that** the dye is selected from azo compounds, anthraquinones, methine compounds, azomethine compounds, merocyanine compounds, naphthoquinones, tetrazines, rylenes, benzothiadiazoles, pyrromethenes and diketopyrrolopyrroles.

10. Optical switching device according to one or more of Claims 1 to 9, **characterised in that** it comprises the following layer sequence:

- polarisation layer
- substrate layer
- electrically conductive transparent layer
- alignment layer
- switching layer comprising the liquid-crystalline material
- alignment layer
- electrically conductive transparent layer
- substrate layer,

where the polarisation layer is directed towards the sun.

## Revendications

**1.** Dispositif de commutation optique pour la régulation du passage de la lumière solaire, contenant une couche qui comprend un matériau cristallin liquide, **caractérisé en ce que** le matériau cristallin liquide comprend un colorant et un composé (I) qui contient un groupe stériquement encombré de la formule (1-1-1)

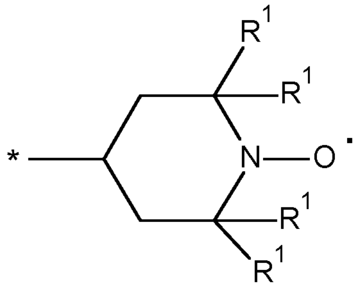

formule (1-1-1),

dans laquelle la liaison qui est repérée par * est la liaison au moyen de laquelle le groupe de la formule (1-1-1) est connecté au reste du composé, et
dans laquelle $R^1$ est méthyle.

**2.** Dispositif de commutation optique selon la revendication 1, **caractérisé en ce que** le composé (I) est conforme à une formule (I)

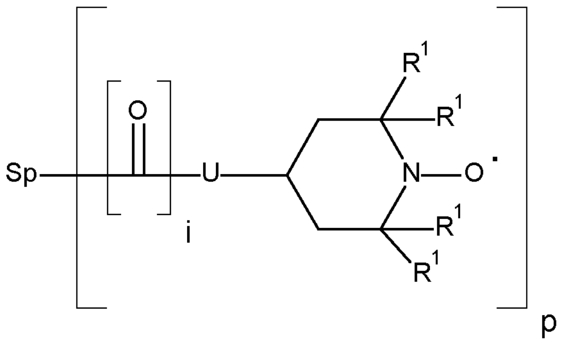

formule (I),

dans laquelle ce qui suit s'applique aux variables rencontrées :

U est sélectionné pour chaque occurrence, de manière identique ou différente, parmi $-CH_2-$, -O-, -S- et -NH- ;
Sp est sélectionné parmi les groupes alkylène qui comportent de 2 à 10 atomes de C, lesquels peuvent dans chaque cas être substitués par un radical ou par plusieurs radicaux $R^4$, les groupes alkénylène qui comportent de 2 à 10 atomes de C, lesquels peuvent dans chaque cas être substitués par un radical ou par plusieurs radicaux $R^4$, les groupes alkynylène qui comportent de 2 à 10 atomes de C, lesquels peuvent dans chaque cas être substitués par un radical ou par plusieurs radicaux $R^4$, les groupes aryle qui comportent de 6 à 40 atomes de cycle aromatique, lesquels peuvent dans chaque cas être substitués par un radical ou par plusieurs radicaux $R^4$, et les groupes hétéroaryle qui comportent de 5 à 40 atomes de cycle aromatique, lesquels peuvent dans chaque cas être substitués par un radical ou par plusieurs radicaux $R^4$ ;
$R^1$ est comme il a été défini selon la revendication 1 ;
$R^4$ est sélectionné pour chaque occurrence, de manière identique ou différente, parmi H, D, F, CN, les groupes alkyle ou alcoxy qui comportent de 1 à 20 atome(s) de C, les groupes alkényle ou alkynyle qui comportent de 2 à 20 atomes de C, les groupes aryle qui comportent de 6 à 40 atomes de cycle aromatique et les groupes hétéroaryle qui comportent de 5 à 40 atomes de cycle aromatique; où deux radicaux $R^4$ ou plus peuvent être liés l'un à l'autre ou les uns aux autres et peuvent former un cycle ; et où lesdits groupes alkyle, alcoxy, alkényle et alkynyle, lesdits groupes aryle et lesdits groupes hétéroaryle peuvent être substitués par F ou par CN ;
i est pour chaque occurrence, de manière identique ou différente, 0 ou 1 ;

p est égal à 2, 3 ou 4.

3. Dispositif de commutation optique selon la revendication 1 ou 2, **caractérisé en ce que** le composé (I) est présent dans le matériau cristallin liquide selon une proportion de 0,01 % en poids à 1 % en poids.

4. Dispositif de commutation optique selon une ou plusieurs des revendications 1 à 3, **caractérisé en ce que** le matériau cristallin liquide comprend au moins un composé qui contient au moins un groupe qui est sélectionné parmi les groupes qui suivent :

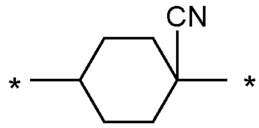 , 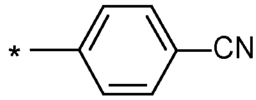 , 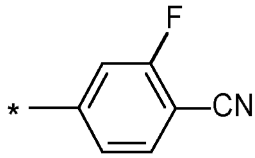 ,

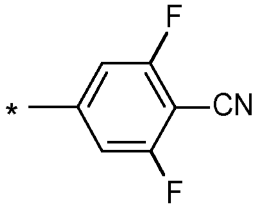 , 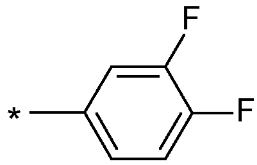 , 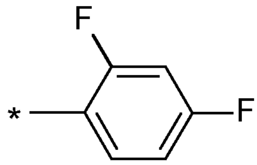 ,

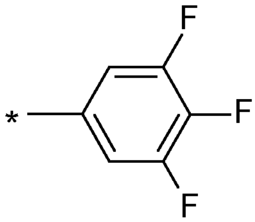 , 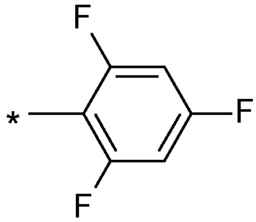 , 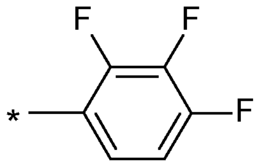 ,

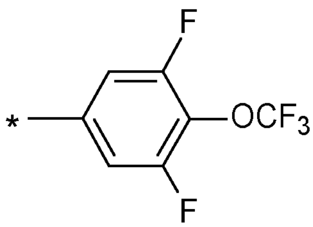 , 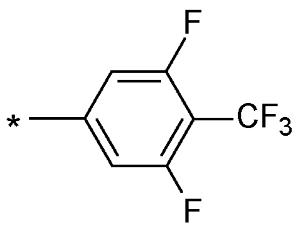 ,

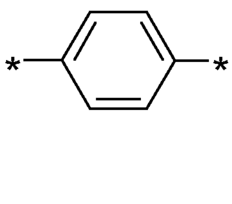 , 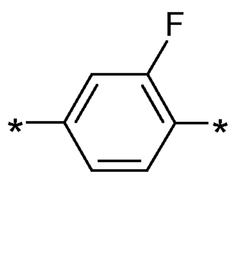 , 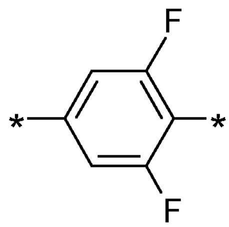 ,

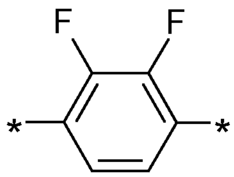 , 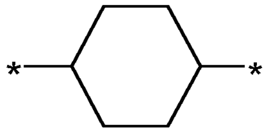 , 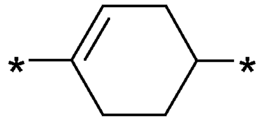 ,

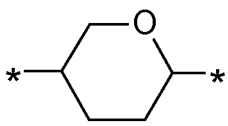 , 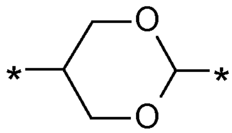 ,

dans lesquels la liaison qui est repérée par * est la liaison au moyen de laquelle le groupe est connecté au reste du composé.

5. Dispositif de commutation optique selon une ou plusieurs des revendications 1 à 4, **caractérisé en ce que** le matériau cristallin liquide comprend de façon additionnelle un composé (II) qui contient un groupe hydroxyphényle stériquement encombré, où le composé (II) contient un groupe de la formule (2)

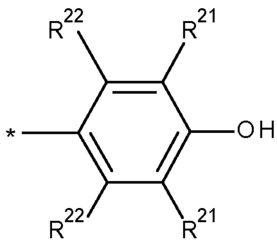

formule (2),

dans laquelle la liaison qui est repérée par * est la liaison au moyen de laquelle le groupe est connecté au reste du composé, et
dans laquelle $R^{21}$ est sélectionné pour chaque occurrence, de manière identique ou différente, parmi les groupes alkyle ramifiés qui comportent de 3 à 12 atomes de C, lesquels peuvent être substitués par un radical ou par plusieurs radicaux qui est/sont sélectionné(s) parmi F, Cl et CN ; et
dans laquelle $R^{22}$ est sélectionné pour chaque occurrence, de manière identique ou différente, parmi H et les groupes alkyle qui comportent de 1 à 12 atome(s) de C, lesquels peuvent être substitués par un radical ou par plusieurs radicaux qui est/sont sélectionné(s) parmi F, Cl et CN.

6. Dispositif de commutation optique selon une ou plusieurs des revendications 1 à 5, **caractérisé en ce que** le composé (II) est présent dans le matériau cristallin liquide selon une proportion de 0,01 % en poids à 1 % en poids.

7. Dispositif de commutation optique selon une ou plusieurs des revendications 1 à 6, **caractérisé en ce que** le colorant est un colorant dichroïque.

8. Dispositif de commutation optique selon une ou plusieurs des revendications 1 à 7, **caractérisé en ce que** le matériau cristallin liquide comprend au moins trois colorants différents.

9. Dispositif de commutation optique selon une ou plusieurs des revendications 1 à 8, **caractérisé en ce que** le colorant est sélectionné parmi les composés azo, les anthraquinones, les composés de méthine, les composés d'azométhine, les composés de mérocyanine, les naphtoquinones, les tétrazines, les rylènes, les benzothiadiazoles, les pyrrométhènes et les dicétopyrrolopyrroles.

10. Dispositif de commutation optique selon une ou plusieurs des revendications 1 à 9, **caractérisé en ce qu'**il comprend la séquence de couches qui suit :

- couche de polarisation
- couche de substrat
- couche transparente électriquement conductrice
- couche d'alignement
- couche de commutation comprenant le matériau cristallin liquide
- couche d'alignement
- couche transparente électriquement conductrice
- couche de substrat,

dans lequel la couche de polarisation est dirigée en direction du soleil.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009141295 A
- WO 2015090506 A1
- WO 2015154848 A
- WO 2014187529 A
- WO 2015090497 A
- WO 2014090373 A
- WO 2014180525 A


### In der Beschreibung aufgeführte Nicht-Patentliteratur


- **B. JELLE et al.** *Solar Energy Materials & Solar Cells,* 2012, 1-28
- **B. BAHADUR.** Liquid Crystals - Applications and Uses. World Scientific Publishing, 1992, vol. 3
- **M. RICHTER.** *Einführung in die Farbmetrik,* vol. 2608